(19) 

Europäisches
Patentamt
European
Patent Office
Office européen
des brevets

(11) **EP 4 598 181 A1**

(12) **EUROPEAN PATENT APPLICATION**
published in accordance with Art. 153(4) EPC

(43) Date of publication:
**06.08.2025 Bulletin 2025/32**

(21) Application number: **23870435.7**

(22) Date of filing: **18.09.2023**

(51) International Patent Classification (IPC):
***H04W 72/04*** (2023.01)        ***H04W 16/28*** (2009.01)

(52) Cooperative Patent Classification (CPC):
**H04W 16/28; H04W 72/04; H04W 72/0453**

(86) International application number:
**PCT/CN2023/119390**

(87) International publication number:
**WO 2024/067201 (04.04.2024 Gazette 2024/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **29.09.2022 CN 202211194424**

(71) Applicant: **Datang Mobile Communications
Equipment Co., Ltd.
Beijing 100085 (CN)**

(72) Inventors:
• LI, Yaomin
  **Beijing 100085 (CN)**
• WANG, Jiaqing
  **Beijing 100085 (CN)**
• YANG, Meiying
  **Beijing 100085 (CN)**
• LUO, Chen
  **Beijing 100085 (CN)**

(74) Representative: **Studio Torta S.p.A.**
**Via Viotti, 9**
**10121 Torino (IT)**

(54) **RESOURCE DETERMINATION METHOD AND APPARATUS**

(57)    Provided in the embodiments of the present disclosure are a resource determination method and apparatus. The resource determination method comprises: receiving first signaling; and on the basis of the first signaling, determining target switch states of a plurality of transmission resources.

```
┌─────────────────────────────────────────────────────────┐
│            Receiving a first signaling                   │──── 200
└─────────────────────────────────────────────────────────┘
                          │
                          ▼
┌─────────────────────────────────────────────────────────┐
│  Determining a target ON/OFF state of multiple           │──── 210
│  transmission resources based on the first signaling     │
└─────────────────────────────────────────────────────────┘
```

FIG. 2

EP 4 598 181 A1

**Description**

CROSS-REFERENCES TO RELATED APPLICATIONS

The present application claims priority to Chinese Patent Application No. 202211194424.7, filed on September 29, 2022, entitled "Resource Determination Method and Apparatus", which is hereby incorporated by reference in its entirety.

FIELD

The present application relates to the field of communication, and in particular, to methods and apparatuses for resource determination.

BACKGROUND

A coordinated multiple points transmission technology is an important technical means to improve edge coverage of a cell and provide more balanced quality of service in a serving area. In the related art, two transmission/reception points (TRPs) are associated on a bandwidth part (BWP) to serve same user equipment (UE). To support a higher transmission rate, a distributed massive multi input multi output (MIMO) technology may be used to deploy more TRPs. For example, 8 or 16 TRPs are deployed within a base station. No matter where the UE is located, numerous TRPs may provide robust services for the UE, but deploying more TRPs greatly increases energy consumption overhead at a base station side.

BRIEF SUMMARY

Embodiments of the present application provide methods and apparatuses for resource determination to solve a drawback in the related art that deploying more transmission/reception points (TRPs) greatly increases energy consumption overhead at a base station side, and to save energy consumption overhead at the base station side.

An embodiment of the present application provides a method for resource determination, performed by a first communication device, including:

receiving a first signaling; and

determining, based on the first signaling, a target ON/OFF state of multiple transmission resources.

In some embodiments, according to the method for resource determination, the transmission resource is a frequency domain transmission resource, or a resource associated with a frequency domain transmission resource; and
the transmission resource is associated with a first target TRP.

In some embodiments, according to the method for resource determination, the frequency domain transmission resource is a carrier.

In some embodiments, according to the method for resource determination, determining, based on the first signaling, the target ON/OFF state of the multiple transmission resources includes:
determining, based on the first signaling, a target ON/OFF state of multiple transmission resources associated with a first target TRP.

In some embodiments, according to the method for resource determination, determining, based on the first signaling, the target ON/OFF state of the multiple transmission resources includes:
determining, based on the first signaling, to switch an ON/OFF state of multiple transmission resources associated with a first target transmission/reception point (TRP) to the target ON/OFF state in case that the first target TRP performs ON/OFF state switching.

In some embodiments, according to the method for resource determination, determining, based on the first signaling, the target ON/OFF state of the multiple transmission resources includes:
determining, based on the first signaling, to switch an ON/OFF state of a first transmission resource set among the multiple transmission resources to the target ON/OFF state and an ON/OFF state of a second transmission resource set among the multiple transmission resources to a first ON/OFF state, in case that a first target transmission/reception point (TRP) performs ON/OFF state switching, where the first ON/OFF state is different from the target ON/OFF state.

In some embodiments, according to the method for resource determination, the multiple transmission resources are divided into multiple transmission resource groups; and
determining, based on the first signaling, the target ON/OFF state of the multiple transmission resources includes:
determining, based on the first signaling, a target ON/OFF state corresponding to each of the multiple transmission resource groups.

In some embodiments, according to the method for resource determination, the method further includes:

determining, based on the first signaling, a target resource set and/or a target ON/OFF state of a first target TRP;

where the target resource set includes a reference signal resource set associated with the target ON/OFF state of the first target TRP.

In some embodiments, according to the method for resource determination, the target resource set is associated with a target bandwidth part (BWP);
where the target BWP is used to indicate:

performing resource switching based on the target resource set on the target BWP in case that the target BWP is an active BWP; and

performing resource switching based on the target resource set on the target BWP after switching to the target BWP in case that the target BWP is not an active BWP.

In some embodiments, according to the method for resource determination, determining, based on the first signaling, the target resource set and/or the target ON/OFF state of the first target TRP includes one or more of the following:

in case that the first signaling directly indicates the target ON/OFF state of the first target TRP, determining a reference signal resource set associated with the target ON/OFF state of the first target TRP as the target resource set; or

in case that the first signaling directly indicates the target resource set, determining the target ON/OFF state of the first target TRP associated with the target resource set based on the target resource set; or

in case that the first signaling indirectly indicates the target ON/OFF state of the first target TRP through first information, determining, based on the first signaling, the target ON/OFF state of the first target TRP corresponding to the first information, and determining, based on a first target TRP indicated by the target ON/OFF state of the first target TRP, a reference signal resource set associated with the target ON/OFF state of the first target TRP as the target resource set; or

in case that the first signaling indirectly indicates the target resource set through second information, determining, based on the first signaling, the target resource set corresponding to the second information, and determining, based on the target resource set, the target ON/OFF state of the first target TRP associated with the target resource set.

In some embodiments, according to the method for resource determination, the first signaling contains a first indicator field and/or a second indicator field; where the first signaling meets one or more of the following:

the first indicator field being used to indicate the target ON/OFF state of the first target TRP;

the first indicator field being used to indicate the target resource set;

the first indicator field being used to indicate the multiple transmission resources;

the second indicator field being used to indicate the target ON/OFF state of the first target TRP;

the second indicator field being used to indicate the multiple transmission resources; or

the second indicator field being used to indicate the target resource set.

In some embodiments, according to the method for resource determination, the first signaling contains a bitmap and/or a codepoint; where the first signaling meets one or more of the following:

the bitmap being used to indicate the target ON/OFF state of the first target TRP;

the bitmap being used to indicate the target resource set;

the codepoint being used to indicate the target ON/-OFF state of the first target TRP;

the codepoint being used to indicate the target resource set;

the bitmap being used to indicate an activate state corresponding to each of one or more reference signal resource sets;

the codepoint being used to indicate an activate state corresponding to each of one or more reference signal resource sets;

the bitmap being used to indicate the target ON/OFF state of the multiple transmission resources; or

the codepoint being used to indicate the target ON/-OFF state of the multiple transmission resources.

In some embodiments, according to the method for resource determination, the first signaling contains N reference signal resource sets, different reference signal resource sets correspond to ON/OFF states of different TRPs, and the N reference signal resource sets include the target resource set, where N is a positive integer greater than or equal to 1.
In some embodiments, according to the method for resource determination, the first information or the second information includes one or more pieces of the following:

quasi co-location (QCL) information;

a transmission configuration indication (TCI) state;

or

a signaling transmission location of the first signaling.

In some embodiments, according to the method for resource determination, determining, based on the first signaling, the target resource set and/or the target ON/OFF state of the first target TRP includes:

determining, based on the first signaling, a target monitoring configuration, where the target monitoring configuration includes an associated parameter configuration for monitoring a physical downlink control channel (PDCCH); and

determining, based on the target monitoring configuration, the target ON/OFF state of the first target TRP corresponding to the target monitoring configuration, and/or the target resource set corresponding to the target monitoring configuration.

In some embodiments, according to the method for resource determination, the target monitoring configuration contains: a given search space set group (SSSG) on a control resource set (CORESET) of the first target TRP; and/or
the target monitoring configuration contains: a given PDCCH skipping step value.

In some embodiments, according to the method for resource determination, the method further includes: transmitting hybrid automatic repeat request (HARQ) feedback information of the first signaling.

In some embodiments, according to the method for resource determination, the method further includes: determining, based on the first signaling, one or more of the following:

a target tracking reference signal (TRS) measurement resource set;

triggering a first target TRP to initiate a TRS measurement;

triggering a second target TRP to initiate a TRS measurement, where a carrier corresponding to the second target TRP supports a multi-transmission/reception point (MTRP) transmission;

triggering a third target TRP to initiate a TRS measurement, where a pre-configured aperiodic TRS on a carrier corresponding to the third target TRP is enabled;

triggering a TRP on a second target carrier to initiate a TRS measurement, where a pre-configured aperiodic TRS on the second target carrier is enabled; or

triggering a predefined event.

In some embodiments, according to the method for resource determination, the first signaling includes one or more of the following:
a group-common control physical downlink control channel (PDCCH), a non-scheduling physical downlink control channel (PDCCH), a scheduling physical downlink control channel (PDCCH), a media access control-control element (MAC-CE), or a specific sequence.

In some embodiments, according to the method for resource determination, the group-common control PDCCH includes one or more of the following:
a user equipment (UE)-specific PDCCH, a UE group-specific PDCCH, or a cell-specific PDCCH.

An embodiment of the present application provides a method for resource determination, performed by a first communication device, including:
transmitting a first signaling, where the first signaling is used to indicate a target ON/OFF state of multiple transmission resources.

In some embodiments, according to the method for resource determination, the transmission resource is a frequency domain transmission resource, or a resource associated with a frequency domain transmission resource; and
the transmission resource is associated with a first target transmission/reception point (TRP).

In some embodiments, according to the method for resource determination, the frequency domain transmission resource is a carrier.

In some embodiments, according to the method for resource determination, the first signaling is used to indicate a target ON/OFF state of multiple transmission resources associated with a first target transmission/reception point (TRP).

In some embodiments, according to the method for resource determination, the first signaling is used to indicate switching an ON/OFF state of multiple transmission resources associated with a first target TRP to the target ON/OFF state in case that the first target TRP performs ON/OFF state switching.

In some embodiments, according to the method for resource determination, the first signaling is used to indicate switching an ON/OFF state of a first transmission resource set among the multiple transmission resources to the target ON/OFF state and an ON/OFF state of a second transmission resource set among the multiple transmission resources to a first ON/OFF state, in case that a first target TRP performs ON/OFF state switching, where the first ON/OFF state is different from the target ON/OFF state.

In some embodiments, according to the method for resource determination, the method further includes:

dividing the multiple transmission resources into multiple transmission resource groups;

the first signaling being used to indicate a target ON/OFF state corresponding to each of the multiple transmission resource groups.

In some embodiments, according to the method for resource determination, the first signaling is used to indicate a target resource set and/or a target ON/OFF state of the first target TRP;
where the target resource set includes a reference signal resource set associated with the target ON/OFF state of the first target TRP.

In some embodiments, according to the method for resource determination, the target resource set is associated with a target bandwidth part (BWP).

In some embodiments, according to the method for resource determination, the first signaling is used for one or more of the following:

directly indicating the target ON/OFF state of the first target TRP, a reference signal resource set associated with the target ON/OFF state of the first target TRP being the target resource set; or

directly indicating the target resource set, and an ON/OFF state of a TRP associated with the target resource set being the target ON/OFF state of the first target TRP; or

indirectly indicating the target ON/OFF state of the first target TRP through first information, the first information corresponding to the target ON/OFF state of the first target TRP, a reference signal resource set associated with the target ON/OFF state of the first target TRP being the target resource set; or

indirectly indicating the target resource set through second information, the second information corresponding to the target resource set, an ON/OFF state of a TRP associated with the target resource set being the target ON/OFF state of the first target TRP.

In some embodiments, according to the method for resource determination, the first signaling contains a first indicator field and/or a second indicator field;
where the first signaling meets one or more of the following:

the first indicator field being used to indicate the target ON/OFF state of the first target TRP;

the first indicator field being used to indicate the target resource set;

the first indicator field being used to indicate the target ON/OFF state of the multiple transmission resources;

the second indicator field being used to indicate the target ON/OFF state of the first target TRP;

the second indicator field being used to indicate the target ON/OFF state of the multiple transmission resources; or

the second indicator field being used to indicate the target resource set.

In some embodiments, according to the method for resource determination, the first signaling contains a bitmap and/or a codepoint;
where the first signaling meets one or more of the following:

the bitmap being used to indicate the target ON/OFF state of the first target TRP;

the bitmap being used to indicate the target resource set;

the codepoint being used to indicate the target ON/OFF state of the first target TRP;

the codepoint being used to indicate the target resource set;

the bitmap being used to indicate an activate state corresponding to each of one or more reference signal resource sets;

the codepoint being used to indicate an activate state corresponding to each of one or more reference signal resource sets;

the bitmap being used to indicate the target ON/OFF state of the multiple transmission resources; or

the codepoint being used to indicate the target ON/OFF state of the multiple transmission resources.

In some embodiments, according to the method for resource determination, the first signaling is used to indicate N reference signal resource sets, different reference signal resource sets correspond to ON/OFF states of different TRPs, and the N reference signal resource sets include the target resource set, where N is a positive integer greater than or equal to 1.

In some embodiments, according to the method for resource determination, the first information or the second information includes one or more pieces of the following:

quasi co-location (QCL) information;

a transmission configuration indication (TCI) state; or

5

a signaling transmission location of the first signaling.

In some embodiments, according to the method for resource determination, the first signaling includes:
a target monitoring configuration corresponding to a target ON/OFF state of a first target TRP and/or corresponding to a target resource set.

In some embodiments, according to the method for resource determination, the target monitoring configuration contains: a given search space set group (SSSG) on a control resource set (CORESET) of the first target TRP; and/or
the target monitoring configuration contains: a given PDCCH skipping step value.

In some embodiments, according to the method for resource determination, the method further includes:

retransmitting the first signaling in case that no acknowledge (ACK) information is received at a first location,

where the first location includes a feedback location of hybrid automatic repeat request (HARQ) feedback information of the first signaling.

In some embodiments, according to the method for resource determination, the first signaling is used for further indicating one or more of the following:

a target tracking reference signal (TRS) measurement resource set;

triggering a first target TRP to initiate a TRS measurement;

triggering a second target TRP to initiate a TRS measurement, where a carrier corresponding to the second target TRP supports a multi-transmission/reception point (MTRP) transmission;

triggering a third target TRP to initiate a TRS measurement, where a pre-configured aperiodic TRS on a carrier corresponding to the third target TRP is enabled;

triggering a TRP on a second target carrier to initiate a TRS measurement, where a pre-configured aperiodic TRS on the second target carrier is enabled; or

triggering a predefined event.

In some embodiments, according to the method for resource determination, the first signaling includes one or more of the following:
group-common control physical downlink control channel (PDCCH), non-scheduling physical downlink control channel (PDCCH), scheduling PDCCH, media access control-control element (MAC-CE), or a specific sequence.

In some embodiments, according to the method for resource determination, the group-common control PDCCH includes one or more of the following:
a user equipment (UE)-specific PDCCH, a UE group-specific PDCCH, or a cell-specific PDCCH.

An embodiment of the present application further provides a first communication device, including a memory, a transceiver, and a processor,
the memory is used for storing a computer program; the transceiver is used for transmitting and receiving data under control of the processor; and the processor is used for reading the computer program stored in the memory and performing steps of the method for resource determination described above.

An embodiment of the present application further provides a first communication device, including a memory, a transceiver, and a processor,
the memory is used for storing a computer program; the transceiver is used for transmitting and receiving data under control of the processor; and the processor is used for reading the computer program stored in the memory and performing steps of the method for resource determination described above.

An embodiment of the present application further provides an apparatus for resource determination, including:

a first receiving module, used for receiving a first signaling; and

a first determining module, used for determining, based on the first signaling, a target ON/OFF state of multiple transmission resources.

An embodiment of the present application further provides an apparatus for resource determination, including:
a first transmitting module, used for transmitting a first signaling, where the first signaling is used to indicate a target ON/OFF state of multiple transmission resources.

An embodiment of the present application further provides a processor-readable storage medium storing a computer program, where the computer program causes a processor to perform steps of the method for resource determination described above.

An embodiment of the present application further provides a processor-readable storage medium storing a computer program, where the computer program causes a processor to perform steps of the method for resource determination described above.

In the methods and apparatuses for resource determination provided in the embodiments of the present application, the target ON/OFF state of multiple transmission resources is determined to be ON or OFF through being indicated by the first signaling transmitted from a network side device, which reduces the energy consumption overhead of the network and terminal in the communication system, while ensuring the high reliability and throughput.

BRIEF DESCRIPTION OF THE DRAWINGS

To illustrate solutions in the embodiments of the present application or the related art more clearly, the drawings need to be used in the descriptions of the embodiments or the related art will be briefly described below. The drawings in the following description are some embodiments of the present application, and other drawings may be obtained based on these drawings without any creative work for those skilled in the related art.

FIG. 1 is a schematic topological diagram of a multi-transmission/reception points (TRPs) transmission network according to the related art;

FIG. 2 is a first schematic flowchart of a method for resource determination according to an embodiment of the present application;

FIG. 3 is a second schematic flowchart of a method for resource determination according to an embodiment of the present application;

FIG. 4 is a schematic structural diagram of a second communication device according to an embodiment of the present application.

FIG. 5 is a schematic structural diagram of a first communication device according to an embodiment of the present application.

FIG. 6 is a first schematic structural diagram of an apparatus for resource determination according to an embodiment of the present application; and

FIG. 7 is a second schematic structural diagram of an apparatus for resource determination according to an embodiment of the present application.

DETAILED DESCRIPTION

In the embodiments of the present application, the term "and/or" describes a related relationship of associated objects, and indicates that there may be three kinds of relationships. For example, A and/or B may represent that A exists alone, A and B exist simultaneously, and B exists alone. Character "/" generally indicates that associated objects before and after are in an "or" relationship.

In the embodiments of the present application, the term "multiple" refers to two or more than two, and other quantifiers are similar.

The solutions in the embodiments of the present application are clearly and completely described below with reference to the accompanying drawings in the embodiments of the present application. These embodiments are only a part of the embodiments of the present application, and not all of the embodiments. All other embodiments obtained by those skilled in the art based on the embodiments of the present application without any creative work belong to the scope of the present application.

Embodiments of the present application provide methods and apparatuses for resource determination to reduce energy consumption overhead of a network and a terminal in a communication system.

The methods and the apparatuses are based on the same disclosed concept, the implementation of the devices and the methods may be referred to each other d since the principles of the methods and the apparatuses are similar, and details are not be repeated herein.

The solutions provided by the embodiments of the present application may be applicable to various systems, especially a 5G system. For example, applicable systems may be a global system of mobile communication (GSM) system, a code division multiple access (CDMA) system, a wideband code division multiple access (WCDMA), general packet radio service (GPRS) system, a long term evolution (LTE) system, a LTE frequency division duplex (FDD) system, a LTE time division duplex (TDD) system, a long term evolution advanced (LTE-A) system, a universal mobile telecommunication system (UMTS), a worldwide interoperability for microwave access (WiMAX) system, a 5G New Radio (NR) system, etc. These various systems include a terminal device and a network device. The system may also include a core network part, such as an evolved packet system (EPS), a 5G system (5GS), and the like.

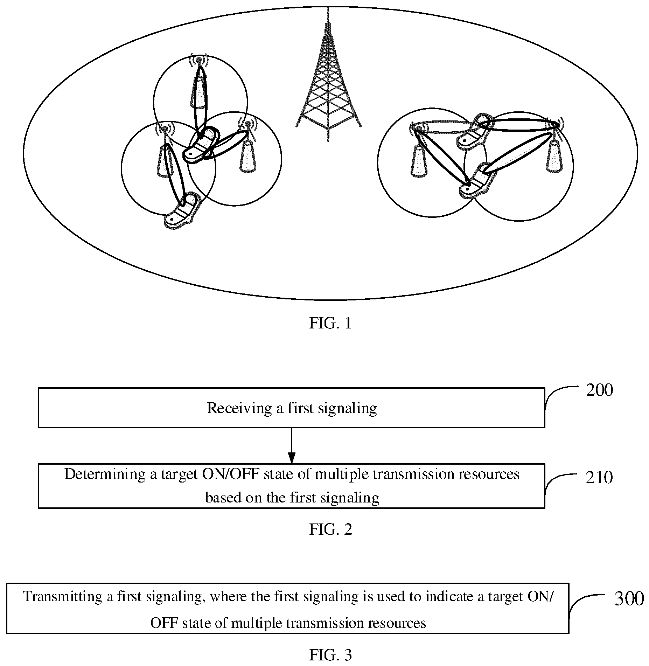

FIG. 1 is a schematic topological diagram of a multi-transmission/reception points (TRPs) transmission network according to the related art. As shown in FIG. 1, in case of deploying more TRPs within a base station, no matter where the UE is located, numerous TRPs may provide robust services for a user equipment (UE), but deploying more TRPs greatly increases energy consumption overhead at a base station side. In case of low system load or good channel conditions, selecting one or part of optimal TRP/link to serve the UE may ensure reliable transmission. At this time, turning off another TRPs may greatly save the energy consumption overhead of the base station. In case that a turned-OFF TRP is needed to be turned on again to ensure reliable transmission or system throughput, a dormant TRP may be awakened. This solution provides a design scheme for dynamically indicating a signaling for ON/OFF of a TRP associated with a carrier for multi-TRP transmission in a carrier aggregation (CA) scenario, which further reduces the energy consumption overhead of the network and terminal in the system while ensuring high reliability and throughput.

In the related art, two transmission/reception points (TRPs) are associated on a bandwidth part (BWP) to serve a UE. The multi-TRP transmission scenarios are divided into multiple-downlink control information (M-DCI) based physical downlink shared channel (PDSCH) transmission, single-downlink control information (S-DCI) based PDSCH transmission, and ultra-reliable and low latency communications (URLLC) enhancement with MTRP/panel.

(1) M-DCI: each PDSCH is transmitted through only one TRP, and two TRPs independently schedule PDSCHs from two TRPs. A network side device uses radio resource control (RRC) to configure control resource sets (CORESETs) corresponding to two types pf Coresetpoolindex (0 and 1) for a UE supporting M-DCI transmission. Multi-TRPs transmit their respective control information in CORESETs corresponding to different Coresetpoolindex. Correspondingly, the UE needs to perform blind detection on DCI in the CORESETs corresponding to the two types of Coresetpoolindex.

(2) S-DCI: a PDSCH is scheduled through single physical downlink control channel (PDCCH), where each layer of the PDSCH is mapped to a TRP/panel. Two different data streams of the PDSCH are simultaneously transmitted from two TRPs, occupying the same time-frequency resources, or is transmitted by selecting one TRP from two TRPs.

(3) URLLC scenario enhancement: multi-TRP (MTRP) is applied in PDSCH repetition, where two TRPs transmit two identical PDSCHs that are time-division/frequency division multiplexed. These two PDSCHs are scheduled by a downlink DCI, where a codepoint in a transmission configuration indication (TCI) indicator field in the DCI correspond to two TCI states, which correspond to two TRPs respectively.

In the related art, UE may be served by multiple TRPs simultaneously, which ensures high reliability transmission but results in significant energy consumption overhead at the base station side. As the service volume increases and reliability requirements are improved, a quantity of TRPs tends to increase, a quantity of CAs tends to increase, and the energy consumption overhead at the base station side also increases.

For an MTRP scenario, single TRP (STRP) or MTRP transmission may be performed on different common carriers (CCs)/BWPs. Therefore, in case of STRP or MTRP transmission on different CCs, dynamic ON/OFF of the TRP associated with a carrier and indicating the UE to update some behaviors may reduce the energy consumption of both the UE and the base station. In the related art, ON/OFF indication of the TRP, such as TCI state indication, cannot control UE update behavior: performing long-periodic measurement on reference signal/no measurement/skipping PDCCH monitoring. The secondary cell (Scell) dormancy indication in the related art is to directly turn off the entire carrier, which cannot partially turn on/off TRP associated with the carrier.

Embodiments of the present application provide methods and apparatuses for resource determination, providing a design for dynamically indicating a signaling for dynamic ON/OFF of TRP for multi-TRP transmission in a carrier aggregation (CA) scenario, which may simultaneously save energy consumption of both a network side and a terminal side.

FIG. 2 is a first schematic flowchart of a method for resource determination according to an embodiment of the present application. The method for resource determination is performed by a first communication device, such as a user equipment (UE). As shown in FIG. 2, the method includes:

step 200: receiving a first signaling; and

step 210: determining a target ON/OFF state of multiple transmission resources based on the first signaling.

In some embodiments, the first communication device may be a terminal.

In some embodiments, the first signaling may be dynamic signaling.

In some embodiments, the first signaling may be transmitted from a network side device to the terminal.

In some embodiments, the first signaling may be a higher layer signaling received by the terminal.

In some embodiments, the first signaling may be a PDCCH signaling.

In some embodiments, the first signaling may be used to indicate a target ON/OFF state of multiple transmission resources.

For example, the first signaling may be used to indicate turned-off (OFF) of multiple transmission resources.

For example, the first signaling may be used to indicate turned-on (ON) of multiple transmission resources.

In the method for resource determination provided in the embodiments of the present application, a target ON/OFF state of multiple transmission resources is determined to be ON or OFF through being indicated by the first signaling transmitted from a network side device, which reduces the energy consumption overhead of the network and terminal in the communication system, while ensuring the high reliability and throughput.

In some embodiments, the transmission resource is a frequency domain transmission resource, or a resource associated with a frequency domain transmission resource; and

the transmission resource is associated with a first target transmission/reception point (TRP).

In some embodiments, the transmission resources may be frequency domain transmission resources.

In some embodiments, the first signaling may be used to indicate a target ON/OFF state of multiple frequency domain transmission resources.

For example, the first signaling may be used to indicate turned-off (OFF) of multiple frequency domain transmission resources.

For example, the first signaling may be used to indicate turned-on (ON) of multiple frequency domain transmission resources.

In some embodiments, the first signaling may be used to indicate a target ON/OFF state of multiple frequency domain transmission resources associated with the first target TRP.

For example, the first signaling may be used to indicate that all or part of the frequency domain transmission resources associated with the first target TRP are turned off (OFF).

For example, the first signaling may be used to indicate that all or part of the frequency domain transmission resources associated with the first target TRP are turned on (ON).

In some embodiments, the frequency domain transmission resource is a carrier.

In some embodiments, the first signaling may be used to indicate a target ON/OFF state of multiple carriers associated with the first target TRP.

For example, the first signaling may be used to indicate that all or part of the carriers associated with the first target TRP are turned off (OFF).

For example, the first signaling may be used to indicate that all or part of the carriers associated with the first target TRP are turned on (ON).

In some embodiments, determining, based on the first signaling, the target ON/OFF state of the multiple transmission resources includes:

determining, based on the first signaling, a target ON/OFF state of multiple transmission resources associated with a first target transmission/reception point (TRP).

For example, all carriers associated with the first target TRP may be triggered/indicated to be turned on/off (ON/OFF) simultaneously through the first signaling (e.g., 1 bit is used to indicate that one TRP associated with multiple carriers performs ON/OFF operations).

In some embodiments, determining, based on the first signaling, the target ON/OFF state of the multiple transmission resources includes:

determining, based on the first signaling, to switch an ON/OFF state of multiple transmission resources associated with a first target transmission/reception point (TRP) to the target ON/OFF state in case that the first target TRP performs ON/OFF state switching.

For example, the first target TRP may be triggered/indicated through the first signaling to perform an OFF operation, where all carriers associated with the first target TRP are simultaneously turned off (OFF).

For example, the first target TRP may be triggered/indicated through the first signaling to perform a ON operation, where all carriers associated with the first target TRP are simultaneously turned on (ON).

For example, the first target TRP may be triggered/indicated through the first signaling to perform an OFF operation, where all carriers associated with the first target TRP are simultaneously turned on (ON).

For example, the first target TRP may be triggered/indicated through the first signaling to perform a ON operation, where all carriers associated with the first target TRP are simultaneously turned off (OFF).

For example, the first target TRP may be triggered/indicated through the first signaling to perform ON/OFF state switching (which may switch from ON to OFF, or from OFF to ON), and ON/OFF state switching may be simultaneously performed on all carriers associated with the first target TRP may (which may be switched from ON to OFF, or from OFF to ON).

In some embodiments, in case that the first target TRP is triggered/indicated through the first signaling to perform a ON operation, among the multiple carriers associated with the first target TRP, a first carrier set performs a ON operation, and a second carrier set performs an OFF operation.

In some embodiments, determining, based on the first signaling, the target ON/OFF state of the multiple transmission resources includes:

determining, based on the first signaling, to switch an ON/OFF state of a first transmission resource set among the multiple transmission resources to the target ON/OFF state and an ON/OFF state of a second transmission resource set among the multiple transmission resources to a first ON/OFF state, in case that a first target transmission/reception point (TRP) performs ON/OFF state switching, where the first ON/OFF state is different from the target ON/OFF state.

For example, in case that the first target TRP is triggered/indicated through the first signaling to perform an ON/OFF operation, among the multiple carriers associated with the first target TRP, a first carrier set performs a ON operation, and a second carrier set performs an OFF operation.

For example, in case that the first target TRP is triggered/indicated through the first signaling to perform a ON operation or an OFF operation, among the multiple carriers associated with the first target TRP, a first carrier set performs an OFF operation, and a second carrier set performs a ON operation.

For example, in case that the first target TRP is triggered/indicated through the first signaling to perform an ON/OFF operation, among the multiple carriers associated with the first target TRP, a first carrier set performs an OFF operation or a ON operation, and a second carrier set performs a ON operation or an OFF operation, where a target ON/OFF state switched by the first carrier set is different from a target ON/OFF state switched by the second carrier set.

In some embodiments, the multiple transmission resources are divided into multiple transmission resource groups; and

determining, based on the first signaling, the target ON/OFF state of the multiple transmission resources includes:

determining, based on the first signaling, a target ON/OFF state corresponding to each of the multiple transmission resource groups.

In some embodiments, a network side device (such as a base station) may divide multiple transmission resources into multiple transmission resource groups.

In some embodiments, the first signaling may be used to indicate a target ON/OFF state corresponding to each of the multiple transmission resource groups.

In some embodiments, after receiving the first signaling, the UE may determine a target ON/OFF state corresponding to each of the multiple transmission resource groups.

In some embodiments, the first signaling may include multiple DCI bits or codepoints in case of indicating the target ON/OFF state corresponding to each of the multiple transmission resource groups, where each group corresponds to one DCI bit or one codepoint for indicating the target ON/OFF state of the transmission resource group.

For example, the network side device (such as a base station) may divide multiple carriers into at least one group, and each group corresponds to one DCI bit or one codepoint. The carriers within each group correspond to the same ON/OFF information. The base station may configure position information of ON/OFF indication information in DCI and/or corresponding codepoint information for each carrier group using a higher layer signaling; the UE may receive the position information and/or corresponding codepoint information in the DCI corresponding to each carrier group configured by higher layer signaling, and determine the ON/OFF behavior of the corresponding carrier based on the above indication information.

In the embodiments of the present application, multiple transmission resources are divided into multiple transmission resource groups, each transmission resource group includes at least one transmission resource, to indicate the granularity of the transmission resource group to reduce indication overhead, and increase indication flexibility.

In some embodiments, the method further includes:

determining, based on the first signaling, a target resource set and/or a target ON/OFF state of a first target transmission/reception point (TRP);

where the target resource set includes a reference signal resource set associated with the target ON/OFF state of the first target TRP.

In some embodiments, the network side device may transmit a first signaling (which may be a dynamic signaling) to the UE, for indicating the target ON/OFF state of the first target TRP and/or target resource set, and triggering the network side device and UE to perform reference signal resource set switching (which may be referred to as resource handover) and/or triggering a predefined event.

In some embodiments, the target resource set may be indicated by resource dynamic indication information.

In some embodiments, the first target TRP may be a TRP or a group of TRPs.

In some embodiments, the target resource set may include a reference signal resource set or a group of reference signal resource sets.

In some embodiments, M reference signal resource sets (M is greater than 1) may be preset, and each reference signal resource set may include one or more of the following: a reference signal configuration information set, a broadcast signal configuration information set, or associating with one or a group of CORESET configuration information.

In some embodiments, each reference signal resource set may be associated with an ON/OFF state of a TRP.

In some embodiments, the target ON/OFF state of the first target TRP may be a parameter associated with a carrier corresponding to the first target TRP.

In some embodiments, a parameter indicated by the first signaling (such as a parameter/a group of parameters indicated by the first signaling, or a parameter/a group of parameters associated with a carrier indicated by the first signaling, etc.) may refer to the target ON/OFF state of the first target TRP and/or the target resource set. The parameter state change may refer to turned-off or turned-on of the first target TRP indicated by the target ON/OFF state of the first target TRP or the reference signal resource set switching is required to switch to the target resource set. Parameter being disabled may refer to turned-off of the first target TRP indicated by the target ON/OFF state of the first target TRP or resource switching is required to switch to a target resource set corresponding to the OFF state of the first target TRP. Subsequent similar descriptions also refer to this principle and details are not be repeated herein.

In some embodiments, the target ON/OFF state of the first target TRP may be indicated by an index of the first target TRP.

In some embodiments, the target ON/OFF state of the first target TRP may be indicated by a unified transmission configuration indication (TCI) state corresponding to the first target TRP.

In some embodiments, the target ON/OFF state of the first target TRP may be indicated by associated information of the carrier corresponding to the first target TRP.

In some embodiments, the first signaling indicating the target ON/OFF state of the first target TRP may represent that the first target TRP needs to be switched to the target ON/OFF state. For example, the first target TRP is switched from ON to OFF, or from OFF to ON.

In some embodiments, in case that the first target TRP needs to be switched to the target ON/OFF state, the first signaling may indicate a target resource set associated with the target ON/OFF state of the first target TRP to allow the UE to perform resource switching.

In some embodiments, reference signal resource sets corresponding to the different ON/OFF states of each TRP may be pre-set.

For example, an ON state of TRP1 corresponds to reference signal resource set a1, and an OFF state of TRP1 corresponds to reference signal resource set a2; an ON state of TRP2 corresponds to reference signal resource set b1, and an OFF state of TRP2 corresponds to reference signal resource set b2; an ON state of TRP3 corresponds to reference signal resource set c1, and an OFF state of TRP3 corresponds to reference signal resource set c2, and so on. If TRP3 needs to be turned off, the network side device may perform one or more of the following operations:

indicating TRP3 through the first signaling;

indicating a carrier associated with TRP3 through the first signaling;

indicating a target ON/OFF state of a carrier associated with TRP3 is ON or OFF through the first signaling;

indicating a target ON/OFF state of TRP3 is OFF through the first signaling; or

indicating reference signal resource set c2 through the first signaling;

where in case that the first signaling indicates TRP3 or indicates the carrier associated with TRP3 or indicates that the target ON/OFF state of TRP3 is OFF, since the OFF state of TRP3 corresponds to reference signal resource set c2, even if the first signaling does not indicate reference signal resource set c2, the UE may also know that the target resource set is reference signal resource set c2; in case that the first signaling indicates reference signal resource set c2, even if the first signaling does not indicate TRP3 or the target ON/OFF state of TRP3 is OFF, the UE may also know that TRP3 is the first target TRP and TRP3 will be turned off.

In some embodiments, after receiving the first signaling, the UE may perform resource switching based on the target resource set indicated by the first signaling.

In some embodiments, resource switching may include one or more of the following:
reference signal configuration set switching, broadcast signal configuration set switching or CORESET configuration set switching.

In some embodiments, the UE may update configuration information and behavior based on the first signaling.

For example, the first signaling explicitly indicates the target ON/OFF state of the first target TRP (for example, the first target TRP is turned off) and/or the target resource set: skipping monitoring/monitoring the PDCCH on one search space /a group of search spaces for a long period of time, and the associated high layer reference signal resource set is enabled for use.

For example, the first signaling dynamically indicates the target ON/OFF state of the first target TRP (for example, the first target TRP is turned off) and/or the target resource set: restoring the initial behavior on an activated carrier and/or triggering the measurement of high layer pre-configuration and/or a predefined TRS resource and/or a predefined event.

The method for resource determination provided in the embodiment of the present application, the target ON/OFF state of the first target TRP is adjusted by being indicated through the first signaling on the network side, and is switched to a resource reference signal resource set corresponding to the target ON/OFF state of the first target TRP to reduce the energy consumption overhead of the network and the terminal in the communication system while ensuring high reliability and throughput.

In some embodiments, the target resource set is associated with a target bandwidth part (BWP); where the target BWP is used to indicate:

performing resource switching based on the target resource set on the target BWP in case that the target BWP is an active BWP; and

performing resource switching based on the target resource set on the target BWP after switching to the target BWP in case that the target BWP is not an active BWP.

In some embodiments, each reference signal resource set may be associated with a BWP. For example, reference signal resource set d1 may be associated with BWP1, reference signal resource set d2 may be associated with BWP2, and reference signal resource set d3 may be associated with BWP3.

In some embodiments, the target BWP associated with the target resource set may be determined after the target resource set is obtained.

In some embodiments, if the target BWP is a currently activated BWP, resource switching (for example, switching to the target resource set) may be performed on the current BWP (target BWP) after the first signaling is enabled.

In some embodiments, if the target BWP is not a currently activated BWP, switching is performed to the target BWP after the first signaling is enabled and resource switching may be performed on the target BWP (for example, switching to the target resource set).

For example, the target resource set is associated with a target BWP;

if the associated target BWP is the currently activated BWP, it means that the configuration information is switched to the target resource set on the current BWP after the first signaling is enabled;

if the associated target BWP is another BWP, it means that the switching is performed to another BWP after the first signaling is enabled and the configuration information is switched to the target resource set.

In an embodiment, radio resource control (RRC) defines N (N is equal to or greater than 1) reference signal resource sets. Each configuration information group corresponds to a TRP/a group of TRPs associated with a carrier/a group of carriers enters an OFF state. Each reference signal resource set defines RS configuration information and/or broadcast signal configuration information and/or CORESET configuration information. Each reference signal resource set is associated with a BWP. If the associated BWP is the currently activated BWP, it means that the configuration information is switched on the current BWP after the first signaling is enabled; if the associated BWP is another BWP, it means that the configuration information is switched to another BWP after the first signaling is enabled and the configuration information is switched.

In some embodiments, determining, based on the first signaling, the target resource set and/or the target ON/OFF state of the first target TRP includes one or more of the following:

in case that the first signaling directly indicates the target ON/OFF state of the first target TRP, determining a reference signal resource set associated with the target ON/OFF state of the first target TRP as the target resource set; or

in case that the first signaling directly indicates the target resource set, determining the target ON/OFF state of the first target TRP associated with the target resource set based on the target resource set; or

in case that the first signaling indirectly indicates the target ON/OFF state of the first target TRP through first information, determining, based on the first signaling, the target ON/OFF state of the first target TRP corresponding to the first information, and determining, based on a first target TRP indicated by the target ON/OFF state of the first target TRP, a reference signal resource set associated with the target ON/OFF state of the first target TRP as the target resource set; or

in case that the first signaling indirectly indicates the target resource set through second information, determining, based on the first signaling, the target resource set corresponding to the second information, and determining, based on the target resource set, the target ON/OFF state of the first target TRP associated with the target resource set.

In some embodiments, a dynamic signaling (first signaling) may explicitly indicate the first target TRP.

In some embodiments, a dynamic signaling (first signaling) may explicitly indicate the target ON/OFF state of the first target TRP associated with a group of carriers (such as the first target TRP is turned off) and/or the target resource set.

In some embodiments, in case that the first signaling explicitly indicates the first target TRP or explicitly indicates the carrier associated with the first target TRP or explicitly indicates the target ON/OFF state of the first target TRP, since the target ON/OFF state of the first target TRP corresponds to the target resource set, the UE may also know the target resource set even if the first signaling does not indicate the target resource set.

In some embodiments, a dynamic signaling (first signaling) may indicate the target resource set, that is, the first signaling indirectly indicates the target ON/OFF state of the first target TRP through the target resource set.

In some embodiments, a dynamic signaling (first signaling) may explicitly indicate the target resource set, that is, the first signaling dynamically indicates ON/OFF of a TRP associated with a carrier/a group of carriers through switching of the target resource set.

In some embodiments, determining, based on the first signaling, the target ON/OFF state of the first target TRP and the target resource set includes:

in case that the first signaling indirectly indicates the target ON/OFF state of the first target TRP through first information, determining, based on the first signaling, the target ON/OFF state of the first target TRP corresponding to the first information, and determining, based on a first target TRP indicated by the target ON/OFF state of the first target TRP, a reference signal resource set associated with the target ON/OFF state of the first target TRP as the target resource set.

In some embodiments, a dynamic signaling (first signaling) may implicitly indicate the first target TRP.

In some embodiments, a dynamic signaling (first signaling) may implicitly indicate the target ON/OFF state of the first target TRP associated with a group of carriers (such as the first target TRP is turned off) and/or the target resource set.

In some embodiments, a dynamic signaling (first signaling) may indirectly indicate the first target TRP through the first information.

In some embodiments, a dynamic signaling (first signaling) may indirectly indicate the target ON/OFF state of the first target TRP associated with a group of carriers (such as the first target TRP is turned off) and/or the target resource set through the first information.

In some embodiments, in case that the first signaling implicitly indicates the first target TRP, or implicitly indicates the carrier associated with the first target TRP, or implicitly indicates the target ON/OFF state of the first target TRP, since the target ON/OFF state of the first target TRP corresponds to the target resource set, the UE may also know the target resource set even if the first signaling does not indicate the target resource set.

In some embodiments, a dynamic signaling (first signaling) may implicitly indicate the target resource set, that is, the first signaling indirectly indicates the target ON/OFF state of the first target TRP through the target resource set.

In some embodiments, a dynamic signaling (first signaling) may implicitly indicate the target resource set, that is, the first signaling dynamically indicates ON/-OFF of a TRP associated with a carrier/a group of carriers through switching of the target resource set.

In some embodiments, a dynamic signaling (first signaling) may jointly and dynamically indicate the target ON/OFF state of the first target TRP associated with a carrier/a group of carriers (such as the first target TRP is turned off) and/or the target resource set through explicit information and implicit information.

In some embodiments, a dynamic signaling (first signaling) may jointly and dynamically indicate the first target TRP and/or the target ON/OFF state of the first target TRP through explicit information and implicit information.

In some embodiments, a dynamic signaling (first signaling) may jointly and dynamically indicate the first target TRP and/or the target ON/OFF state of a carrier associated with the first target TRP through explicit information and implicit information.

In some embodiments, a dynamic signaling (first signaling) may jointly and dynamically indicate the target ON/OFF state of the first target TRP and/or the target ON/OFF state of a carrier associated with the first target TRP through explicit information and implicit information.

In some embodiments, a dynamic signaling (first signaling) may jointly and dynamically indicate the target resource set and/or the target ON/OFF state of a carrier associated with the first target TRP through explicit information and implicit information.

In some embodiments, a dynamic signaling (first signaling) may jointly and dynamically indicate the target resource set and/or the first target TRP through explicit information and implicit information.

In some embodiments, a dynamic signaling (first signaling) may jointly and dynamically indicate the target resource set and/or the first target TRP through explicit information and implicit information.

In some embodiments, a dynamic signaling (first signaling) may jointly indicate at least one of the following through explicit information and implicit information:

a target resource set;

a first target TRP;

a carrier associated with a first target TRP;

a target ON/OFF state of a first target TRP; or

a target ON/OFF state of a carrier associated with a first target TRP.

In some embodiments, a dynamic signaling (first signaling) may jointly and dynamically indicate the target resource set through explicit information and implicit information.

In some embodiments, a dynamic signaling (first signaling) may jointly and dynamically indicate the first target TRP and/or the target resource set through explicit information and implicit information.

In some embodiments, a dynamic signaling (first signaling) may jointly and dynamically indicate the target ON/OFF state of the first target TRP and/or the target resource set through explicit information and implicit information.

In some embodiments, the explicit information may indicate the first target TRP or carrier information of the first target TRP, and the implicit information indicates a carrier or the target ON/OFF state of the first target TRP associated with a carrier (such as the first target TRP is turned off) and/or the target resource set.

In some embodiments, the explicit information may indicate one of the target ON/OFF state of the first target TRP (such as the first target TRP is turned off) or the target resource set, and the implicit information indicates the other thereof.

In some embodiments, the explicit information may indicate the first target TRP, and the implicit information indicates a carrier/a group of carriers associated with the first target TRP.

In the embodiment of the present application, by using the association between the target ON/OFF state of the first target TRP and the target resource set, the other thereof may be directly known by only indicating one of the target ON/OFF state of the first target TRP and the target resource set, and the explicit indication or implicit indication or a joint explicit indication and implicit indication may be performed, which may improve the flexibility of the indication, save a length of the signaling, and save transmission resources.

In some embodiments, the first signaling contains a first indicator field and/or a second indicator field; where the first signaling meets one or more of the following:

the first indicator field being used to indicate the target ON/OFF state of the first target TRP;

the first indicator field being used to indicate the target resource set;

the first indicator field being used to indicate the target ON/OFF state of the multiple transmission resources;

the second indicator field being used to indicate the target ON/OFF state of the first target TRP;

the second indicator field being used to indicate the target ON/OFF state of the multiple transmission resources; or

the second indicator field being used to indicate the target resource set.

In some embodiments, new indicator fields may be defined in the first signaling: the first indicator field and/or the second indicator field.

In some embodiments, the first signaling may include only the first indicator field, and the first indicator field may indicate one or more of the following: the target ON/OFF state of the first target TRP, the target resource set, or ON/OFF states corresponding to multiple TRPs belonging to a first target carrier.

In some embodiments, the first target carrier may belong to the multiple transmission resources.

In some embodiments, the first signaling may include only the second indicator field, and the second indicator field may indicate one or more of the following: the target ON/OFF state of the first target TRP, the target resource set, or ON/OFF states corresponding to multiple TRPs belonging to a first target carrier.

In some embodiments, the first signaling may include the first indicator field and the second indicator field, which jointly indicate one or more of the following: the target ON/OFF state of the first target TRP, the target resource set, or ON/OFF states corresponding to multiple TRPs belonging to a first target carrier.

In some embodiments, the first indicator field may be a parameter state indicator field (used to indicate the target ON/OFF state of the first target TRP (such as the first target TRP is turned off) and/or the target resource set), and the second indicator field may be a carrier indicator field.

In some embodiments, the first indicator field may be used to indicate the target ON/OFF state of the first target TRP, and the second indicator field may be used to indicate the target ON/OFF state of the first target TRP.

In some embodiments, the first indicator field may be used to indicate the target ON/OFF state of the first target TRP, and the second indicator field may be used to indicate the target resource set.

In some embodiments, the first indicator field may be used to indicate the target ON/OFF state of the first target TRP, and the second indicator field may be used to indicate ON/OFF states corresponding to multiple TRPs belonging to a first target carrier.

In some embodiments, the first indicator field may be used to indicate the target resource set, and the second indicator field may be used to indicate the target ON/OFF state of the first target TRP.

In some embodiments, the first indicator field may be used to indicate the target resource set, and the second indicator field may be used to indicate the target resource set.

In some embodiments, the first indicator field may be used to indicate the target resource set, and the second indicator field may be used to indicate ON/OFF states corresponding to multiple TRPs belonging to a first target carrier.

In some embodiments, the first indicator field may be used to indicate ON/OFF states corresponding to multiple TRPs belonging to a first target carrier, and the second indicator field may be used to indicate the target ON/OFF state of the first target TRP.

In some embodiments, the first indicator field may be used to indicate ON/OFF states corresponding to multiple TRPs belonging to a first target carrier, and the second indicator field may be used to indicate target resource set.

In some embodiments, the first indicator field may be used to indicate ON/OFF states corresponding to multiple TRPs belonging to a first target carrier, and the second indicator field may be used to indicate ON/OFF states corresponding to multiple TRPs belonging to a first target carrier.

In some embodiments, the first signaling contains a bitmap and/or a codepoint.

In some embodiments, the first signaling contains a bitmap and/or a codepoint.

where the first signaling meets one or more of the following:

the bitmap being used to indicate the target ON/OFF state of the first target TRP;

the bitmap being used to indicate the target resource set;

the codepoint being used to indicate the target ON/OFF state of the first target TRP;

the codepoint being used to indicate the target resource set;

the bitmap being used to indicate an activate state corresponding to each of one or more reference signal resource sets;

the codepoint being used to indicate an activate state corresponding to each of one or more reference signal resource sets;

the bitmap being used to indicate the target ON/OFF state of the multiple transmission resources; or

the codepoint being used to indicate the target ON/OFF state of the multiple transmission resources.

In some embodiments, the first signaling may indicate the target ON/OFF state of the first target TRP and/or the target resource set through a bitmap and/or a codepoint.

In some embodiments, the first signaling may include only a bitmap, which is used to indicate one or more of the following: the target ON/OFF state of the first target TRP, the target resource set, the ON/OFF states of multiple TRPs belonging to the first target carrier, an activated state corresponding to one or more reference signal resource sets, or the first target carrier.

For example, the bitmap indicates the target ON/OFF state (such as the first target TRP is turned off) of the first target TRP associated with a carrier/a group of carriers and/or the target resource set, and the RRC defines the configuration information group associated with the T parameter state, which may trigger switching to the associated configuration information group.

In some embodiments, the first signaling may include only a codepoint, which is used to indicate one or more of the following: the target ON/OFF state of the first target TRP, the target resource set, the ON/OFF states of multiple TRPs belonging to the first target carrier, an activated state corresponding to one or more reference signal resource sets, or the first target carrier.

For example, the codepoint mode indicates the target ON/OFF state of the first target TRP corresponding to a carrier/a group of carriers (for example, the first target TRP on a carrier/a group of carriers is turned off) and/or the target resource set, and the RRC defines the configuration information group associated with the carrier state. The UE triggers the configuration switching (i.e., resource switching) based on the target ON/OFF state of the first target TRP (for example, the first target TRP is turned off) and/or the target resource set, and switches to the target pre-configuration group.

In some embodiments, the first signaling may include a bitmap and a codepoint, which jointly indicate one or more of the following: the target ON/OFF state of the first target TRP, the target resource set, the ON/OFF states of multiple TRPs belonging to the first target carrier, an activated state corresponding to one or more reference signal resource sets, or the first target carrier. The bitmap may be used to indicate any one or more of the above, and the codepoint may also be used to indicate any one or more of the above, and the embodiments of the present application are not limited to this.

In some embodiments, the first signaling meets one or more of the following:

bits in the bitmap are respectively used to indicate the ON/OFF states of all TRPs corresponding to one or more carriers, where all TRPs include the first target TRP to be switched to the target ON/OFF state; or

a first-level information field of the bitmap is used to indicate the first target carrier, and bits in a second-level information field of the bitmap are respectively used to indicate the ON/OFF states corresponding to all TRPs of the first target carrier, where all TRPs corresponding to the first target carrier include the first target TRP to be switched to the target ON/OFF state; or

bits in the bitmap are respectively used to indicate ON/OFF states corresponding to one or more TRP indexes, TRPs corresponding to the one or more TRP indexes on one or more carriers include the first target TRP to be switched to the target ON/OFF state; or

a first-level information field of the codepoint is used to indicate the first target carrier, and a value corresponding to a second-level information field of the codepoint is used to indicate an index of the first target TRP on the first target carrier; or

a value corresponding to the codepoint is used to indicate an index of the first target TRP in all TRPs; or

a value corresponding to the codepoint is used to indicate the first target carrier, and bits in the bitmap are used to indicate the ON/OFF states respectively corresponding to all TRPs of the first target carrier, where all TRPs corresponding to the first target carrier include the first target TRP to be switched to the target ON/OFF state; or

the bitmap is used to indicate the first target carrier, and a value corresponding to the codepoint is used to indicate an index of the first target TRP on the first target carrier.

In some embodiments, dynamic ON/OFF information of a TRP associated with a carrier/a group of carriers may be indicated by a bitmap, codepoint, or a bitmap and codepoint combined indication method, and the associated configuration information group switching may be performed.

In some embodiments, the bitmap may indicate the target ON/OFF state of the first target TRP and/or the target resource set, such as indicating the target ON/OFF state (such as the first target TRP is turned off) of the first target TRP associated with the carrier, and/or the target resource set. For example:

(1) $\sum_{i=0}^{m} N_i$ bit: m/group CCs, i/group CCs are associated with Ni/group parameters, each bit corresponds to a parameter state/a group of parameter states associated with a carrier/a group of carriers, bit0-parameter is disabled, bit1-parameter is enabled;

(2) two-level information field indication: the first-level information field indicates a carrier/a group of carriers, and the second-level information field indicates an associated parameter /a group of associated parameters, such as a control resource set pool index CORESETpoolindex, or a TCI state, etc.;

(3) index of indicated turned-on/off TRP (group) (index of the first target TRP, the first target TRP may be one or a group of TRPs) (applicable to all carriers including the main carrier): the reference signal resource set number and/or CORESETpoolindexTRP indicator field length associated with each carrier/each group of carriers is a maximum number of parameters/groups associated with the carrier, and the indicated parameters are enabled on all activated carriers.

In some embodiments, the codepoint may indicate the target ON/OFF state of the first target TRP and/or the target resource set, such as indicating the parameter state, such as:

the first-level information field indicates a carrier/a group of carriers, and the second-level information field indicates an associated parameter/a group of associated parameters;
indicates a parameter/a group of parameters: the parameter groups associated with a carrier/a group of carriers are uniformly numbered, directly indicating that one or a group of parameters are enabled/disabled, such as: [00]-TRP0 associated with all carriers/carrier groups is turned on/off.

In some embodiments, the codepoint and the bitmap may jointly indicate the target ON/OFF state of the first target TRP and/or the target resource set, such as indicating a parameter state associated with the carrier, for example:

(1) bitmap indicates a carrier/a group of carriers, codepoint indicates the parameter state associated with the carrier;

(2) codepoint indicates a carrier/a group of carriers, bitmap indicates the parameter state associated with the carrier.

In an embodiment, the method for resource determination may include the following steps.
Step 1: the network side device defines an N-bit indicator field to indicate an ON/OFF state of a TRP associated on a carrier/a group of carriers based on a quantity of TRPs or a group quantity of TRPs associated with all activated CCs;
in particular, in case that N=1, it means that all TRPs associated with all activated CCs are a group, and 1 bit is used to indicate all TRPs are turned on/off.
Step 2: the network side device configures N configuration parameter groups based on a quantity of TRPs or a group quantity of TRPs associated with all activated CCs, corresponding to one or a group of TRPs are turned off and a turned-off TRP-specific CORESET does not be configured with the search space and RS signals (such as channel state information reference signal (CSI-RS), synchronization signal and PBCH block (SSB), or sounding reference signal (SRS), etc.) and/or the long-periodic/aperiodic configuration of the broadcast signal corresponding to the turned-off TRP. Each configuration parameter group may be associated with a BWP configuration: (1) The associated BWP is the currently activated BWP, which indicates that the configuration information is switched on the current BWP after the first signaling is enabled; (2) The associated BWP is another BWP, and the associated BWP is switched after the first signaling is enabled.
Step 3: in case that the network side device triggers switching a TRP/a group of TRPs (first target TRP) on a CC/a group of CCs from an ON state to an OFF state (from an OFF state to an ON state), the network side device transmits a dynamic signaling (i.e., the first signaling) (group-common control PDCCH, non-scheduling PDCCH, scheduling PDCCH and/or media access control-control element (MAC-CE) to explicitly (such as bitmap or codepoint or a joint of bitmap and codepoint) indicate the information of the turned-off (or turned-on) TRP associated with a CC/a group of CCs served by a UE/a group of UEs.
Step 4: the UE receiving the first signaling triggers switching to the associated high layer configuration parameter group (i.e., target resource set) based on the TRP state indication in the first signaling. If the BWP associated with the switched target resource set is the currently activated BWP, after the first signaling is enabled, the UE switches to the target resource set associated with the switched TRP state on the current BWP, otherwise after the first signaling is enabled, the UE is switched to the associated BWP and is then switched to the associated target resource set.
If the first signaling indicates that multiple TRPs /multiple groups of TRPs (multiple first target TRPs) are turned off simultaneously, the target resource sets corresponding to all turned-off TRPs/TRP groups (multiple first target TRPs) are enabled simultaneously: the UE does not monitor, based on the associated target resource set, the PDCCH on the turned-off TRP-specific CORESET performs long-periodic/aperiodic measurement of the associated reference signal (RS) resources and/or triggers pre-configured events, etc.

Content of a signaling for dynamically indicating ON/OFF of a TRP associated with a carrier in case that a group of UEs is configured with 2 groups of CCs, CC0 is associated with TRPO/TRP group 0, TRP1/TRP group 1; and CC1 is associated with TRP1/TRP group 1, TRP2/TRP group 1, TRP3/TRP group 3 is taken as an example.

(1) Bitmap indicates dynamic ON/OFF of a first target TRP associated with a carrier.

(1.1) Indication method for ON/OFF of a single first target TRP associated with a carrier/a group of carriers:

The network side device configures a 5-bit TRP state indicator field for this group of UEs, corresponding to the state of each TRP/group of TRPs associated with two CCs/group of CCs, and RRC pre-configures 5 configuration information groups to correspond to updated configuration information after each/group of turned-off TRPs on each CC/group of CCs.

**[0202]** [01011] - TRP0/TRP group 0 associated with CC0/CC group 0 is turned off, and TRP1/TRP group 1 is turned on; TRP1/TRP group 1 associated with CC1 is turned off, and TRP2/TRP group 2 and TRP3/TRP group 3 are turned on, the reference signal resource set 0 and group 2 are triggered to be enabled.

(1.2) Two-level bit field indication

The network side device configures a 1-bit carrier indicator field and a 2-/3-bit TRP state indicator field for this group of UEs (if the carrier indicator field indicates CC0/CC group 0, the TRP state indicator field is 2 bits, otherwise, the TRP state indicator field is 3 bits), respectively indicating a target CC and a state of a TRP associated with the target CC. At the same time, RRC pre-configures 5 configuration information groups to correspond to updated configuration information after each/group turned-off TRP on each CC/group of CCs.

[0, 01] -TRP0 associated with CC0 is turned off, reference signal resource set 0 is triggered to be enabled.

[1,100] -TRP2 and TRP3 associated with CC1 are turned off, reference signal resource set 3 and reference signal resource set 4 are triggered to be enabled.

(1.3) Indicated turned-on/turned -off TRP (group) index applies to all CCs.

CC0 is associated with TRP0 and TRP1; CC1 is associated with TRP0, TRP1 and TRP2. The network side device configures a 3-bit TRP state indicator field for this group of UEs, corresponding to the state of each TRP associated with two CCs, and RRC pre-configures 3 configuration information groups corresponding to updated configuration information after each turned-off TRP on two CCs.

[001] -TRP0 and TRP1 associated with CC0 and CC1 are turned off, reference signal resource set 0 and reference signal resource set 1 are triggered to be enabled.

(2) Codepoint indicates dynamic ON/OFF of a TRP associated with a carrier.

(2.1) Two-level bit field indication

The network side device configures a 1-bit carrier indicator field and a 2-bit TRP state indicator field for this group of UEs to indicate a target CC and the state of the TRP associated with the target CC respectively, and RRC pre-configures 5 configuration information groups corresponding to updated configuration information after each/group of turned-off TRPs on each CC/group of CCs.

[0, 0] -TRP0 associated with CC0 is turned off, and state-associated all reference signal resource sets are triggered to be enabled.

(2.2) Indicated turned-on/turned -off TRP (group) index applies to all CCs.

CC0 is associated with TRP0 and TRP1; CC1 is associated with TRP0, TRP1 and TRP2. The network side device configures a 3-bit TRP state indicator field for this group of UEs, corresponding to the state of each TRP associated with two CCs, and RRC pre-configures 3 configuration information groups corresponding to updated configuration information after each turned-off TRP on two CCs.

[00] -TRP0 associated with CC0 and CC1 is turned on/off, and state-associated all reference signal resource sets are triggered to be enabled.

[0] -all TRPs on all activated CCs are turned off, and state-associated all reference signal resource sets are triggered to be enabled.

[1] -all TRPs on all activated CCs are turned on, and state-associated all reference signal resource sets are triggered to be deactivated.

If the TRP indicator field length is defined as 1 bit, it means that the ON/OFF state of all associated TRPs on all activated CCs is indicated simultaneously, for example:

[0] -all TRPs associated with all activated CCs are all turned off; [1] -all TRPs associated with all activated CCs are all turned on;

(3) Joint indication of bitmap and codepoint

(3.1) Bitmap indicates a CC or a group of CCs, codepoint indicates a or a group of associated turned on/off TRPs.

[0, 01] -TRP0 associated with CC0 is turned off, and state-associated all reference signal resource sets are triggered to be enabled.

(3.2) Codepoint indicates a CC or a group of CCs and bitmap indicates a or a group of associated turned on/off TRPs.

[10, 0] -TRP0 associated with CC0 is turned off/on, and state-associated all reference signal resource sets are triggered to be enabled.

In some embodiments, the first signaling contains N reference signal resource sets, different reference signal resource sets correspond to ON/OFF states of different TRPs, and the N reference signal resource sets include the target resource set, where N is a positive integer greater than or equal to 1.

In some embodiments, RRC may define M (M>1) reference signal resource sets.

In some embodiments, each group of configuration information corresponds to a TRP associated with a carrier/a group of carriers that enters an OFF state or an ON state.

In some embodiments, the first signaling may indicate N reference signal resource sets (N is less than or equal to M) among M reference signal resource sets. Different reference signal resource sets correspond to the ON/OFF states of different TRPs respectively. The UE may determine the target resource set that needs to be switched therefrom (for example, if the configuration indicated by the first signaling is different from the current configuration, it may be considered that switching is required), and further determine the target ON/OFF state of the first target TRP corresponding to the target resource set.

In some embodiments, the first signaling contains a bitmap and/or a codepoint;
where the first signaling meets any of the following:

> bits of the bitmap being respectively used to indicate activated states corresponding to one or more reference signal resource sets, where the reference signal resource set corresponding to the activated state is the target resource set;

> a value corresponding to the codepoint being used to indicate the target resource set;

> the bitmap being used to indicate the first target carrier, and a value corresponding to the codepoint being used to indicate the target resource set; or

> a value corresponding to the codepoint being used to indicate the first target carrier, and the bitmap being used to indicate the target resource set.

In some embodiments, the first signaling may indicate the switching of the target resource set through a bitmap or a codepoint or a joint of a bitmap and a codepoint.

For example, the bitmap may indicate: N bits correspond to N reference signal resource sets /groups of reference signal resource sets, bit0: deactivation of a reference signal resource set, bit1: activation of a reference signal resource set.

For example, the codepoint may indicate: a value of the codepoint indicates used/deactivated a TRP or a group of TRPs corresponding to a reference signal resource set or a group of reference signal resource sets.

For example, joint indication of the bitmap and codepoint: a configuration (i.e., target resource set) that a TRP/a group of TRPs (i.e., the first target TRP) on a carrier/group of carriers corresponding to a reference signal resource set/a group of reference signal resource sets enters an OFF state is configured on the carrier/group of carriers.

For example, the bitmap may indicate a carrier/a group of carriers, and the codepoint indicates the corresponding enabled/deactivated target resource set.

For example, the codepoint may indicate a CC/a group of CCs, and the bitmap indicates the corresponding enabled/deactivated target resource set.

In some embodiments, the first signaling may include an associated information indicator field, which may define a high layer configuration information group; for example:

> bitmap indicates the target resource set switching, and the UE switches the target resource set predefined by the high layer based on the indication;

> codepoint indicates the target resource set index to trigger the UE to switch to the target resource set predefined by the high layer.

In an embodiment, the UE may indicate the dynamic ON/OFF of a TRP (the target ON/OFF state of the first target TRP) associated with a carrier/a group of carriers based on the target resource set switching indicated by the first signaling.

Step 1: the network side device configures N configuration information groups based on a quantity of multi-TRPs on the CC and the possible turned-off TRP, such as Group RS Resource Group to Group RS Resource Group N, and each RS Resource Group corresponds to a TRP/a group of TRPs associated with a CC/a group of CCs and no SS is configured on at least one of long-period/aperiodic following: a RS signal (e.g., CSI-RS, SSB, or SRS), a broadcast signal, or a TRP /a group of TRPs-specific CORESET .

Step 2: in case of triggering that a TRP/a group of TRPs associated with a CC/a group of CCs switches between on/OFF states, the network side device transmits a first signaling to indicate the UE to switch/deactivate the associated RS Resource Group ID.

Step 3: after receiving the indication of the first signaling, the UE triggers skipping monitoring of the PDCCH on the CORESET dedicated to the turned-off TRP within configuration information group, and updates the measurement of the associated RS and/or broadcast signal resources.

Content of a signaling for dynamically indicating ON/OFF of a TRP associated with a carrier in case that a group of UEs is configured with 2 CCs/2 groups of CCs (all CCs including PCell are divided into two groups), CC0 is associated with TRP0/TRP group 0, TRP1/TRP group 1; and CC1 is associated with TRP1/TRP group 1, TRP2/TRP group 1, TRP3/TRP group 3 is taken as an example and the RRC configuration is described in detail as follows.

RS Resource Group 0: RP0/TRP group 0 associated with CC0 is configured with long-periodic/aperiodic RS signals and/or broadcast signal resource configuration, and the CORESET specifically corresponding to TRP0/TRP group 0 on CC0 is normally configured with SS; another TRPs are normally configured with reference signals/broadcast signals, and the CORESET specifically corresponding to CC is normally configured with SS;

RS Resource Group 1: TRP1/TRP group 1 associated with CC0 is configured with long-periodic/aperiodic RS signals and/or broadcast signal resource configuration, and the CORESET corresponding to TRP1/TRP group 1 on CC0 is normally configured with SS; another TRPs are normally configured with reference signals/broadcast signals, and the CORESET specifically corresponding to CC is normally configured with SS;

RS Resource Group 2: TRP1/TRP group 1 associated with CC1 is configured with long-periodic/aperiodic RS signals and/or broadcast signal resource configuration, and the CORESET specifically corresponding to TRP1/TRP group 1 on CC1 is normally configured with SS; another TRPs are normally configured with reference signals/broadcast signals, and the CORESET specifically corresponding to CC is normally configured with SS;

RS Resource Group 3: TRP2/TRP group 2 associated with CC1 is configured with long-periodic/aperiodic RS signals and/or broadcast signal resource configuration, and the CORESET specifically corresponding to TRP2/TRP group 2 on CC1 is normally configured with SS; another TRPs are normally configured with reference signals/broadcast signals, and the CORESET specifically corresponding to CC is normally configured with SS;

RS Resource Group 4: TRP3/TRP group 3 associated with CC1 is configured with long-periodic/aperiodic RS signals and/or broadcast signal resource configuration, and the CORESET specifically corresponding to TRP3/TRP group 3 on CC1 is normally configured with SS; another TRPs are normally configured with reference signals/broadcast signals, and the CORESET specifically corresponding to CC is normally configured with SS.

The network side device transmits, based on an ON/OFF state of a TRP associated on a carrier, the first signaling to indicate enabled/deactivated RS Resource Group ID through a bitmap or a codepoint or joint of a bitmap and a codepoint to trigger the UE to perform associated behaviors.

(1) Bitmap indication method

**[0246]** [00111] -RS Resource Group 0 and RS Resource Group 1 are enabled, the UE is triggered to update behaviors based on the enabled configuration, such as: measuring reference signals, long-periodic monitoring of associated CORESET/SS.

(2) Codepoint indication method

[000] -RS Resource Group 0 is enabled/deactivated.

(3) Joint indication method

(3.1) Codepoint indicates a target CC/CC group, and bitmap indicates the configuration information group associated with CC.

[0, 01] -RS Resource Group 0 associated with CC0 is enabled, the UE is triggered to update behaviors based on the enabled configuration, such as: measuring reference signals, long-periodic monitoring of associated CORESET/SS.

(3.2) Bitmap indicates a target CC/CC group, and codepoint indicates the configuration information group associated with CC.

[10, 0] -RS Resource Group 10 associated with CC0 is enabled, the UE is triggered to update behaviors based on the enabled configuration, such as: measuring reference signals, long-periodic monitoring of associated CORESET/SS

In some embodiments, the first information or the second information contains one or more of the following:

quasi co-location (QCL) information;

a transmission configuration indication (TCI) state; or

a signaling transmission location of the first signaling.

In some embodiments, the first signaling may indirectly and dynamically indicate the target ON/OFF state of the first target TRP, such as the parameter state associated with a carrier/a group of carriers through implicit information (first information).

In some embodiments, the first signaling may indirectly and dynamically indicate the target resource set through implicit information (second information).

In some embodiments, the implicit information (first information or second information) may be at least one of the following: TRP-specific information, carrier-specific information, or a signaling transmission location of the first signaling, or quasi co-location QCL information (such as transmission configuration indication (TCI) state).

For example, ON/OFF of a TRP associated with a/group of carriers (the target ON/OFF state of the first target TRP) may be indicated based on the QCL information and the signaling transmission location, where the QCL information is associated with the TRP, for example, TCI state 0 is associated with TRP 1, and TCI state 1 is associated with TRP 2.

In some embodiments, RRC may configure a reference signal resource sets for an OFF state of each TRP/each group of TRPs, and the reference signal resource set includes at least one of the following: RS configuration information, broadcast signal configuration information, or CORESET configuration information, which respectively corresponds to the configuration update (i.e., resource switching) after a TRP/a group of TRPs are turned off.

In some embodiments, the association relationship between the reference signal resource set and the TRP may be predefined and/or determined by including TRP explicit information, such as TRP/TRP group index (the first target TRP) in the configuration information group.

In some embodiments, the signaling transmission location (such as carrier location) of the first signaling and QCL information jointly indicate the first target TRP associated with the carrier. For example, the first signaling is transmitted on a carrier associated with the turned-on/off first target TRP or transmitted on a carrier scheduling the signaling (CIF field indicates the target carrier), and the QCL information in the first signaling indicates ON/OFF of a first target TRP/a group of first target TRPs associated with a carrier/a group of carriers.

In some embodiments, the target ON/OFF state of the first target TRP, such as the parameter state associated with a carrier/a group of carriers may be indicated based on the signaling transmission location of the first signaling.

In some embodiments, RRC may configure P (P>1) groups of reference signal resource sets (Group) for each TRP/each group of TRPs, and the reference signal resource set includes at least one of the following: RS configuration information, broadcast signal configuration information, or CORESET configuration information, which respectively corresponds to ON/OFF of a TRP/a group of TRPs.

In some embodiments, the relationship between the reference signal resource set and the carrier associated with the TRP may be predefined and/or indicated by TRP explicit information included in the reference signal resource set, such as TRP/TRP group index.

In some embodiments, RRC may associate an independent transmission location (which may be called the TRP-specific transmission location) for each/group TRP (for example, in case that the TRP has no specifically distinguishing information, such as the index that uniquely indicates the TRP, or any other situation), such as CORESET or search space (SS), and the network side device may transmit this first signaling at the TRP-specific transmission location on the carrier associated with the first target TRP or the carrier scheduling this carrier to implicitly indicate a TRP/a group of TRPs associated with a carrier is turned on/off (target ON/OFF state of the first target TRP).

In some embodiments, the first signaling may include at least one of the following:

implicit association information of a target carrier, an implicit association information indicator field of a target carrier, implicit association information of the target ON/OFF state of the first target TRP (such as the target ON/OFF state of the first target TRP), or an implicit association information indicator field of the target ON/OFF state of the first target TRP (such as the target ON/OFF state of the first target TRP).

In an embodiment, the implicit association information or the implicit association information indicator field may include specific information of the target ON/OFF state of the first target TRP and/or specific information of the target carrier.

The specific information may be QCL information, such as TCI state;

the specific information may be the signaling transmission location of the first signaling, such as CORESET, SS, or the carrier to which the signaling is transmitted.

In an embodiment, the target ON/OFF state of the first target TRP and/or the target resource set may be indicated based on implicit information. For example, dynamic ON/OFF of a TRP associated with a carrier/a group of carriers is indicated.

Step 1: the network side device predefines specific implicit information such as: signaling transmission location (the signaling is transmitted on a specific carrier or a carrier that schedules the signaling (the carrier indicator field (CIF) indicates the target CC), CORESET/SS, etc.) based on a quantity of TRPs or a group quantity of TRPs associated with all activated CCs that may support multi-TRP transmission.

Step 2: the network side device configures N reference signal resource sets based on a quantity of TRPs or a group quantity of TRPs associated with all activated CCs that may support multi-TRP transmission, corresponding to one or a group of TRPs are turned off and a turned-off TRP-specific CORESET does not be configured with the search space and RS signals (such as channel state information reference signal (CSI-RS), synchronization signal and PBCH block (SSB), or sounding reference signal (SRS), etc.) and/or the long-periodic/aperiodic configuration of the broadcast signal corresponding to the turned-off TRP. Each configuration parameter group may be associated with a BWP configuration: (1) The associated BWP is the currently activated BWP, which indicates that the configuration information is switched on the current BWP to the reference signal resource set after the first signaling is enabled; (2) The associated BWP is another BWP, and the associated BWP is switched after the first signaling is enabled.

Step 3: in case that the network side device triggers switching a TRP/a group of TRPs on a CC/a group of CCs from an ON state to an OFF state (from an OFF state to an ON state), the network transmits a dynamic signaling (group-common control PDCCH, non-scheduling PDCCH, scheduling PDCCH and/or MAC CE and/or specific sequence) to indicate the information of the turned-off (or turned-on) TRP associated with a CC/a group of CCs served by a UE/a group of UEs based on predefined implicit information (signaling transmission location/QCL information and signaling transmission location) .

Step 4: the UE receiving the first signaling triggers switching to the associated reference signal resource set (a high layer configuration parameter) based on the TRP state indication in the first signaling. If the BWP associated with the switched reference signal resource set is the currently activated BWP, after the first signaling is enabled, the UE switches to the reference signal resource set associated with the switched TRP state on the current BWP, otherwise after the first signaling is enabled, the UE is switched to the associated BWP and is then switched to the associated reference signal resource set.

If the first signaling indicates that multiple TRPs /multiple groups of TRPs are turned off simultaneously, the reference signal resource sets corresponding to all turned-off TRPs/TRP groups are enabled simultaneously: the UE does not monitor, based on configurations of the associated reference signal resource sets, the PDCCH on the turned-off TRP-specific CORESET performs long-periodic/aperiodic measurement of the associated RS resources and/or triggers predefined events, etc.

A signaling for dynamically indicating ON/OFF of a TRP associated with a carrier in case that a group of UEs is configured with 2 groups of CCs, CC0 is associated with TRP0/TRP group 0, TRP1/TRP group 1; and CC1 is associated with TRP1/TRP group 1, TRP2/TRP group 1, TRP3/TRP group 3 is taken as an example.

(1) Indicating the on/off of multi-TRP associated with a carrier/a group of carriers based on QCL information and signaling transmission location

The network side device associates a reference signal resource set for a TCI state corresponding to each TRP/a group of TRPs, which represents that the configuration information of this TRP /a group of turned-off TRPs is updated to the reference signal resource set. The first signaling (CIF indicates the target CC) is transmitted on the signaling transmission carrier or the carrier that schedules the first signaling to implicitly indicate the CC associated with the turned-on/off TRP. In case that a TRP/a group of TRPs on a CC/a group of CCs is turned on/off, the signaling is transmitted on the corresponding CC/CC group and the TCI indicator field indicates the corresponding TRP. After detecting the first signaling, the UE determines the TRP state associated with the CC based on the TCI indication and the location of the carrier transmitting the first signaling, and further updates and switches to the pre-configured parameter group based on the TRP state.

(2) Indicating the on/off of multi-TRP associated with a carrier/a group of carriers based on transmission location

The network side device implicitly associates a piece of specific information (such as CORESET, SS) and a reference signal resource set for each TRP/a group of TRPs, which represents that the configuration of this TRP /a group of turned-off TRPs is updated. The first signaling (CIF indicates the target CC) is transmitted on the first signaling transmission carrier or the carrier that schedules the first signaling to implicitly indicate the CC associated with the turned-on/off TRP. In case that a TRP/a group of TRPs on a CC/a group of CCs is turned on/off, the signaling is transmitted on the corresponding CC/CC group and the TCI indicator field indicates the corresponding TRP. After detecting the first signaling, the UE determines the TRP state associated with the CC based on the TRP-specific information and the location of the carrier transmitting the first signaling, and further updates and switches to the pre-configured parameter group based on the TRP state.

In some embodiments, determining, based on the first signaling, the target resource set and/or the target ON/OFF state of the first target TRP includes:

determining, based on the first signaling, a target monitoring configuration, where the target monitoring configuration includes an associated parameter configuration for monitoring a physical downlink control channel (PDCCH); and

determining, based on the target monitoring configuration, the target ON/OFF state of the first target TRP corresponding to the target monitoring configuration, and/or the target resource set corresponding to the target monitoring configuration.

In some embodiments, the first signaling may dynamically indicate the target ON/OFF state of the first target TRP and/or the target resource set through a target monitoring configuration (the associated parameter configuration for PDCCH monitoring, such as the dynamic adaptation associated configuration of PDCCH monitoring). For example, a parameter state associated with a carrier/a group of carriers is indicated.

In some embodiments, the first signaling may dynamically indicate a parameter associated with a carrier/a group of carriers is enabled/disabled through a target monitoring configuration (the associated parameter configuration for PDCCH monitoring, such as the dynamic adaptation associated configuration of PDCCH monitoring).

In some embodiments, the target monitoring configuration contains: a given search space set group (SSSG) on a control resource set (CORESET) of the first target TRP; and/or

the target monitoring configuration contains: a given PDCCH skipping step value.

In some embodiments, the first signaling may include an associated information indicator field, which may be a target monitoring configuration, such as PDCCH monitoring adaptation information.

In some embodiments, the first signaling may indicate SSSG switching, and trigger the UE to perform corresponding actions based on an SSSG index and associated information (a reference signal resource set and/or a target ON/OFF state of the first target TRP).

In some embodiments, the first signaling may indicate PDCCH skipping, and trigger the UE to perform corresponding actions (such as resource switching based on the target resource set) based on the skipping step and associated information (a target resource set and/or a target ON/OFF state of the first target TRP).

In some embodiments, a specific SSSG and the PDCCH monitoring period corresponding to of an enabled/disabled state of a reference signal resource set/a group of reference signal resource sets may be configured on the TRP-specific CORESET. If they are not configured, it means skipping monitoring. The network side device may indicate the target resource set associated with a carrier/a group of carriers is enabled/disabled through SSSG switching.

In some embodiments, RRC may configure a specific PDCCH Skipping step value to associate the OFF state of a TRP/a group of TRPs, and indicate the ON/OFF state of the TRP associated with a carrier/a group of carriers through PDCCH skipping step.

In some embodiments, a specific ON/OFF state associated with a TRP/a group of TRPs may be configured on the TRP-specific CORESET, and the SSSG switching may be used to indicate ON/OFF of the TRP associated with a carrier/a group of carriers.

In some embodiments, RRC may configure a specific PDCCH skipping step value, associate the enabled/disabled state of a reference signal resource set/a group of reference signal resource sets, and the network side device may indicate the target resource set associated with a carrier/a group of carriers is enabled/disabled through PDCCH skipping step.

In an embodiment, the first signaling may dynamically indicate the target ON/OFF state of the first target TRP and/or the target resource set through the target monitoring configuration. For example, ON/OFF of a multi-TRP associated with a carrier/a group of carriers is dynamically indicated based on PDCCH monitoring adaption.

(1) Indicating the on/off of multi-TRP associated with a carrier/a group of carriers based on a SSSG switching mode

Similar to the above embodiment, the network side device may associate two SSSGs (SSSG0-regular monitoring; SSSG1-long-period monitoring/skipping monitoring) for CORESET associated with each TRP/a group of TRPs. Each SSSG is associated with a resource group (SSSG0 is associated with CSI-Resource group 0-regular reference signal (such as CSI-RS, SSB, or SRS) and/or broadcast signal configuration; SSSG1 is associated with Resource group 1-long-period/aperiodic reference signal and/or broadcast signal configuration). In case that the network side device triggers a TRP/a group of TRPs (first target TRP) to switch between ON/OFF states, the first signaling transmits DCI format 2_0 on the CORESET associated with the first target TRP, the TRP/a group of TRPs are switched between SSSG0 and SSSG1 through a SearchSpaceSwitchTrigger indicator field to implicitly indicate transition of ON/OFF states of the first target TRP, and triggers the UE to perform resource group switching (i.e., switching to the target resource set).

(2) Indicating the on/off of multi-TRP associated with a carrier/a group of carriers based on a PDCCH Skipping mode

Similar to the above embodiment, the network side device associates two specific PDCCH skipping steps (step0-regular monitoring; step1-long monitoring period/skipping monitoring) for each CORESET associated with each TRP/group. Each step is associated with a resource group (step0 is associated with CSI-Resource group 0-regular reference signal (such as CSI-RS, SSB, or SRS) and/or broadcast signal configuration; step1 is associated with resource group 1-long period/aperiodic reference signal and/or broadcast signal configuration). In case that the network side device triggers a TRP/a group of TRPs (first target TRP) to switch between ON/OFF states, the first signaling is transmitted on the CORESET associated with the TRP to indicate PDCCH Skipping, the TRP/a group of TRPs are switched between step0 and step1 through the PDCCH monitoring adaptation indicator field to implicitly indicate transition of ON/OFF states of the TRP (the target ON/OFF state of the first target TRP), and triggers the UE to perform resource switching (i.e., resource group switching) based on a target pre-configured resource information group associated with the target ON/OFF state of the first target TRP).

In some embodiments, the method further includes:

transmitting hybrid automatic repeat request (HARQ) feedback information of the first signaling.

In some embodiments, the network side device may configure the first signaling to support a HARQ-ACK feedback mechanism.

In some embodiments, the HARQ feedback information from UE may trigger the retransmission of the first signaling.

In some embodiments, the network side device may indicate a HARQ-ACK feedback location for the signaling, and the network side device retransmits the signaling if it does not receive ACK information at the indicated ACK/NACK feedback location.

In some embodiments, the UE may support HACK feedback of the first signaling based on predefining.

In some embodiments, the UE may support ACK/NACK feedback based on the predefining and feed back ACK/NACK based on the associated technical feedback mechanism.

In an embodiment, the network side device may choose to support the retransmission of the first signaling or not support the retransmission of the first signaling, where

not supporting the retransmission of the first signaling means: the first signaling is transmitted once in case that the on/off states of TRP is transitioned, and the network side device assumes that the UE may receive it correctly by default, and updates the corresponding off/on behavior based on the TRP state;

supporting the retransmission of the signaling means: the network side device carries/predefines an ACK/NACK feedback location in the first signaling, and the UE correctly receives it and then feeds back ACK/NACK information at the location indicated by the first signaling. After the network side device does not receive the ACK information, it continues to transmit the first signaling until the UE receives it correctly or the maximum number of retransmissions is reached.

In some embodiments, the method further includes:
determining, based on the first signaling, one or more of the following:

a target tracking reference signal (TRS) measurement resource set;

triggering a first target transmission/reception point (TRP) to initiate a tracking reference signal (TRS) measurement;

triggering a second target transmission/reception point (TRP) to initiate a tracking reference signal (TRS) measurement, where a carrier corresponding to the second target TRP supports a multi-transmission/reception point (MTRP) transmission;

triggering a third target transmission/reception point (TRP) to initiate a tracking reference signal (TRS) measurement, where a pre-configured aperiodic TRS on a carrier corresponding to the third target TRP is enabled;

triggering a transmission/reception point (TRP) on a second target carrier to initiate a tracking reference signal (TRS) measurement, where a pre-configured aperiodic TRS on the second target carrier is enabled; or

triggering a predefined event.

In some embodiments, the second target TRP may be a TRP different from the first target TRP.
In some embodiments, the second target TRP may be a TRP same as the first target TRP.
In some embodiments, the third target TRP may be a TRP different from the first target TRP.
In some embodiments, the third target TRP may be a TRP same as the first target TRP.
In some embodiments, the second target carrier may be the same as or different from the first target carrier.
In some embodiments, the first signaling may also trigger an aperiodic TRS and/or a predefined event.
For example, RRC configure TRS resources for each carrier/a group of carriers and triggers the aforementioned TRS resources to be enabled by indicating that the associated reference signal resource set changes from disabled to enabled through the first signaling.
For example, the first signaling may indicate a change in the ON/OFF state of the TRP associated with the carrier or a configuration change corresponding to the associated reference signal resource set, trigger a predefined event, such as an A2 or A4 or A6 measurement event.
In an embodiment, the first signaling may trigger an aperiodic TRS and/or a predefined event.
Step 1: RRC defines/preconfigures N groups of TRS measurement resource sets, configures predefined events, such as A2 or A4 or A6 measurement events for TRS measurement corresponding to N TRPs/N groups of turned-on TRPs.
Step 2: in case that a new TRP on a carrier supporting MTRP transmission is turned on/a previously turned-off TRP is turned on again or a turned-on TRP is turned off, the first signaling is transmitted to indicate the information of turned-on/turned-off TRP.
Step 3: in case that the UE successfully receives ON information of the turned-off TRP, the preconfigured aperiodic TRS on this carrier is enabled, and the UE performs TRS measurement and reporting based on the preconfigured resources. In case that the UE successfully receives the turned-on TRP is turned off, a predefined event, such as A2 or A4 or A6 measurement event, is triggered.
In some embodiments, the specific content included in the first signaling may be determined based on any of the aforementioned embodiments.

In some embodiments, the first signaling includes one or more of the following:

a group-common control physical downlink control channel (PDCCH), a non-scheduling physical downlink control channel (PDCCH), a scheduling physical downlink control channel (PDCCH), a media access control-control element (MAC-CE), or a specific sequence.

In some embodiments, the non-scheduling DCI may be a non-scheduling DCI in the related art such as DCI 2_0 to DCI 2_6, DCI1_1/2 and/or a newly defined DCI format.

In some embodiments, the group-common control PDCCH includes one or more of the following:

a user equipment (UE)-specific PDCCH, a user equipment (UE) group-specific PDCCH, or a cell-specific PDCCH.

In some embodiments, the UE-specific PDCCH may include UE specific.

In some embodiments, the UE group-specific PDCCH may include UE group specific.

In some embodiments, the cell-specific PDCCH may include cell specific.

In an embodiment, the target ON/OFF state of the first target TRP and/or the target resource set, such as dynamic ON/OFF of a TRP associated with a carrier/a group of carriers, may be dynamically indicated based on joint of explicit information and implicit information.

(1) Dynamic ON/OFF of a TRP associated with a carrier/a group of carriers may be jointly indicated using indication method of the first signaling provided in any of the above embodiments. A target CC (turned-on/off TRP) is indicated through explicit information, and a TRP associated with CC (target CC) is indicated through implicit information to trigger the UE to perform predefined parameter configuration group switching.

(2) The TRP indication domain may be defined: TRP is indicated in bitmap or codepoint mode.

A turned-on/off carrier/ a group of turned-on/off carriers may be indicated through a first signaling transmission location. The first signaling (including implicit information) is transmitted on a carrier associated with the turned-on/off TRP or the carrier that schedules the first signaling (the CIF field indicates this carrier);

the implicit information indicates a parameter/a group of parameters (i.e., the target ON/OFF state of the first target TRP and/or the target resource set), and the explicit information indicates an associated carrier/a group of associated carriers.

For example, implicit information may be TRP-specific information, such as QCL information and/or the signaling transmission location (CORESETpoolindex/SS) of the first signaling, to implicitly indicate the TRP associated with the carrier is enabled/disabled (i.e.,

the target ON/OFF state of the first target TRP and/or the target resource set).

For example, the carrier indicator field is defined: bitmap or codepoint mode to indicate enabled/disabled parameters (i.e., the target ON/OFF state of the first target TRP and/or the target resource set) for the TRP associated with the carrier.

In the embodiments of the present application, in case that the TRP associated with a carrier is turned on/off, the first signaling is transmitted to indicate information of the turned-on/off TRP on a carrier/a group of carriers (the target ON/OFF state of the first target TRP) and/or the target resource set to trigger the ON/OFF state of the TRP predefined by the network side device to be in one-to-one association with the reference signal resource set, the UE updates, based on the first signaling, behaviors, such as long period measurement /no measurement of reference signals and/or broadcast signals and/or PDCCH skipping on some CORESETs.

For example, the first signaling triggers/indicates that all carriers associated with a TRP are turned on or off (ON/OFF) simultaneously (for example, 1 bit indicates 1 TRP associated with multiple carriers performs ON/OFF operations, and the characteristic at this time is that all carriers corresponding to the TRP are turned on/off simultaneously).

For example, in case that the first signaling triggers/indicates a TRP to perform an OFF operation, all carriers associated with the TRP are turned off (OFF) simultaneously; in case that the dynamic signaling triggers/indicates a TRP to perform a ON operation, the first carrier set associated with the TRP performs a ON operation, and the second carrier set performs an OFF operation.

For example, in case that the first signaling triggers/indicates a TRP to perform ON/OFF operations, the first carrier set associated with the TRP performs a ON operation, and the second carrier set performs an OFF operation.

This solution provides the first signaling for dynamically indicating ON/OFF of the TRP associated with a carrier or a group of carriers. In the multi-TRP transmission in the carrier aggregation scenario, in case that only one or part of the TRP serving on some carriers may ensure reliability and throughput transmission, the remaining TRPs are turned off to save base station energy consumption, and the signaling is transmitted to indicate the UE to trigger the energy-saving behavior of UE: skipping monitoring/long-period monitoring the PDCCH and update reference signal (such as SSB or CSI-RS) measurement behavior on some search spaces, which may save energy consumption on both the base station side and the UE side. In case that the TRP that needs to be turned off is turned on again to ensure service, the first signaling is transmitted to restore the original UE behavior under Multi-TRP transmission to ensure high-reliability transmission. While ensuring high reliability and high-throughput transmission of the system, the energy consumption of the network side and the UE is reduced simultaneously.

The embodiments of the present application may be applied to multi-TRP transmission. If the high layer configures a CORESET that distinguishes TRPs, the UE will always monitor the PDCCH corresponding to the TRP on these configured CORESETs. The base station may turn off some TRPs and transmit a signal to indicate the UE to skip monitoring the Search Space corresponding to the turned-off TRP, and the UE may save unnecessary blind detection power consumption.

The embodiments of the present application may be applied to DCI with CRC scrambled by PS-RNTI (DCP) mechanism. The DCP may wake up the UE to monitor all search spaces on the current BWP. If the UE supports MTRP transmission, the UE will perform monitoring on search spaces corresponding to all TRPs. The UE may select an optimal TRP/link to ensure reliable transmission. At this time, there will be additional energy consumption of the TRP on the base station side and power consumption overhead of the UE side performing PDCCH monitoring at the CORESET position corresponding to these TRPs.

In the embodiments of the present application, the turned-off TRP may not transmit/ transmit reference signals (such as SSB or CSI-RS) for a long period. The UE cannot distinguish the CSI-RS resource configuration of multi-TRP. In case that the base station side turns off a part of the TRP, these TRPs may only maintain the long-period/aperiodic CSI-RS. Through the solution, by carrying the reference signal configuration information associated with the turned-off TRP in the first signaling, the UE may update the CSI-RS measurement behavior of the turned-off TRP to further reduce the power consumption of the UE measuring CSI-RS.

The method for resource determination provided in the embodiment of the present application, the target ON/OFF state of the first target TRP is adjusted by being indicated through the first signaling on the network side, and is switched to a resource reference signal resource set corresponding to the target ON/OFF state of the first target TRP to reduce the energy consumption overhead of the network and the terminal in the communication system while ensuring high reliability and throughput.

FIG. 3 is a second flow chart of a method for resource determination according to the embodiment of the present application. As shown in FIG. 3, the method may be performed by a second communication device, such as a network side device, that is, the method for resource determination may be performed by a network side device, and the method includes:

step 300: transmitting a first signaling, where the first signaling is used to indicate a target ON/OFF state of multiple transmission resources.

In some embodiments, the first communication device may be a terminal.

In some embodiments, the first signaling may be dynamic signaling.

In some embodiments, the first signaling may be transmitted from a network side device to the terminal.

In some embodiments, the first signaling may be a higher layer signaling received by the terminal.

In some embodiments, the first signaling may be a PDCCH signaling.

In some embodiments, the first signaling may be used to indicate a target ON/OFF state of multiple transmission resources.

For example, the first signaling may be used to indicate turned-off (OFF) of multiple transmission resources.

For example, the first signaling may be used to indicate turned-on (ON) of multiple transmission resources.

In the method for resource determination provided in the embodiments of the present application, a target ON/OFF state of multiple transmission resources is determined to be ON or OFF through being indicated by the first signaling transmitted from a network side device, which reduces the energy consumption overhead of the network and terminal in the communication system, while ensuring the high reliability and throughput.

In some embodiments, the transmission resource is a frequency domain transmission resource, or a resource associated with a frequency domain transmission resource; and

the transmission resource is associated with a first target transmission/reception point (TRP).

In some embodiments, the transmission resources may be frequency domain transmission resources.

In some embodiments, the first signaling may be used to indicate a target ON/OFF state of multiple frequency domain transmission resources.

For example, the first signaling may be used to indicate turned-off (OFF) of multiple frequency domain transmission resources.

For example, the first signaling may be used to indicate turned-on (ON) of multiple frequency domain transmission resources.

In some embodiments, the first signaling may be used to indicate a target ON/OFF state of multiple frequency domain transmission resources associated with the first target TRP.

For example, the first signaling may be used to indicate that all or part of the frequency domain transmission resources associated with the first target TRP are turned off (OFF).

For example, the first signaling may be used to indicate that all or part of the frequency domain transmission resources associated with the first target TRP are turned on (ON).

In some embodiments, the frequency domain transmission resource is a carrier.

In some embodiments, the first signaling may be used to indicate a target ON/OFF state of multiple carriers associated with the first target TRP.

For example, the first signaling may be used to indicate that all or part of the carriers associated with the first target TRP are turned off (OFF).

For example, the first signaling may be used to indicate that all or part of the carriers associated with the first target TRP are turned on (ON).

In some embodiments, determining, based on the first signaling, the target ON/OFF state of the multiple transmission resources includes:

determining, based on the first signaling, a target ON/-OFF state of multiple transmission resources associated with a first target transmission/reception point (TRP).

For example, all carriers associated with the first target TRP may be triggered/indicated to be turned on/off (ON/OFF) simultaneously through the first signaling (e.g., 1 bit is used to indicate that one TRP associated with multiple carriers performs ON/OFF operations).

In some embodiments, determining, based on the first signaling, the target ON/OFF state of the multiple transmission resources includes:

determining, based on the first signaling, to switch an ON/OFF state of multiple transmission resources associated with a first target transmission/reception point (TRP) to the target ON/OFF state in case that the first target TRP performs ON/OFF state switching.

For example, the first target TRP may be triggered/indicated through the first signaling to perform an OFF operation, where all carriers associated with the first target TRP are simultaneously turned off (OFF).

For example, the first target TRP may be triggered/indicated through the first signaling to perform a ON operation, where all carriers associated with the first target TRP are simultaneously turned on (ON).

For example, the first target TRP may be triggered/indicated through the first signaling to perform an OFF operation, where all carriers associated with the first target TRP are simultaneously turned on (ON).

For example, the first target TRP may be triggered/indicated through the first signaling to perform a ON operation, where all carriers associated with the first target TRP are simultaneously turned off (OFF).

For example, the first target TRP may be triggered/indicated through the first signaling to perform ON/OFF state switching (which may switch from ON to OFF, or from OFF to ON), and ON/OFF state switching may be simultaneously performed on all carriers associated with the first target TRP may (which may be switched from ON to OFF, or from OFF to ON).

In some embodiments, in case that the first target TRP is triggered/indicated through the first signaling to perform a ON operation, among the multiple carriers associated with the first target TRP, a first carrier set performs a ON operation, and a second carrier set performs an OFF operation.

In some embodiments, determining, based on the first signaling, the target ON/OFF state of the multiple transmission resources includes:

determining, based on the first signaling, to switch an ON/OFF state of a first transmission resource set among the multiple transmission resources to the target ON/OFF state and an ON/OFF state of a second transmission resource set among the multiple transmission resources to a first ON/OFF state, in case that a first target transmission/reception point (TRP) performs ON/OFF state switching, where the first ON/OFF state is different from the target ON/OFF state.

For example, in case that the first target TRP is triggered/indicated through the first signaling to perform an ON/OFF operation, among the multiple carriers associated with the first target TRP, a first carrier set performs a ON operation, and a second carrier set performs an OFF operation.

For example, in case that the first target TRP is triggered/indicated through the first signaling to perform a ON operation or an OFF operation, among the multiple carriers associated with the first target TRP, a first carrier set performs an OFF operation, and a second carrier set performs a ON operation.

For example, in case that the first target TRP is triggered/indicated through the first signaling to perform an ON/OFF operation, among the multiple carriers associated with the first target TRP, a first carrier set performs an OFF operation or a ON operation, and a second carrier set performs a ON operation or an OFF operation, where a target ON/OFF state switched by the first carrier set is different from a target ON/OFF state switched by the second carrier set.

In some embodiments, a network side device (such as a base station) may divide multiple transmission resources into multiple transmission resource groups.

In some embodiments, the first signaling may be used to indicate a target ON/OFF state corresponding to each of the multiple transmission resource groups.

In some embodiments, after receiving the first signaling, the UE may determine a target ON/OFF state corresponding to each of the multiple transmission resource groups.

In some embodiments, the first signaling may include multiple DCI bits or codepoints in case of indicating the target ON/OFF state corresponding to each of the multiple transmission resource groups, where each group corresponds to one DCI bit or one codepoint for indicating the target ON/OFF state of the transmission resource group.

For example, the network side device (such as a base station) may divide multiple carriers into at least one group, and each group corresponds to one DCI bit or one codepoint. The carriers within each group correspond to the same ON/OFF information. The base station may configure position information of ON/OFF indication information in DCI and/or corresponding codepoint information for each carrier group using a higher layer signaling; the UE may receive the position information and/or corresponding codepoint information in the DCI corresponding to each carrier group configured by higher layer signaling, and determine the ON/OFF behavior of the corresponding carrier based on the above indication information.

In the embodiments of the present application, multiple transmission resources are divided into multiple transmission resource groups, each transmission resource group includes at least one transmission resource, to indicate the granularity of the transmission resource group to reduce indication overhead, and increase indication flexibility.

In some embodiments, the transmission resource is a frequency domain transmission resource, or a resource associated with a frequency domain transmission resource; and

the transmission resource is associated with a first target transmission/reception point (TRP).

In some embodiments, the frequency domain transmission resource is a carrier.

In some embodiments, the first signaling is used to indicate a target ON/OFF state of multiple transmission resources associated with the first target TRP.

In some embodiments, the first signaling is used to indicate switching an ON/OFF state of multiple transmission resources associated with a first target TRP to the target ON/OFF state in case that the first target TRP performs ON/OFF state switching.

In some embodiments, the first signaling is used to indicate switching an ON/OFF state of a first transmission resource set among the multiple transmission resources to the target ON/OFF state and an ON/OFF state of a second transmission resource set among the multiple transmission resources to a first ON/OFF state, in case that a first target transmission/reception point (TRP) performs ON/OFF state switching, where the first ON/-OFF state is different from the target ON/OFF state.

In some embodiments, the method further includes:

dividing the multiple transmission resources into multiple transmission resource groups;

the first signaling being used to indicate a target ON/OFF state corresponding to each of the multiple transmission resource groups.

In some embodiments, the first signaling is used to indicate the target resource set and/or the target ON/-OFF state of the first target TRP includes:

where the target resource set includes a reference signal resource set associated with the target ON/OFF state of the first target TRP.

In some embodiments, the second communication device may be a network side device.

In some embodiments, the network side device may transmit a first signaling (which may be a dynamic signaling) to the UE, for indicating the target ON/OFF state of the first target TRP and/or target resource set, and triggering the network side device and UE to perform reference signal resource set switching (which may be referred to as resource handover) and/or triggering a predefined event.

In some embodiments, the target resource set may be indicated by resource dynamic indication information.

In some embodiments, the first target TRP may be a TRP or a group of TRPs.

In some embodiments, the target resource set may include a reference signal resource set or a group of reference signal resource sets.

In some embodiments, M reference signal resource sets (M is greater than 1) may be preset, and each reference signal resource set may include one or more of the following: a reference signal configuration information set, a broadcast signal configuration information set, or associating with one or a group of CORESET configuration information.

In some embodiments, each reference signal resource set may be associated with an ON/OFF state of a TRP.

In some embodiments, the target ON/OFF state of the first target TRP may be a parameter associated with a carrier corresponding to the first target TRP.

In some embodiments, a parameter indicated by the first signaling (such as a parameter/a group of parameters indicated by the first signaling, or a parameter/a group of parameters associated with a carrier indicated by the first signaling, etc.) may refer to the target ON/OFF state of the first target TRP and/or the target resource set. The parameter state change may refer to turned-off or turned-on of the first target TRP indicated by the target ON/OFF state of the first target TRP or the reference signal resource set switching is required to switch to the target resource set. Parameter being disabled may refer to turned-off of the first target TRP indicated by the target ON/OFF state of the first target TRP or resource switching is required to switch to a target resource set corresponding to the OFF state of the first target TRP. Subsequent similar expressions also refer to this principle and details are not be repeated herein.

In some embodiments, the target ON/OFF state of the first target TRP may be indicated by an index of the first target TRP.

In some embodiments, the target ON/OFF state of the first target TRP may be indicated by a unified transmission configuration indication (TCI) state corresponding to the first target TRP.

In some embodiments, the target ON/OFF state of the first target TRP may be indicated by associated information of the carrier corresponding to the first target TRP.

In some embodiments, the first signaling indicating the target ON/OFF state of the first target TRP may represent that the first target TRP needs to be switched to the target ON/OFF state. For example, the first target TRP is switched from ON to OFF, or from OFF to ON.

In some embodiments, in case that the first target TRP needs to be switched to the target ON/OFF state, the first signaling may indicate a target resource set associated with the target ON/OFF state of the first target TRP to allow the UE to perform resource switching.

In some embodiments, reference signal resource sets corresponding to the different ON/OFF states of each TRP may be pre-set.

For example, an ON state of TRP1 corresponds to reference signal resource set a1, and an OFF state of TRP1 corresponds to reference signal resource set a2; an ON state of TRP2 corresponds to reference signal resource set b1, and an OFF state of TRP2 corresponds to reference signal resource set b2; an ON state of TRP3 corresponds to reference signal resource set c1, and an OFF state of TRP3 corresponds to reference signal resource set c2, and so on. If TRP3 needs to be turned off, the network side device may perform one or more of the following:

indicating TRP3 through the first signaling;

indicating a carrier associated with TRP3 through the first signaling;

indicating a target ON/OFF state of a carrier associated with TRP3 is ON or OFF through the first signaling;

indicating a target ON/OFF state of TRP3 is OFF through the first signaling; or

indicating reference signal resource set c2 through the first signaling;

where in case that the first signaling indicates TRP3 or indicates the carrier associated with TRP3 or indicates that the target ON/OFF state of TRP3 is OFF, since the OFF state of TRP3 corresponds to reference signal resource set c2, even if the first signaling does not indicate reference signal resource set c2, the UE may also know that the target resource set is reference signal resource set c2; in case that the first signaling indicates reference signal resource set c2, even if the first signaling does not indicate TRP3 or the target ON/OFF state of TRP3 is OFF, the UE may also know that TRP3 is the first target TRP and TRP3 will be turned off.

In some embodiments, after receiving the first signaling, the UE may perform resource switching based on the target resource set indicated by the first signaling.

In some embodiments, resource switching may include one or more of the following:
reference signal configuration set switching, broadcast signal configuration set switching or CORESET configuration set switching.

In some embodiments, the UE may update configuration information and behavior based on the first signaling.

For example, the first signaling explicitly indicates the target ON/OFF state of the first target TRP (for example, the first target TRP is turned off) and/or the target resource set: skipping monitoring/monitoring the PDCCH on one search space /a group of search spaces for a long period of time, and the associated high layer reference signal resource set is enabled for use.

For example, the first signaling dynamically indicates the target ON/OFF state of the first target TRP (for example, the first target TRP is turned off) and/or the target resource set: restoring the initial behavior on an activated carrier and/or triggering the measurement of high layer pre-configuration and/or a predefined TRS resource and/or a predefined event.

In some embodiments, the target resource set is associated with a target bandwidth part (BWP).

In some embodiments, the UE performs resource switching based on the target resource set on the target BWP in case that the target BWP is an active BWP.

In some embodiments, the UE performs resource switching based on the target resource set on the target BWP after switching to the target BWP in case that the target BWP is not an active BWP.

In some embodiments, each reference signal resource set may be associated with a BWP. For example, reference signal resource set d1 may be associated with BWP1, reference signal resource set d2 may be associated with BWP2, and reference signal resource set d3 may be associated with BWP3.

In some embodiments, the target BWP associated with the target resource set may be determined after the target resource set is obtained.

In some embodiments, if the target BWP is a currently activated BWP, resource switching (for example, switching to the target resource set) may be performed on the current BWP (target BWP) after the first signaling is enabled.

In some embodiments, if the target BWP is not a currently activated BWP, switching is performed to the target BWP after the first signaling is enabled and resource switching may be performed on the target BWP (for example, switching to the target resource set).

For example, the target resource set is associated with a target BWP;

if the associated target BWP is the currently activated BWP, it means that the configuration information is switched to the target resource set on the current BWP after the first signaling is enabled;

if the associated target BWP is another BWP, it means that the switching is performed to another BWP after the first signaling is enabled and the configuration information is switched to the target resource set.

In an embodiment, radio resource control (RRC) defines N (N is equal to or greater than 1) reference signal resource sets. Each configuration information group corresponds to a TRP/a group of TRPs associated with a carrier/a group of carriers enters an OFF state. Each reference signal resource set defines RS configuration information and/or broadcast signal configuration information and/or CORESET configuration information. Each reference signal resource set is associated with a BWP. If the associated BWP is the currently activated BWP, it means that the configuration information is switched on the current BWP after the first signaling is enabled; if the associated BWP is another BWP, it means that the configuration information is switched to another BWP after the first signaling is enabled and the configuration information is switched.

In some embodiments, the first signaling is used for one or more of the following:

directly indicating the target ON/OFF state of the first target TRP, a reference signal resource set associated with the target ON/OFF state of the first target TRP being the target resource set; or

directly indicating the target resource set, and an ON/OFF state of a TRP associated with the target resource set being the target ON/OFF state of the first target TRP; or

indirectly indicating the target ON/OFF state of the first target TRP through first information, the first information corresponding to the target ON/OFF state of the first target TRP, a reference signal resource set associated with the target ON/OFF state of the first target TRP being the target resource set; or

indirectly indicating the target resource set through second information, the second information corresponding to the target resource set, an ON/OFF state of a TRP associated with the target resource set being the target ON/OFF state of the first target TRP.

In some embodiments, a dynamic signaling (first signaling) may explicitly indicate the first target TRP.
In some embodiments, a dynamic signaling (first signaling) may explicitly indicate parameter states associated with a group of carriers.
In some embodiments, in case that the first signaling explicitly indicates the first target TRP or explicitly indicates the carrier associated with the first target TRP or explicitly indicates the target ON/OFF state of the first target TRP, since the target ON/OFF state of the first target TRP corresponds to the target resource set, the UE may also know the target resource set even if the first signaling does not indicate the target resource set.
In some embodiments, a dynamic signaling (first signaling) may indicate the target resource set, that is, the first signaling indirectly indicates the target ON/OFF state of the first target TRP through the target resource set.
In some embodiments, a dynamic signaling (first signaling) may explicitly indicate the target resource set, that is, the first signaling dynamically indicates ON/OFF of a TRP associated with a carrier/a group of carriers through switching of the target resource set.
In some embodiments, a dynamic signaling (first signaling) may implicitly indicate the first target TRP.
In some embodiments, a dynamic signaling (first signaling) may implicitly indicate parameter states associated with a group of carriers.
In some embodiments, a dynamic signaling (first signaling) may indirectly indicate the first target TRP through the first information.
In some embodiments, a dynamic signaling (first signaling) may indirectly indicate parameter states associated with a group of carriers through first information.
In some embodiments, in case that the first signaling implicitly indicates the first target TRP or implicitly indicates the carrier associated with the first target TRP or implicitly indicates the target ON/OFF state of the first target TRP, since the target ON/OFF state of the first target TRP corresponds to the target resource set, the UE may also know the target resource set even if the first signaling does not indicate the target resource set.
In some embodiments, a dynamic signaling (first signaling) may implicitly indicate the target resource set, that is, the first signaling indirectly indicates the target ON/OFF state of the first target TRP through the target resource set.
In some embodiments, a dynamic signaling (first signaling) may implicitly indicate the target resource set, that is, the first signaling dynamically indicates ON/OFF of a TRP associated with a carrier/a group of carriers through switching of the target resource set.
In some embodiments, a dynamic signaling (first signaling) may jointly and dynamically indicate parameter states associated with a group of carriers through explicit information and implicit information.
In some embodiments, a dynamic signaling (first signaling) may jointly and dynamically indicate the first target TRP and/or the target ON/OFF state of the first target TRP through explicit information and implicit information.
In some embodiments, a dynamic signaling (first signaling) may jointly and dynamically indicate the target resource set through explicit information and implicit information.
In some embodiments, a dynamic signaling (first signaling) may jointly and dynamically indicate the first target TRP and/or the target resource set through explicit information and implicit information.
In some embodiments, a dynamic signaling (first signaling) may jointly and dynamically indicate the target ON/OFF state of the first target TRP and/or the target resource set through explicit information and implicit information.

In some embodiments, the explicit information may indicate a first target TRP or carrier information of a first target TRP, and the implicit information may indicate a carrier or parameter information associated with a carrier.

In some embodiments, the explicit information may indicate a parameter/a group of parameters, and implicit information indicates a carrier/a group of carriers.

In some embodiments, the explicit information may indicate the first target TRP, and the implicit information indicates a carrier/a group of carriers associated with the first target TRP.

In the embodiment of the present application, by using the association between the target ON/OFF state of the first target TRP and the target resource set, the other thereof may be directly known by only indicating one of the target ON/OFF state of the first target TRP and the target resource set, and the explicit indication or implicit indication or a joint explicit indication and implicit indication may be performed, which may improve the flexibility of the indication, save a length of the signaling, and save transmission resources.

In some embodiments, the first signaling contains a first indicator field and/or a second indicator field; where the first signaling meets one or more of the following:

the first indicator field being used to indicate the target ON/OFF state of the first target TRP;

the first indicator field being used to indicate the target resource set;

the second indicator field being used to indicate the multiple transmission resources; or

the second indicator field being used to indicate the target ON/OFF state of the first target TRP;

the second indicator field being used to indicate the multiple transmission resources; or

the second indicator field being used to indicate the target resource set.

In some embodiments, new indicator fields may be defined in the first signaling: the first indicator field and/or the second indicator field.

In some embodiments, the first signaling may include only the first indicator field, and the first indicator field may indicate one or more of the following: the target ON/OFF state of the first target TRP, the target resource set, or ON/OFF states corresponding to multiple TRPs belonging to a first target carrier.

In some embodiments, the first signaling may include only the second indicator field, and the second indicator field may indicate one or more of the following: the target ON/OFF state of the first target TRP, the target resource set, or ON/OFF states corresponding to multiple TRPs belonging to a first target carrier.

In some embodiments, the first signaling may include the first indicator field and the second indicator field, which jointly indicate one or more of the following: the target ON/OFF state of the first target TRP, the target resource set, or ON/OFF states corresponding to multiple TRPs belonging to a first target carrier.

In some embodiments, the first indicator field may be a parameter state indicator field, and the second indicator field may be a carrier indicator field.

In some embodiments, the first indicator field may be used to indicate the target ON/OFF state of the first target TRP, and the second indicator field may be used to indicate the target ON/OFF state of the first target TRP.

In some embodiments, the first indicator field may be used to indicate the target ON/OFF state of the first target TRP, and the second indicator field may be used to indicate the target resource set.

In some embodiments, the first indicator field may be used to indicate the target ON/OFF state of the first target TRP, and the second indicator field may be used to indicate ON/OFF states corresponding to multiple TRPs belonging to a first target carrier.

In some embodiments, the first indicator field may be used to indicate the target resource set, and the second indicator field may be used to indicate the target ON/OFF state of the first target TRP.

In some embodiments, the first indicator field may be used to indicate the target resource set, and the second indicator field may be used to indicate the target resource set.

In some embodiments, the first indicator field may be used to indicate the target resource set, and the second indicator field may be used to indicate ON/OFF states corresponding to multiple TRPs belonging to a first target carrier.

In some embodiments, the first indicator field may be used to indicate ON/OFF states corresponding to multiple TRPs belonging to a first target carrier, and the second indicator field may be used to indicate the target ON/OFF state of the first target TRP.

In some embodiments, the first indicator field may be used to indicate ON/OFF states corresponding to multiple TRPs belonging to a first target carrier, and the second indicator field may be used to indicate target resource set.

In some embodiments, the first indicator field may be used to indicate ON/OFF states corresponding to multiple TRPs belonging to a first target carrier, and the second indicator field may be used to indicate ON/OFF states corresponding to multiple TRPs belonging to a first target carrier.

In some embodiments, the first signaling contains a bitmap and/or a codepoint.

where the first signaling meets one or more of the following:

> the bitmap being used to indicate the target ON/OFF state of the first target TRP;
>
> the bitmap being used to indicate the target resource set;
>
> the codepoint being used to indicate the target ON/-OFF state of the first target TRP;
>
> the codepoint being used to indicate the target resource set;
>
> the bitmap being used to indicate an activate state corresponding to each of one or more reference signal resource sets;
>
> the codepoint being used to indicate an activate state corresponding to each of one or more reference signal resource sets;
>
> the bitmap being used to indicate the target ON/OFF state of the multiple transmission resources; or
>
> the codepoint being used to indicate the target ON/-OFF state of the multiple transmission resources.

In some embodiments, the first signaling may indicate the target ON/OFF state of the first target TRP and/or the target resource set through a bitmap and/or a codepoint.

In some embodiments, the first signaling may include only a bitmap, which is used to indicate one or more of the following: the target ON/OFF state of the first target TRP, the target resource set, the ON/OFF states of multiple TRPs belonging to the first target carrier, an activated state corresponding to one or more reference signal resource sets, or the first target carrier.

For example, the bitmap mode indicates that a parameter/a group of parameters associated with a carrier are enabled/disabled, RRC defines a configuration information group associated with a T parameter state, and the UE triggers switching to the associated configuration information group based on change of an indicated parameter state.

In some embodiments, the first signaling may include only a codepoint, which is used to indicate one or more of the following: the target ON/OFF state of the first target TRP, the target resource set, the ON/OFF states of multiple TRPs belonging to the first target carrier, an activated state corresponding to one or more reference signal resource sets, or the first target carrier.

For example, the codepoint mode indicates that a parameter/a group of parameters associated with a carrier are enabled/disabled, RRC defines a configuration information group associated with a carrier state, and the UE triggers switching to the configuration information group based on change of an indicated parameter state.

In some embodiments, the first signaling may include a bitmap and a codepoint, which jointly indicate one or more of the following: the target ON/OFF state of the first target TRP, the target resource set, the ON/OFF states of multiple TRPs belonging to the first target carrier, an activated state corresponding to one or more reference signal resource sets, or the first target carrier. The bitmap may be used to indicate any one or more of the above, and the codepoint may also be used to indicate any one or more of the above, and the embodiments of the present application are not limited to this.

In some embodiments, the first signaling meets one or more of the following:

> bits in the bitmap are respectively used to indicate the ON/OFF states of all TRPs corresponding to one or more carriers, where all TRPs include the first target TRP to be switched to the target ON/OFF state;
>
> a first-level information field of the bitmap is used to indicate the first target carrier, and bits in a second-level information field of the bitmap are respectively used to indicate the ON/OFF states corresponding to all TRPs of the first target carrier, where all TRPs corresponding to the first target carrier include the first target TRP to be switched to the target ON/OFF state;
>
> bits in the bitmap are respectively used to indicate ON/OFF states corresponding to one or more TRP indexes, TRPs corresponding to the one or more TRP indexes on one or more carriers include the first target TRP to be switched to the target ON/OFF state;
>
> a first-level information field of the codepoint is used to indicate the first target carrier, and a value corresponding to a second-level information field of the codepoint is used to indicate an index of the first target TRP on the first target carrier;
>
> a value corresponding to the codepoint is used to indicate an index of the first target TRP in all TRPs;
>
> a value corresponding to the codepoint is used to indicate the first target carrier, and bits in the bitmap are used to indicate the ON/OFF states respectively corresponding to all TRPs of the first target carrier, where all TRPs corresponding to the first target carrier include the first target TRP to be switched to the target ON/OFF state; or
>
> the bitmap is used to indicate the first target carrier, and a value corresponding to the codepoint is used to indicate an index of the first target TRP on the first target carrier.

In some embodiments, dynamic ON/OFF information of a TRP associated with a carrier/a group of carriers may be indicated by a bitmap, codepoint, or a bitmap and codepoint combined indication method, and the associated configuration information group switching may be performed.

In some embodiments, the bitmap may indicate the target ON/OFF state of the first target TRP and/or the target resource set, such as indicating a parameter state associated with the carrier, for example:

$$\sum_{i=0}^{m} N_i$$

(1) bit: m/group CCs, i/group CCs are associated with Ni/group parameters, each bit corresponds to a parameter state/a group of parameter states associated with a carrier/a group of carriers, bit0-parameter is disabled, bit1-parameter is enabled;

(2) two-level information field indication: the first-level information field indicates a carrier/a group of carriers, and the second-level information field indicates an associated parameter /a group of associated parameters, such as a control resource set pool index CORESETpoolindex, or a TCI state, etc.;

(3) index of indicated turned-on/off TRP (group) (applicable to all carriers including the main carrier): the reference signal resource set number and/or CORESETpoolindexTRP indicator field length associated with each carrier/each group of carriers is a maximum number of parameters/groups associated with the carrier, and the indicated parameters are enabled on all activated carriers.

In some embodiments, the codepoint may indicate the target ON/OFF state of the first target TRP and/or the target resource set, such as indicating the parameter state, such as:

the first-level information field indicates a carrier/a group of carriers, and the second-level information field indicates an associated parameter/a group of associated parameters;

indicates a parameter/a group of parameters: the parameter groups associated with a carrier/a group of carriers are uniformly numbered, directly indicating that one or a group of parameters are enabled/disabled, such as: [00]-TRP0 associated with all carriers/carrier groups is turned on/off.

In some embodiments, the codepoint and the bitmap may jointly indicate the target ON/OFF state of the first target TRP and/or the target resource set, such as indicating a parameter state associated with the carrier, for example:

(1) bitmap indicates a carrier/a group of carriers, codepoint indicates the parameter state associated with the carrier;

(2) codepoint indicates a carrier/a group of carriers, bitmap indicates the parameter state associated with the carrier.

In an embodiment, the method for resource determination may include the following steps.

Step 1: the network side device defines an N-bit indicator field to indicate an ON/OFF state of a TRP associated on a carrier/a group of carriers based on a quantity of TRPs or a group quantity of TRPs associated with all activated CCs;

in particular, in case that N=1, it means that all TRPs associated with all activated CCs are a group, and 1 bit is used to indicate all TRPs are turned on/off.

Step 2: the network side device configures N configuration parameter groups based on a quantity of TRPs or a group quantity of TRPs associated with all activated CCs, corresponding to one or a group of TRPs are turned off and a turned-off TRP-specific CORESET does not be configured with the search space and RS signals (such as channel state information reference signal (CSI-RS), synchronization signal and PBCH block (SSB), or sounding reference signal (SRS), etc.) and/or the long-periodic/aperiodic configuration of the broadcast signal corresponding to the turned-off TRP. Each configuration parameter group may be associated with a BWP configuration: (1) The associated BWP is the currently activated BWP, which indicates that the configuration information is switched on the current BWP after the first signaling is enabled; (2) The associated BWP is another BWP, and the associated BWP is switched after the first signaling is enabled.

Step 3: in case that the network side device triggers switching a TRP/a group of TRPs (first target TRP) on a CC/a group of CCs from an ON state to an OFF state (from an OFF state to an ON state), the network side device transmits a dynamic signaling (i.e., the first signaling) (group-common control PDCCH, non-scheduling PDCCH, scheduling PDCCH and/or media access control-control element (MAC-CE) to explicitly (such as bitmap or codepoint or a joint of bitmap and codepoint) indicate the information of the turned-off (or turned-on) TRP associated with a CC/a group of CCs served by a UE/a group of UEs.

Step 4: the UE receiving the first signaling triggers switching to the associated high layer configuration parameter group (i.e., target resource set) based on the TRP state indication in the first signaling. If the BWP associated with the switched target resource set is the currently activated BWP, after the first signaling is enabled, the UE switches to the target resource set associated with the switched TRP state on the current BWP, otherwise after the first signaling is enabled, the UE is switched to the associated BWP and is then switched to the associated target resource set.

If the first signaling indicates that multiple TRPs /multiple groups of TRPs (multiple first target TRPs) are turned off simultaneously, the target resource sets corresponding to all turned-off TRPs/TRP groups (multiple first target TRPs) are enabled simultaneously: the UE does not monitor, based on the associated target resource set, the PDCCH on the turned-off TRP-specific CORESET performs long-periodic/aperiodic measurement of the associated reference signal (RS) resources and/or triggers pre-configured events, etc.

Content of a signaling for dynamically indicating ON/OFF of a TRP associated with a carrier in case that a group of UEs is configured with 2 groups of CCs, CC0 is associated with TRP0/TRP group 0, TRP1/TRP group 1; and CC1 is associated with TRP1/TRP group 1, TRP2/TRP group 1, TRP3/TRP group 3 is taken as an example.

(1) Bitmap indicates dynamic ON/OFF of a first target TRP associated with a carrier.

(1.1) Indication method for ON/OFF of a single first target TRP associated with a carrier/a group of carriers.

The network side device configures a 5-bit TRP state indicator field for this group of UEs, corresponding to the state of each TRP/group of TRPs associated with two CCs/group of CCs, and RRC pre-configures 5 configuration information groups to correspond to updated configuration information after each/group of turned-off TRPs on each CC/group of CCs.

**[0469]** [01011] - TRP0/TRP group 0 associated with CC0/CC group 0 is turned off, and TRP1/TRP group 1 is turned on; TRP1/TRP group 1 associated with CC1 is turned off, and TRP2/TRP group 2 and TRP3/TRP group 3 are turned on, the reference signal resource set 0 and group 2 are triggered to be enabled.

(1.2) Two-level bit field indication

The network side device configures a 1-bit carrier indicator field and a 2-/3-bit TRP state indicator field for this group of UEs (if the carrier indicator field indicates CC0/CC group 0, the TRP state indicator field is 2 bits, otherwise, the TRP state indicator field is 3 bits), respectively indicating a target CC and a state of a TRP associated with the target CC. At the same time, RRC pre-configures 5 configuration information groups to correspond to updated configuration information after each/group turned-off TRP on each CC/group of CCs.

[0, 01] -TRP0 associated with CC0 is turned off, reference signal resource set 0 is triggered to be enabled.

[1,100] -TRP2 and TRP3 associated with CC1 are turned off, reference signal resource set 3 and reference signal resource set 4 are triggered to be enabled.

(1.3) Indicated turned-on/turned -off TRP (group) index applies to all CCs.

CC0 is associated with TRP0 and TRP1; CC1 is associated with TRP0, TRP1 and TRP2. The network side device configures a 3-bit TRP state indicator field for this group of UEs, corresponding to the state of each TRP associated with two CCs, and RRC pre-configures 3 configuration information groups corresponding to updated configuration information after each turned-off TRP on two CCs.

[001] -TRP0 and TRP1 associated with CC0 and CC1 are turned off, reference signal resource set 0 and reference signal resource set 1 are triggered to be enabled.

(2) Codepoint indicates dynamic ON/OFF of a TRP associated with a carrier.

(2.1) Two-level bit field indication

The network side device configures a 1-bit carrier indicator field and a 2-bit TRP state indicator field for this group of UEs to indicate a target CC and the state of the TRP associated with the target CC respectively, and RRC pre-configures 5 configuration information groups corresponding to updated configuration information after each/group of turned-off TRPs on each CC/group of CCs.

[0, 0] -TRP0 associated with CC0 is turned off, and state-associated all reference signal resource sets are triggered to be enabled.

(2.2) Indicated turned-on/turned -off TRP (group) index applies to all CCs.

CC0 is associated with TRP0 and TRP1; CC1 is associated with TRP0, TRP1 and TRP2. The network side device configures a 3-bit TRP state indicator field for this group of UEs, corresponding to the state of each TRP associated with two CCs, and RRC pre-configures 3 configuration information groups corresponding to updated configuration information after each turned-off TRP on two CCs.

[00] -TRP0 associated with CC0 and CC1 is turned on/off, and state-associated all reference signal resource sets are triggered to be enabled.

[0] -all TRPs on all activated CCs are turned off, and state-associated all reference signal resource sets are triggered to be enabled.

[1] -all TRPs on all activated CCs are turned on, and state-associated all reference signal resource sets are triggered to be deactivated.

If the TRP indicator field length is defined as 1 bit, it means that the ON/OFF state of all associated TRPs on all activated CCs is indicated simultaneously, for example:

[0] -all TRPs associated with all activated CCs are all turned off; [1] -all TRPs associated with all activated CCs are all turned on;

(3) Joint indication of bitmap and codepoint

(3.1) Bitmap indicates a CC or a group of CCs, codepoint indicates a or a group of associated turned on/off TRPs.

[0, 01] -TRP0 associated with CC0 is turned off, and state-associated all reference signal resource sets are triggered to be enabled.

(3.2) Codepoint indicates a CC or a group of CCs and bitmap indicates a or a group of associated turned on/off TRPs.

[10, 0] -TRP0 associated with CC0 is turned off/on, and state-associated all reference signal resource sets are triggered to be enabled.

In some embodiments, the first signaling is used to indicate N reference signal resource sets, different reference signal resource sets correspond to ON/OFF states of different TRPs, and the N reference signal resource sets include the target resource set, where N is a positive integer greater than or equal to 1.

In some embodiments, RRC may define M (M>1) reference signal resource sets.

In some embodiments, each group of configuration information corresponds to a TRP associated with a carrier/a group of carriers that enters an OFF state or an ON state.

In some embodiments, the first signaling may indicate N reference signal resource sets (N is less than or equal to M) among M reference signal resource sets. Different reference signal resource sets correspond to the ON/OFF states of different TRPs respectively. The UE may determine the target resource set that needs to be switched therefrom (for example, if the configuration indicated by the first signaling is different from the current configuration, it may be considered that switching is required), and further determine the target ON/OFF state of the first target TRP corresponding to the target resource set.

In some embodiments, the first signaling contains a bitmap and/or a codepoint.
where the first signaling meets any of the following:

bits of the bitmap being respectively used to indicate activated states corresponding to one or more reference signal resource sets, where the reference signal resource set corresponding to the activated state is the target resource set;

a value corresponding to the codepoint being used to indicate the target resource set;

the bitmap being used to indicate the first target carrier, and a value corresponding to the codepoint being used to indicate the target resource set; or

a value corresponding to the codepoint being used to indicate the first target carrier, and the bitmap being used to indicate the target resource set.

In some embodiments, the first signaling may indicate the switching of the target resource set through a bitmap or a codepoint or a joint of a bitmap and a codepoint.

For example, the bitmap may indicate: N bits correspond to N reference signal resource sets /groups of reference signal resource sets, bit0: deactivation of a reference signal resource set, bit1: activation of a reference signal resource set.

For example, the codepoint may indicate: a value of the codepoint indicates used/deactivated a TRP or a group of TRPs corresponding to a reference signal resource set or a group of reference signal resource sets.

For example, joint indication of the bitmap and codepoint: a configuration (i.e., target resource set) that a TRP/a group of TRPs (i.e., the first target TRP) on a carrier/group of carriers corresponding to a reference signal resource set/a group of reference signal resource sets enters an OFF state is configured on the carrier/group of carriers.

For example, the bitmap may indicate a carrier/a group of carriers, and the codepoint indicates the corresponding enabled/deactivated target resource set.

For example, the codepoint may indicate a CC/a group of CCs, and the bitmap indicates the corresponding enabled/deactivated target resource set.

In some embodiments, the first signaling may include an associated information indicator field, which may define a high layer configuration information group; for example:

bitmap indicates the target resource set switching, and the UE switches the target resource set predefined by the high layer based on the indication;

codepoint indicates the target resource set index to trigger the UE to switch to the target resource set predefined by the high layer.

In an embodiment, the UE may indicate the dynamic ON/OFF of a TRP (the target ON/OFF state of the first target TRP) associated with a carrier/a group of carriers based on the target resource set switching indicated by the first signaling.

Step 1: the network side device configures N configuration information groups based on a quantity of multi-TRPs on the CC and the possible turned-off TRP, such as Group RS Resource Group0 to Group RS Resource Group N, and each RS Resource Group corresponds to a TRP/a group of TRPs associated with a CC/a group of CCs and no SS is configured on at least one of long-period/aperiodic following: a RS signal (e.g., CSI-RS, SSB, or SRS), a broadcast signal, or a TRP /a group of TRPs-specific CORESET .

Step 2: in case of triggering that a TRP/a group of TRPs associated with a CC/a group of CCs switches between on/OFF states, the network side device transmits a first signaling to indicate the UE to switch/deactivate the associated RS Resource Group ID.

Step 3: after receiving the indication of the first signaling, the UE triggers skipping monitoring of the PDCCH on the CORESET dedicated to the turned-off TRP within configuration information group, and updates the measurement of the associated RS and/or broadcast signal resources.

Content of a signaling for dynamically indicating ON/OFF of a TRP associated with a carrier in case that a group of UEs is configured with 2 CCs/2 groups of CCs (all CCs including PCell are divided into two groups), CC0 is associated with TRP0/TRP group 0, TRP1/TRP group 1; and CC1 is associated with TRP1/TRP group 1, TRP2/TRP group 1, TRP3/TRP group 3 is taken as an example and the RRC configuration is described in detail as follows.

RS Resource Group 0: TRP0/TRP group 0 associated with CC0 is configured with long-periodic/aperiodic RS signals and/or broadcast signal resource configuration, and the CORESET specifically corresponding to TRP0/TRP group 0 on CC0 is normally configured with SS; another TRPs are normally configured with reference signals/broadcast signals, and the CORESET specifically corresponding to CC is normally configured with SS;

RS Resource Group 1: TRP1/TRP group 1 associated with CC0 is configured with long-periodic/aperiodic RS signals and/or broadcast signal resource configuration, and the CORESET corresponding to TRP1/TRP group 1 on CC0 is normally configured with SS; another TRPs are normally configured with reference signals/broadcast signals, and the CORESET specifically corresponding to CC is normally configured with SS;

RS Resource Group 2: TRP1/TRP group 1 associated with CC1 is configured with long-periodic/aperiodic RS signals and/or broadcast signal resource configuration, and the CORESET specifically corresponding to TRP1/TRP group 1 on CC1 is normally configured with SS; another TRPs are normally configured with reference signals/broadcast signals, and the CORESET specifically corresponding to CC is normally configured with SS.

RS Resource Group 3: TRP2/TRP group 2 associated with CC1 is configured with long-periodic/aperiodic RS signals and/or broadcast signal resource configuration, and the CORESET specifically corresponding to TRP2/TRP group 2 on CC1 is normally configured with SS; another TRPs are normally configured with reference signals/broadcast signals, and the CORESET specifically corresponding to CC is normally configured with SS;

RS Resource Group 4: TRP3/TRP group 3 associated with CC1 is configured with long-periodic/aperiodic RS signals and/or broadcast signal resource configuration, and the CORESET specifically corresponding to TRP3/TRP group 3 on CC1 is normally configured with SS; another TRPs are normally configured with reference signals/broadcast signals, and the CORESET specifically corresponding to CC is normally configured with SS.

The network side device transmits, based on an ON/OFF state of a TRP associated on a carrier, the first signaling to indicate enabled/deactivated RS Resource Group ID through a bitmap or a codepoint or joint of a bitmap and a codepoint to trigger the UE to perform associated behaviors.

(1) Bitmap indication method

**[0512]** [00111] -RS Resource Group 0 and RS Resource Group 1 are enabled, the UE is triggered to update behaviors based on the enabled configuration, such as: measuring reference signals, long-periodic monitoring of associated CORESET/SS;

(2) Codepoint indication method

[000] -RS Resource Group 0 is enabled/deactivated;

(3) Joint indication method:

(3.1) Codepoint indicates a target CC/CC group, and bitmap indicates the configuration information group associated with CC;

[0, 01] -RS Resource Group 0 associated with CC0 is enabled, the UE is triggered to update behaviors based on the enabled configuration, such as: measuring reference signals, long-periodic monitoring of associated CORESET/SS;

(3.2) Bitmap indicates a target CC/CC group, and codepoint indicates the configuration information group associated with CC

[10, 0] -RS Resource Group 10 associated with CC0 is enabled, the UE is triggered to update behaviors based on the enabled configuration, such as: measuring reference signals, long-periodic monitoring of associated CORESET/SS

In some embodiments, the first information or the second information contains one or more of the following:

quasi co-location (QCL) information;

a transmission configuration indication (TCI) state; or

a signaling transmission location of the first signaling.

In some embodiments, the first signaling may indirectly and dynamically indicate the target ON/OFF state of the first target TRP, such as the parameter state associated with a carrier/a group of carriers through implicit information (first information).

In some embodiments, the first signaling may indirectly and dynamically indicate the target resource set through implicit information (second information).

In some embodiments, the implicit information (first information or second information) may be at least one of the following:

TRP-specific information, carrier-specific information, or a signaling transmission location of the first signaling, or quasi co-location QCL information (such as transmission configuration indication (TCI) state).

For example, ON/OFF of a TRP associated with a/group of carriers (the target ON/OFF state of the first target TRP) may be indicated based on the QCL information and the signaling transmission location, where the QCL information is associated with the TRP, for example, TCI state 0 is associated with TRP 1, and TCI state 1 is associated with TRP 2.

In some embodiments, RRC may configure a reference signal resource sets for an OFF state of each TRP/each group of TRPs, and the reference signal resource set includes at least one of the following: RS configuration information, broadcast signal configuration information, or CORESET configuration information, which respectively corresponds to the configuration update (i.e., resource switching) after a TRP/a group of TRPs are turned off.

In some embodiments, the association relationship between the reference signal resource set and the TRP may be predefined and/or determined by including TRP explicit information, such as TRP/TRP group index in the configuration information group.

In some embodiments, the signaling transmission location (such as carrier location) of the first signaling and QCL information jointly indicate the first target TRP associated with the carrier. For example, the first signaling is transmitted on a carrier associated with the turned-on/off first target TRP or transmitted on a carrier scheduling the signaling (CIF field indicates the target carrier), and the QCL information in the first signaling indicates ON/OFF of a first target TRP/a group of first target TRPs associated with a carrier/a group of carriers.

In some embodiments, the target ON/OFF state of the first target TRP, such as the parameter state associated with a carrier/a group of carriers may be indicated based on the signaling transmission location of the first signaling.

In some embodiments, RRC may configure P (P>1) groups of reference signal resource sets (Group) for each TRP/each group of TRPs, and the reference signal resource set includes at least one of the following: RS configuration information, broadcast signal configuration information, or CORESET configuration information, which respectively corresponds to ON/OFF of a TRP/a group of TRPs.

In some embodiments, the relationship between the reference signal resource set and the carrier associated with the TRP may be predefined and/or indicated by TRP explicit information included in the reference signal resource set, such as TRP/TRP group index.

In some embodiments, RRC may associate an independent transmission location (which may be called the TRP-specific transmission location) for each/group TRP (for example, in case that the TRP has no specifically distinguishing information, such as the index that uniquely indicates the TRP, or any other situation), such as CORESET or SS, and the network side device may transmit this first signaling at the TRP-specific transmission location on the carrier associated with the first target TRP or the carrier scheduling this carrier to implicitly indicate a TRP/a group of TRPs associated with a carrier is turned on/off (target ON/OFF state of the first target TRP).

In some embodiments, the first signaling may include at least one of the following:

implicit association information of a target carrier, an implicit association information indicator field of a target carrier, implicit association information of the target ON/OFF state of the first target TRP (such as the target ON/OFF state of the first target TRP), or an implicit association information indicator field of the target ON/OFF state of the first target TRP (such as the target ON/OFF state of the first target TRP).

In an embodiment, the implicit association information or the implicit association information indicator field may include specific information of the target ON/OFF state of the first target TRP and/or specific information of the target carrier.

The specific information may be QCL information, such as TCI state;

the specific information may be the signaling transmission location of the first signaling, such as CORESET, SS, or the carrier to which the signaling is transmitted.

In an embodiment, the target ON/OFF state of the first target TRP and/or the target resource set may be indicated based on implicit information. For example, dynamic ON/OFF of a TRP associated with a carrier/a group of carriers is indicated.

Step 1: the network side device predefines specific implicit information such as: signaling transmission location (the signaling is transmitted on a specific carrier or a carrier that schedules the signaling (the CIF indicates the target CC), CORESET/SS, etc.) based on a quantity of TRPs or a group quantity of TRPs associated with all activated CCs that may support multi-TRP transmission.

Step 2: the network side device configures N reference signal resource sets based on a quantity of TRPs or a group quantity of TRPs associated with all activated CCs that may support multi-TRP transmission, corresponding to one or a group of TRPs are turned off and a turned-off TRP-specific CORESET does not be configured with the search space and RS signals (such as channel state information reference signal (CSI-RS), synchronization signal and PBCH block (SSB), or sounding reference signal (SRS), etc.) and/or the long-periodic/aperiodic configuration of the broadcast signal corresponding to the turned-off TRP. Each configuration parameter group may be associated with a BWP configuration: (1) The associated BWP is the currently activated BWP, which indicates that the configuration information is switched on the current BWP to the reference signal resource set after the first signaling is enabled; (2) The associated BWP is another BWP, and the associated BWP is switched after the first signaling is enabled.

Step 3: in case that the network side device triggers switching a TRP/a group of TRPs on a CC/a group of CCs from an ON state to an OFF state (from an OFF state to an ON state), the network transmits a dynamic signaling (group-common control PDCCH, non-scheduling PDCCH, scheduling PDCCH and/or MAC CE and/or specific sequence) to indicate the information of the turned-off (or turned-on) TRP associated with a CC/a group of CCs served by a UE/a group of UEs based on predefined implicit information (signaling transmission location/QCL information and signaling transmission location) .

Step 4: the UE receiving the first signaling triggers switching to the associated reference signal resource set (a high layer configuration parameter) based on the TRP state indication in the first signaling. If the BWP associated with the switched reference signal resource set is the currently activated BWP, after the first signaling is enabled, the UE switches to the reference signal resource set associated with the switched TRP state on the current BWP, otherwise after the first signaling is enabled, the UE is switched to the associated BWP and is then switched to the associated reference signal resource set.

If the first signaling indicates that multiple TRPs /multiple groups of TRPs are turned off simultaneously, the reference signal resource sets corresponding to all turned-off TRPs/TRP groups are enabled simultaneously: the UE does not monitor, based on configurations of the associated reference signal resource sets, the PDCCH on the turned-off TRP-specific CORESET performs long-periodic/aperiodic measurement of the associated RS resources and/or triggers predefined events, etc.

A signaling for dynamically indicating ON/OFF of a TRP associated with a carrier in case that a group of UEs is configured with 2 groups of CCs, CC0 is associated with TRP0/TRP group 0, TRP1/TRP group 1; and CC1 is associated with TRP1/TRP group 1, TRP2/TRP group 1, TRP3/TRP group 3 is taken as an example.

(1) Indicating the on/off of multi-TRP associated with a carrier/a group of carriers based on QCL information and signaling transmission location

The network side device associates a reference signal resource set for a TCI state corresponding to each TRP/a group of TRPs, which represents that the configuration information of this TRP /a group of turned-off TRPs is updated to the reference signal resource set.

The first signaling (CIF indicates the target CC) is transmitted on the signaling transmission carrier or the carrier that schedules the first signaling to implicitly indicate the CC associated with the turned-on/off TRP. In case that a TRP/a group of TRPs on a CC/a group of CCs is turned on/off, the signaling is transmitted on the corresponding CC/CC group and the TCI indicator field indicates the corresponding TRP. After detecting the first signaling, the UE determines the TRP state associated with the CC based on the TCI indication and the location of the carrier transmitting the first signaling, and further updates and switches to the pre-configured parameter group based on the TRP state.

(2) Indicating the on/off of multi-TRP associated with a carrier/a group of carriers based on transmission location

The network side device implicitly associates a piece of specific information (such as CORESET, SS) and a reference signal resource set for each TRP/a group of TRPs, which represents that the configuration of this TRP /a group of turned-off TRPs is updated. The first signaling (CIF indicates the target CC) is transmitted on the first signaling transmission carrier or the carrier that schedules the first signaling to implicitly indicate the CC associated with the turned-on/off TRP. In case that a TRP/a group of TRPs on a CC/a group of CCs is turned on/off, the signaling is transmitted on the corresponding CC/CC group and the TCI indicator field indicates the corresponding TRP. After detecting the first signaling, the UE determines the TRP state associated with the CC based on the TRP-specific information and the location of the carrier transmitting the first signaling, and further updates and switches to the pre-configured parameter group based on the TRP state.

In some embodiments, determining the first signaling includes:

determining a target monitoring configuration corresponding to a target ON/OFF state of a first target transmission/reception point (TRP) and/or corresponding to a target resource set; and

determining the first signaling based on the target monitoring configuration.

In some embodiments, the first signaling may dynamically indicate the target ON/OFF state of the first target TRP and/or the target resource set through a target monitoring configuration (the associated parameter configuration for PDCCH monitoring, such as the dynamic adaptation associated configuration of PDCCH monitoring). For example, a parameter state associated with a carrier/a group of carriers is indicated.

In some embodiments, the first signaling may dynamically indicate a parameter associated with a carrier/a group of carriers is enabled/disabled through a target monitoring configuration (the associated parameter configuration for PDCCH monitoring, such as the dynamic adaptation associated configuration of PDCCH monitoring).

In some embodiments, the target monitoring configuration contains: a given search space set group (SSSG) on a control resource set (CORESET) of the first target TRP; and/or

the target monitoring configuration contains: a given PDCCH skipping step value.

In some embodiments, the first signaling may include an associated information indicator field, which may be a target monitoring configuration, such as PDCCH monitoring adaptation information.

In some embodiments, the first signaling may indicate SSSG switching, and trigger the UE to perform corresponding actions based on an SSSG index and associated information (a reference signal resource set and/or a target ON/OFF state of the first target TRP).

In some embodiments, the first signaling may indicate PDCCH skipping, and trigger the UE to perform corresponding actions based on a skipping step and associated information (a reference signal resource set and/or a target ON/OFF state of the first target TRP).

In some embodiments, a specific SSSG and the PDCCH monitoring period corresponding to of an enabled/disabled state of a reference signal resource set/a group of reference signal resource sets may be configured on the TRP-specific CORESET. If they are not configured, it means skipping monitoring. The network side device may indicate the target resource set associated with a carrier/a group of carriers is enabled/disabled through SSSG switching.

In some embodiments, RRC may configure a specific PDCCH Skipping step value to associate the OFF state of a TRP/a group of TRPs, and indicate the ON/OFF state of the TRP associated with a carrier/a group of carriers through PDCCH skipping step.

In some embodiments, a specific ON/OFF state associated with a TRP/a group of TRPs may be configured on the TRP-specific CORESET, and the SSSG switching may be used to indicate ON/OFF of the TRP associated with a carrier/a group of carriers.

In some embodiments, RRC may configure a specific PDCCH skipping step value, associate the enabled/disabled state of a reference signal resource set/a group of reference signal resource sets, and the network side device may indicate the target resource set associated with a carrier/a group of carriers is enabled/disabled through PDCCH skipping step.

In an embodiment, the first signaling may dynamically indicate the target ON/OFF state of the first target TRP and/or the target resource set through the target monitoring configuration. For example, ON/OFF of a multi-TRP associated with a carrier/a group of carriers is dynamically indicated based on PDCCH monitoring adaption.

(1) Indicating the on/off of multi-TRP associated with a carrier/a group of carriers based on a SSSG switching mode

Similar to the above embodiment, the network side device may associate two SSSGs (SSSG0-regular monitoring; SSSG1-long-period monitoring/skipping monitoring) for CORESET associated with each TRP/a group of TRPs. Each SSSG is associated with a resource group (SSSG0 is associated with CSI-Resource group 0-regular reference signal (such as CSI-RS, SSB, or SRS) and/or broadcast signal configuration; SSSG1 is associated with Resource group 1-long-period/aperiodic reference signal and/or broadcast signal configuration). In case that the network side device triggers a TRP/a group of TRPs (first target TRP) to switch between ON/OFF states, the first signaling transmits DCI format 2_0 on the CORESET associated with the first target TRP, the TRP/a group of TRPs are switched between SSSG0 and SSSG1 through a SearchSpaceSwitchTrigger indicator field to implicitly indicate transition of ON/OFF states of the first target TRP, and triggers the UE to perform resource group switching (i.e., switching to the target resource set).

(2) Indicating the on/off of multi-TRP associated with a carrier/a group of carriers based on a PDCCH Skipping mode

Similar to the above embodiment, the network side device associates two specific PDCCH skipping steps (step0-regular monitoring; step1-long monitoring period/skipping monitoring) for each CORESET associated with each TRP/group. Each step is associated with a resource group (step0 is associated with CSI-Resource group 0-regular reference signal (such as CSI-RS, SSB, or SRS) and/or broadcast signal configuration; step1 is associated with resource group 1-long period/aperiodic reference signal and/or broadcast signal configuration). In case that the network side device triggers a TRP/a group of TRPs (first target TRP) to switch between ON/OFF states, the first signaling is transmitted on the CORESET associated with the TRP to indicate PDCCH Skipping, the TRP/a group of TRPs are switched between step0 and step1 through the PDCCH monitoring adaptation indicator field to implicitly indicate transition of ON/OFF states of the TRP, and triggers the UE to perform resource group switching.

In some embodiments, the method further includes:

retransmitting the first signaling in case that no acknowledge (ACK) information is received at a first location,

where the first location includes a feedback location of hybrid automatic repeat request (HARQ) feedback information of the first signaling.

In some embodiments, the network side device may configure the first signaling to support a HARQ-ACK feedback mechanism.

In some embodiments, the HARQ feedback information from UE may trigger the retransmission of the first signaling.

In some embodiments, the network side device may indicate a HARQ-ACK feedback location for the signaling, and the network side device retransmits the signaling if it does not receive ACK information at the indicated ACK/NACK feedback location.

In some embodiments, the UE may support HACK feedback of the first signaling based on predefining.

In some embodiments, the UE may support ACK/NACK feedback based on the predefining and feed back ACK/NACK based on the associated technical feedback mechanism.

In an embodiment, the network side device may choose to support the retransmission of the first signaling or not support the retransmission of the first signaling, where

not supporting the retransmission of the first signaling means: the first signaling is transmitted once in case that the on/off states of TRP is transitioned, and the network side device assumes that the UE may receive it correctly by default, and updates the corresponding off/on behavior based on the TRP state; supporting the retransmission of the signaling means: the network side device carries/predefines an ACK/NACK feedback location in the first signaling, and the UE correctly receives it and then feeds back ACK/NACK information at the location indicated by the first signaling. After the network side device does not receive the ACK information, it continues to transmit the first signaling until the UE receives it correctly or the maximum number of retransmissions is reached.

In some embodiments, the first signaling is used for further indicating one or more of the following:

a target tracking reference signal (TRS) measurement resource set;

triggering a first target transmission/reception point (TRP) to initiate a tracking reference signal (TRS) measurement;

triggering a second target transmission/reception point (TRP) to initiate a tracking reference signal (TRS) measurement, where a carrier corresponding to the second target TRP supports a multi-transmission/reception point (MTRP) transmission;

triggering a third target transmission/reception point (TRP) to initiate a tracking reference signal (TRS) measurement, where a pre-configured aperiodic TRS on a carrier corresponding to the third target TRP is enabled;

triggering a transmission/reception point (TRP) on a second target carrier to initiate a tracking reference signal (TRS) measurement, where a pre-configured aperiodic TRS on the second target carrier is enabled; or

triggering a predefined event.

In some embodiments, the first signaling may also trigger an aperiodic TRS and/or a predefined event.

For example, RRC configure TRS resources for each carrier/a group of carriers and triggers the aforementioned TRS resources to be enabled by indicating that the associated reference signal resource set changes from disabled to enabled through the first signaling.

For example, the first signaling may indicate a change in the ON/OFF state of the TRP associated with the carrier or a configuration change corresponding to the associated reference signal resource set, trigger a predefined event, such as an A2 or A4 or A6 measurement event.

In an embodiment, the first signaling may trigger an aperiodic TRS and/or a predefined event.

Step 1: RRC defines/preconfigures N groups of TRS measurement resource sets, configures predefined events, such as A2 or A4 or A6 measurement events for TRS measurement corresponding to N TRPs/N groups of turned-on TRPs.

Step 2: in case that a new TRP on a carrier supporting MTRP transmission is turned on/a previously turned-off TRP is turned on again or a turned-on TRP is turned off, the first signaling is transmitted to indicate the information of turned-on/turned-off TRP.

Step 3: in case that the UE successfully receives ON information of the turned-off TRP, the preconfigured aperiodic TRS on this carrier is enabled, and the UE performs TRS measurement and reporting based on the preconfigured resources. In case that the UE successfully receives the turned-on TRP is turned off, a predefined event, such as A2 or A4 or A6 measurement event, is triggered.

In some embodiments, the specific content included in the first signaling may be determined based on any of the aforementioned embodiments.

In some embodiments, the first signaling includes one or more of the following:
a group-common control physical downlink control channel (PDCCH), a non-scheduling physical downlink control channel (PDCCH), a scheduling physical downlink control channel (PDCCH), a media access control-control element (MAC-CE), or a specific sequence.

In some embodiments, the non-scheduling DCI may be a non-scheduling DCI in the related art such as DCI 2_0 to DCI 2_6, DCI1_1/2 and/or a newly defined DCI format.

In some embodiments, the group-common control PDCCH includes one or more of the following:

a user equipment (UE)-specific PDCCH, a user equipment (UE) group-specific PDCCH, or a cell-specific PDCCH.

In some embodiments, the UE-specific PDCCH may include UE specific.

In some embodiments, the UE group-specific PDCCH may include UE group specific.

In some embodiments, the cell-specific PDCCH may include cell specific.

In an embodiment, the target ON/OFF state of the first target TRP and/or the target resource set, such as dynamic ON/OFF of a TRP associated with a carrier/a group of carriers, may be dynamically indicated based on joint of explicit information and implicit information.

(1) Dynamic ON/OFF of a TRP associated with a carrier/a group of carriers may be jointly indicated using indication method of the first signaling provided in any of the above embodiments. A target CC (turned-on/off TRP) is indicated through explicit information, and a TRP associated with CC (target CC) is indicated through implicit information to trigger the UE to perform predefined parameter configuration group switching.

(2) The TRP indication domain may be defined: TRP is indicated in bitmap or codepoint mode.

A turned-on/off carrier/ a group of turned-on/off carriers may be indicated through a first signaling transmission location. The first signaling (including implicit information) is transmitted on a carrier associated with the turned-on/off TRP or the carrier that schedules the first signaling (the CIF field indicates this carrier);

the implicit information indicates a parameter/a group of parameters (i.e., the target ON/OFF state of the first target TRP and/or the target resource set), and the explicit information indicates an associated carrier/a group of associated carriers.

For example, implicit information may be TRP-specific information, such as QCL information and/or the signaling transmission location (CORESETpoolindex/SS) of the first signaling, to implicitly indicate the TRP associated with the carrier is enabled/disabled (i.e., the target ON/OFF state of the first target TRP and/or the target resource set).

For example, the carrier indicator field is defined: bitmap or codepoint mode to indicate enabled/disabled parameters (i.e., the target ON/OFF state of the first target TRP and/or the target resource set) for the TRP associated with the carrier.

In the embodiments of the present application, in case that the TRP associated with a carrier is turned on/off, the first signaling is transmitted to indicate information of the turned-on/off TRP on a carrier/a group of carriers (the target ON/OFF state of the first target TRP) and/or the target resource set to trigger the ON/OFF state of the TRP predefined by the network side device to be in one-to-one association with the reference signal resource set, the UE updates, based on the first signaling, behaviors, such as long period measurement /no measurement of reference signals and/or broadcast signals and/or PDCCH skipping on some CORESETs.

For example, the first signaling triggers/indicates that all carriers associated with a TRP are ON/OFF simultaneously (for example, 1 bit indicates 1 TRP associated with multiple carriers performs ON/OFF operations, and the characteristic at this time is that all carriers corresponding to the TRP are turned on/off simultaneously).

For example, in case that the first signaling triggers/indicates a TRP to perform an OFF operation, all carriers associated with the TRP are OFF simultaneously; in case that the dynamic signaling triggers/indicates a TRP to perform a ON operation, the first carrier set associated with the TRP performs a ON operation, and the second carrier set performs an OFF operation.

For example, in case that the first signaling triggers/indicates a TRP to perform ON/OFF operations, the first carrier set associated with the TRP performs a ON operation, and the second carrier set performs an OFF operation.

This solution provides the first signaling for dynamically indicating ON/OFF of the TRP associated with a carrier or a group of carriers. In the multi-TRP transmission in the carrier aggregation scenario, in case that only one or part of the TRP serving on some carriers may ensure reliability and throughput transmission, the remaining TRPs are turned off to save base station energy consumption, and the signaling is transmitted to indicate the UE to trigger the energy-saving behavior of UE: skipping monitoring/long-period monitoring the PDCCH and update reference signal (such as SSB or CSI-RS) measurement behavior on some search spaces, which may save energy consumption on both the base station side and the UE side. In case that the TRP that needs to be turned off is turned on again to ensure service, the first signaling is transmitted to restore the original UE behavior under multi-TRP transmission to ensure high-reliability transmission. While ensuring high reliability and high-throughput transmission of the system, the energy consumption of the network side and the UE is reduced simultaneously.

The embodiments of the present application may be applied to multi-TRP transmission. If the high layer configures a CORESET that distinguishes TRPs, the UE will always monitor the PDCCH corresponding to the TRP on these configured CORESETs. The base station may turn off some TRPs and transmit a signal to indicate the UE to skip monitoring the Search Space corresponding to the turned-off TRP, and the UE may save unnecessary blind detection power consumption.

The embodiments of the present application may be applied to DCI with CRC scrambled by PS-RNTI (DCP) mechanism. The DCP may wake up the UE to monitor all search spaces on the current BWP. If the UE supports MTRP transmission, the UE will perform monitoring on search spaces corresponding to all TRPs. The UE may select an optimal TRP/link to ensure reliable transmission. At this time, there will be additional energy consumption of the TRP on the base station side and power consumption overhead of the UE side performing PDCCH monitoring at the CORESET position corresponding to these TRPs.

In the embodiments of the present application, the turned-off TRP may not transmit/ transmit reference signals (such as SSB or CSI-RS) for a long period. The UE cannot distinguish the CSI-RS resource configuration of multi-TRP. In case that the base station side turns off a part of the TRP, these TRPs may only maintain the long-period/aperiodic CSI-RS. Through the solution, by carrying the reference signal configuration information associated with the turned-off TRP in the first signaling, the UE may update the CSI-RS measurement behavior of the turned-off TRP to further reduce the power consumption of the UE measuring CSI-RS.

The method for resource determination provided in the embodiment of the present application, the target ON/OFF state of the first target TRP is adjusted by being indicated through the first signaling on the network side, and is switched to a resource reference signal resource set corresponding to the target ON/OFF state of the first target TRP to reduce the energy consumption overhead of the network and the terminal in the communication system while ensuring high reliability and throughput.

The terminal device involved in the embodiments of the present application may be a device that provides voice and/or data connectivity to a user, a handheld device with a wireless connection function, or other processing device connected to a wireless modem. In different systems, the names of the terminal device may be different. For example, in the 5G system, the terminal device may be referred to as a user equipment (UE). A wireless terminal device may communicate with one or more core networks (CNs) via a radio access network (RAN), and the wireless terminal device may be a mobile terminal, such as a mobile phone (or referred to as a cellular phone) and a computer with mobile terminal device, e.g., a portable mobile device, a pocket-sized mobile device, a handheld mobile device, a computer-built mobile device or a vehicle-mounted mobile device, which exchange language and/or data with the radio access network. For example, a personal communication service (PCS) phone, a radio phone, a session initiated protocol (SIP) phone, a wireless local loop (WLL) station, a personal digital assistant (PDA) and other devices. A wireless terminal device may also be referred to as a system, a subscriber unit, a subscriber station, a mobile station, a mobile, a remote station, an access point, a remote terminal, an access terminal, a user terminal, a user agent, and a user device, which are not limited in the embodiments of the present application.

The network device involved in the embodiments of the present application may be a base station, and the base station may include multiple cells providing services for a terminal. Depending on specific application scenarios, the base station may also be referred as to an access point, or may be a device in the access network that communicates with a wireless terminal device through one or more sectors on the air interface, or other names. The network device may be used to mutually exchange received air frames with Internet Protocol (IP) packets, and act as a router between a wireless terminal device and a rest part of the access network, and the rest part of the access network may include an IP communication network. The network device may also coordinate attribute management for an air interface. For example, the network device involved in the embodiments of the present application may be a base transceiver station (BTS) in a global system for mobile communications (GSM) or a code division multiple access (CDMA), may also be a node B in a wide-band code division multiple access (WCDMA), may also be an evolutional node B (eNB or e-Node B) in a long term evolution (LTE) system, a 5G base station (gNB) in 5G network architecture (next generation system), may also be a Home evolved Node B (HeNB), a relay node (relay node), a femto, a pico base station (pico), etc., which are not limited in the embodiments of the present application. In some network structures, a network device may include a centralized unit (CU) node and a distributed unit (DU) node, and the centralized unit and the distributed unit may also be geographically separated.

Multi-input multi-output (MIMO) transmission may be performed between the network device and the terminal device using one or more antennas and the MIMO transmission may be single user MIMO (SU-MIMO) or multiple user MIMO (MU-MIMO). According to the form and number of antenna combinations, MIMO transmission may be 2D-MIMO, 3D-MIMO, FD-MIMO, or massive-MIMO, and may also be diversity transmission, precoding transmission, or beamforming transmission.

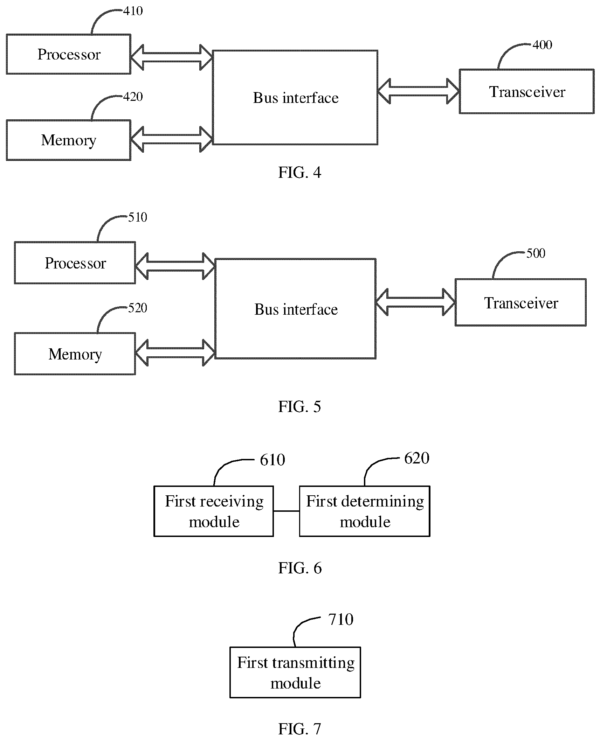

FIG. 4 is a schematic structural diagram of a second communication device according to an embodiment of the present application. As shown in FIG. 4, the second communication device includes a memory 420, a transceiver 400, and a processor 410.

The memory 420 is configured to store a computer program; the transceiver 400 is configured to send and receive data under the control of the processor; the processor 410 is configured to read the computer program in the memory 420 and perform the following operations:

transmitting a first signaling, where the first signaling is used to indicate a target ON/OFF state of multiple transmission resources.

In an embodiment, the transceiver 400 is used for receiving and transmitting data under control of the processor 410.

In FIG. 4, a bus architecture may include any number of interconnected buses and bridges, which are linked together through various circuits of one or more processors represented by the processor 410 and one or more memories represented by the memory 420. The bus architecture may also link together various other circuits, such as peripherals, voltage regulators, and power management circuits, which are well known in the art, and therefore will not be further described in the present application. The bus interface provides an interface. The transceiver 400 may include multiple elements, i.e., include a transmitter and a receiver, units for providing communication with various other devices over transmission media including wireless channels, wired channels, fiber optic cables, and the like. The processor 410 is responsible for managing the bus architecture and general processing, and the memory 420 may store data used by the processor 410 when performing operations.

The processor 410 may be a central processing unit (CPU), an application specific integrated circuit (ASIC), a field-programmable gate array (FPGA), or a complex programmable logic device (CPLD), the processor may also use a multi-core architecture.

In some embodiments, the target resource set is associated with a target bandwidth part (BWP).

In some embodiments, the transmission resource is a frequency domain transmission resource, or a resource associated with a frequency domain transmission resource; and the transmission resource is associated with a first target transmission/reception point (TRP).

In some embodiments, the frequency domain transmission resource is a carrier.

In some embodiments, the first signaling is used to indicate a target ON/OFF state of multiple transmission resources associated with the first target TRP.

In some embodiments, the first signaling is used to indicate switching an ON/OFF state of multiple transmission resources associated with a first target TRP to the target ON/OFF state in case that the first target TRP performs ON/OFF state switching.

In some embodiments, the first signaling is used to indicate switching an ON/OFF state of a first transmission resource set among the multiple transmission resources to the target ON/OFF state and an ON/OFF state of a second transmission resource set among the multiple transmission resources to a first ON/OFF state, in case that a first target transmission/reception point (TRP) performs ON/OFF state switching, where the first ON/OFF state is different from the target ON/OFF state.

In some embodiments, the processor 410 is used for:

dividing the multiple transmission resources into multiple transmission resource groups;

the first signaling being used to indicate a target ON/OFF state corresponding to each of the multiple transmission resource groups.

In some embodiments, the first signaling is used to indicate the target resource set and/or the target ON/OFF state of the first target TRP includes: where the target resource set includes a reference signal resource set associated with the target ON/OFF state of the first target TRP.

In some embodiments, the target resource set is associated with a target bandwidth part (BWP).

In some embodiments, the first signaling is used for one or more of the following:

directly indicating the target ON/OFF state of the first target TRP, a reference signal resource set associated with the target ON/OFF state of the first target TRP being the target resource set; or

directly indicating the target resource set, and an ON/OFF state of a TRP associated with the target resource set being the target ON/OFF state of the first target TRP; or

indirectly indicating the target ON/OFF state of the first target TRP through first information, the first information corresponding to the target ON/OFF state of the first target TRP, a reference signal resource set associated with the target ON/OFF state of the first target TRP being the target resource set; or

indirectly indicating the target resource set through second information, the second information corresponding to the target resource set, an ON/OFF state of a TRP associated with the target resource set being the target ON/OFF state of the first target TRP.

In some embodiments, the first signaling contains a first indicator field and/or a second indicator field; where the first signaling meets one or more of the following:

the first indicator field being used to indicate the target ON/OFF state of the first target TRP;

the first indicator field being used to indicate the target resource set;

the first indicator field being used to indicate the target ON/OFF state of the multiple transmission resources;

the second indicator field being used to indicate the target ON/OFF state of the first target TRP;

the second indicator field being used to indicate the target ON/OFF state of the multiple transmission resources; or

the second indicator field being used to indicate the target resource set.

In some embodiments, the first signaling contains a bitmap and/or a codepoint.
where the first signaling meets one or more of the following:

the bitmap being used to indicate the target ON/OFF state of the first target TRP;

the bitmap being used to indicate the target resource set;

the codepoint being used to indicate the target ON/-OFF state of the first target TRP;

the codepoint being used to indicate the target resource set;

the bitmap being used to indicate an activate state corresponding to each of one or more reference signal resource sets;

the codepoint being used to indicate an activate state corresponding to each of one or more reference signal resource sets;

the bitmap being used to indicate the target ON/OFF state of the multiple transmission resources; or

the codepoint being used to indicate the target ON/-OFF state of the multiple transmission resources.

In some embodiments, the first signaling is used to indicate N reference signal resource sets, different reference signal resource sets correspond to ON/OFF states of different TRPs, and the N reference signal resource sets include the target resource set, where N is a positive integer greater than or equal to 1.
In some embodiments, the first information or the second information contains one or more of the following:

quasi co-location (QCL) information;

a transmission configuration indication (TCI) state; or

a signaling transmission location of the first signaling.

In some embodiments, the first signaling includes:

a target monitoring configuration corresponding to a target ON/OFF state of a first target transmission/reception point (TRP) and/or corresponding to a target resource set.
In some embodiments, the target monitoring configuration contains: a given search space set group (SSSG) on a control resource set (CORESET) of the first target TRP; and/or
the target monitoring configuration contains: a given PDCCH skipping step value.
In some embodiments, the processor 410 is used for:

retransmitting the first signaling in case that no acknowledge (ACK) information is received at a first location,

where the first location includes a feedback location of hybrid automatic repeat request (HARQ) feedback information of the first signaling.

In some embodiments, the first signaling is used for further indicating one or more of the following:

a target tracking reference signal (TRS) measurement resource set;

triggering a first target transmission/reception point (TRP) to initiate a tracking reference signal (TRS) measurement;

triggering a second target transmission/reception point (TRP) to initiate a tracking reference signal (TRS) measurement, where a carrier corresponding to the second target TRP supports a multi-transmission/reception point (MTRP) transmission;

triggering a third target transmission/reception point (TRP) to initiate a tracking reference signal (TRS) measurement, where a pre-configured aperiodic TRS on a carrier corresponding to the third target TRP is enabled;

triggering a transmission/reception point (TRP) on a second target carrier to initiate a tracking reference signal (TRS) measurement, where a pre-configured aperiodic TRS on the second target carrier is enabled; or

triggering a predefined event.

In some embodiments, the first signaling includes one or more of the following:
a group-common control physical downlink control channel (PDCCH), a non-scheduling physical downlink control channel (PDCCH), a scheduling physical downlink control channel (PDCCH), a media access control-control element (MAC-CE), or a specific sequence.

In some embodiments, the group-common control PDCCH includes one or more of the following:
a user equipment (UE)-specific PDCCH, a user equipment (UE) group-specific PDCCH, or a cell-specific PDCCH.

It should be noted here that the above-mentioned second communication device according to the embodiments of the present application may implement all the method steps implemented by the above-mentioned method embodiments performed by the second communication device (a network side device), and may achieve the same effect. The same parts and beneficial effects as the same method embodiments are not repeated here.

FIG. 5 is a schematic structural diagram of a first communication device according to an embodiment of the present application. As shown in FIG. 5, the first communication device includes a memory 520, a transceiver 500, and a processor 510.

The memory 520 is used for storing a computer program; the transceiver 500 is used for receiving and transmitting data under control of the processor; the processor 510 is used for reading the computer program in the memory 520 and performing the following operations:

receiving a first signaling; and

determining, based on the first signaling, a target ON/OFF state of multiple transmission resources.

In an embodiment, the transceiver 500 is used for receiving and transmitting data under control of the processor 510.

In FIG. 5, a bus architecture may include any number of interconnected buses and bridges, which are linked together through various circuits of one or more processors represented by the processor 510 and one or more memories represented by the memory 520. The bus architecture may also link together various other circuits, such as peripherals, voltage regulators, and power management circuits, which are well known in the art, and therefore will not be further described in the present application. The bus interface provides an interface. The transceiver 500 may include multiple elements, i.e., include a transmitter and a receiver, units for providing communication with various other devices over transmission media including wireless channels, wired channels, fiber optic cables, and the like. For different user equipment, a user interface 530 may be an interface capable of externally or internally connecting the required device, and the connected device includes, but not limited to, a keypad, a display, a speaker, a microphone, a joystick, and the like.

The processor 510 is responsible for managing the bus architecture and general processing, and the memory 520 may store data used by the processor 510 when performing operations.

Alternatively, the processor 510 may be a central processing unit (CPU), an application specific integrated circuit (ASIC), a field-programmable gate array (FPGA), or a complex programmable logic device (CPLD). The processor may also use a multi-core architecture.

The processor is configured to perform any one of the methods of the embodiments of the present application based on an obtained executable instruction by calling the computer program stored in the memory. The processor and memory may also be physically separated.

In some embodiments, the transmission resource is a frequency domain transmission resource, or a resource associated with a frequency domain transmission resource; and
the transmission resource is associated with a first target transmission/reception point (TRP).

In some embodiments, the frequency domain transmission resource is a carrier.

In some embodiments, the processor 510 is used for:
determining, based on the first signaling, a target ON/OFF state of multiple transmission resources associated with a first target transmission/reception point (TRP).

In some embodiments, the processor 510 is used for:
determining, based on the first signaling, to switch an ON/OFF state of multiple transmission resources associated with a first target transmission/reception point (TRP) to the target ON/OFF state in case that the first target TRP performs ON/OFF state switching.

In some embodiments, the processor 510 is used for:
determining, based on the first signaling, to switch an ON/OFF state of a first transmission resource set among the multiple transmission resources to the target ON/OFF state and an ON/OFF state of a second transmission resource set among the multiple transmission resources to a first ON/OFF state, in case that a first target transmission/reception point (TRP) performs ON/OFF state switching, where the first ON/OFF state is different from the target ON/OFF state.

In some embodiments, the multiple transmission resources are divided into multiple transmission resource groups; and
the processor 510 is used for:
determining, based on the first signaling, a target ON/OFF state corresponding to each of the multiple transmission resource groups.

In some embodiments, the processor 510 is used for:

determining, based on the first signaling, a target resource set and/or a target ON/OFF state of a first target transmission/reception point (TRP);

where the target resource set includes a reference signal resource set associated with the target ON/-OFF state of the first target TRP.

In some embodiments, the target resource set is associated with a target bandwidth part (BWP); where the target BWP is used to indicate:

> performing resource switching based on the target resource set on the target BWP in case that the target BWP is an active BWP; and
>
> performing resource switching based on the target resource set on the target BWP after switching to the target BWP in case that the target BWP is not an active BWP.

In some embodiments, the processor 510 is used for one or more of the following:

> in case that the first signaling directly indicates the target ON/OFF state of the first target TRP, determining a reference signal resource set associated with the target ON/OFF state of the first target TRP as the target resource set; or
>
> in case that the first signaling directly indicates the target resource set, determining the target ON/OFF state of the first target TRP associated with the target resource set based on the target resource set; or
>
> in case that the first signaling indirectly indicates the target ON/OFF state of the first target TRP through first information, determining, based on the first signaling, the target ON/OFF state of the first target TRP corresponding to the first information, and determining, based on a first target TRP indicated by the target ON/OFF state of the first target TRP, a reference signal resource set associated with the target ON/OFF state of the first target TRP as the target resource set; or
>
> in case that the first signaling indirectly indicates the target resource set through second information, determining, based on the first signaling, the target resource set corresponding to the second information, and determining, based on the target resource set, the target ON/OFF state of the first target TRP associated with the target resource set.

In some embodiments, the first signaling contains a first indicator field and/or a second indicator field; where the first signaling meets one or more of the following:

> the first indicator field being used to indicate the target ON/OFF state of the first target TRP;
>
> the first indicator field being used to indicate the target resource set;

> the first indicator field being used to indicate the target ON/OFF state of the multiple transmission resources;
>
> the second indicator field being used to indicate the target ON/OFF state of the first target TRP;
>
> the second indicator field being used to indicate the target ON/OFF state of the multiple transmission resources; or
>
> the second indicator field being used to indicate the target resource set.

In some embodiments, the first signaling contains a bitmap and/or a codepoint.
where the first signaling meets one or more of the following:

> the bitmap being used to indicate the target ON/OFF state of the first target TRP;
>
> the bitmap being used to indicate the target resource set;
>
> the codepoint being used to indicate the target ON/OFF state of the first target TRP;
>
> the codepoint being used to indicate the target resource set;
>
> the bitmap being used to indicate an activate state corresponding to each of one or more reference signal resource sets;
>
> the codepoint being used to indicate an activate state corresponding to each of one or more reference signal resource sets;
>
> the bitmap being used to indicate the target ON/OFF state of the multiple transmission resources; or
>
> the codepoint being used to indicate the target ON/-OFF state of the multiple transmission resources.

In some embodiments, the first signaling contains N reference signal resource sets, different reference signal resource sets correspond to ON/OFF states of different TRPs, and the N reference signal resource sets include the target resource set, where N is a positive integer greater than or equal to 1.
In some embodiments, the first information or the second information contains one or more of the following:

> quasi co-location (QCL) information;

a transmission configuration indication (TCI) state; or

a signaling transmission location of the first signaling.

In some embodiments, the processor 510 is used for:

determining, based on the first signaling, a target monitoring configuration, where the target monitoring configuration includes an associated parameter configuration for monitoring a physical downlink control channel (PDCCH); and
determining, based on the target monitoring configuration, the target ON/OFF state of the first target TRP corresponding to the target monitoring configuration, and/or the target resource set corresponding to the target monitoring configuration.

In some embodiments, the target monitoring configuration contains: a given search space set group (SSSG) on a control resource set (CORESET) of the first target TRP; and/or
the target monitoring configuration contains: a given PDCCH skipping step value.

In some embodiments, the processor 510 is used for:
transmitting hybrid automatic repeat request (HARQ) feedback information of the first signaling.

In some embodiments, the processor 510 is used for:
determining, based on the first signaling, one or more of the following:

a target tracking reference signal (TRS) measurement resource set;

triggering a first target transmission/reception point (TRP) to initiate a tracking reference signal (TRS) measurement;

triggering a second target transmission/reception point (TRP) to initiate a tracking reference signal (TRS) measurement, where a carrier corresponding to the second target TRP supports a multi-transmission/reception point (MTRP) transmission;

triggering a third target transmission/reception point (TRP) to initiate a tracking reference signal (TRS) measurement, where a pre-configured aperiodic TRS on a carrier corresponding to the third target TRP is enabled;

triggering a transmission/reception point (TRP) on a second target carrier to initiate a tracking reference signal (TRS) measurement, where a pre-configured aperiodic TRS on the second target carrier is enabled; or

triggering a predefined event.

In some embodiments, the first signaling includes one or more of the following:
a group-common control physical downlink control channel (PDCCH), a non-scheduling physical downlink control channel (PDCCH), a scheduling physical downlink control channel (PDCCH), a media access control-control element (MAC-CE), or a specific sequence.

In some embodiments, the group-common control PDCCH includes one or more of the following:
a user equipment (UE)-specific PDCCH, a user equipment (UE) group-specific PDCCH, or a cell-specific PDCCH.

It should be noted here that the above-mentioned first communication device according to the embodiments of the present application may be a user equipment (UE) and implement all the method steps implemented by the above-mentioned method embodiments performed by the second communication device (a UE), and may achieve the same effect. The same parts and beneficial effects as the same method embodiments are not repeated here.

FIG. 6 is a first schematic structural diagram of an apparatus for resource determination according to an embodiment of the present application. As shown in FIG. 6, the apparatus 600 includes:

a first receiving module 610, used for receiving a first signaling; and

a first determining module 620, used for determining, based on the first signaling, a target ON/OFF state of multiple transmission resources.

In some embodiments, the transmission resource is a frequency domain transmission resource, or a resource associated with a frequency domain transmission resource; and
the transmission resource is associated with a first target transmission/reception point (TRP).

In some embodiments, the frequency domain transmission resource is a carrier.

In some embodiments, the first determining module 620 is used for;
determining, based on the first signaling, a target ON/OFF state of multiple transmission resources associated with a first target transmission/reception point (TRP).

In some embodiments, the first determining module 620 is used for;
determining, based on the first signaling, to switch an ON/OFF state of multiple transmission resources associated with a first target transmission/reception point (TRP) to the target ON/OFF state in case that the first target TRP performs ON/OFF state switching.

In some embodiments, the first determining module 620 is used for;
determining, based on the first signaling, to switch an ON/OFF state of a first transmission resource set among the multiple transmission resources to the target ON/OFF state and an ON/OFF state of a second transmission resource set among the multiple transmission resources to a first ON/OFF state, in case that a first target transmission/reception point (TRP) performs ON/OFF state switching, where the first ON/OFF state is different from the target ON/OFF state.

In some embodiments, the multiple transmission resources are divided into multiple transmission resource groups; and
determining, based on the first signaling, the target ON/OFF state of the multiple transmission resources includes:
determining, based on the first signaling, a target ON/OFF state corresponding to each of the multiple transmission resource groups.

In some embodiments, the apparatus further includes:

a second determining module, used for determining, based on the first signaling, a target resource set and/or a target ON/OFF state of a first target transmission/reception point (TRP);

where the target resource set includes a reference signal resource set associated with the target ON/OFF state of the first target TRP.

In some embodiments, the target resource set is associated with a target bandwidth part (BWP);
where the target BWP is used to indicate:

performing resource switching based on the target resource set on the target BWP in case that the target BWP is an active BWP; and

performing resource switching based on the target resource set on the target BWP after switching to the target BWP in case that the target BWP is not an active BWP.

In some embodiments, the first determining module 620 is used for one or more of the following:

in case that the first signaling directly indicates the target ON/OFF state of the first target TRP, determining a reference signal resource set associated with the target ON/OFF state of the first target TRP as the target resource set; or

in case that the first signaling directly indicates the target resource set, determining the target ON/OFF state of the first target TRP associated with the target resource set based on the target resource set; or

in case that the first signaling indirectly indicates the target ON/OFF state of the first target TRP through first information, determining, based on the first signaling, the target ON/OFF state of the first target TRP corresponding to the first information, and determining, based on a first target TRP indicated by the target ON/OFF state of the first target TRP, a reference signal resource set associated with the target ON/OFF state of the first target TRP as the target resource set; or

in case that the first signaling indirectly indicates the target resource set through second information, determining, based on the first signaling, the target resource set corresponding to the second information, and determining, based on the target resource set, the target ON/OFF state of the first target TRP associated with the target resource set.

In some embodiments, the first signaling contains a first indicator field and/or a second indicator field;
where the first signaling meets one or more of the following:

the first indicator field being used to indicate the target ON/OFF state of the first target TRP;

the first indicator field being used to indicate the target resource set;

the first indicator field being used to indicate the target ON/OFF state of the multiple transmission resources;

the second indicator field being used to indicate the target ON/OFF state of the first target TRP;

the second indicator field being used to indicate the target ON/OFF state of the multiple transmission resources; or

the second indicator field being used to indicate the target resource set.

In some embodiments, the first signaling contains a bitmap and/or a codepoint.
where the first signaling meets one or more of the following:

the bitmap being used to indicate the target ON/OFF state of the first target TRP;

the bitmap being used to indicate the target resource set;

the codepoint being used to indicate the target ON/OFF state of the first target TRP;

the codepoint being used to indicate the target resource set;

the bitmap being used to indicate an activate state corresponding to each of one or more reference signal resource sets;

the codepoint being used to indicate an activate state corresponding to each of one or more reference signal resource sets;

the bitmap being used to indicate the target ON/OFF state of the multiple transmission resources; or

the codepoint being used to indicate the target ON/OFF state of the multiple transmission resources.

In some embodiments, the first signaling contains N reference signal resource sets, different reference signal resource sets correspond to ON/OFF states of different TRPs, and the N reference signal resource sets include the target resource set, where N is a positive integer greater than or equal to 1.

In some embodiments, the first information or the second information contains one or more of the following:

quasi co-location (QCL) information;

a transmission configuration indication (TCI) state; or

a signaling transmission location of the first signaling.

In some embodiments, the first determining module 620 is used for;

determining, based on the first signaling, a target monitoring configuration, where the target monitoring configuration includes an associated parameter configuration for monitoring a physical downlink control channel (PDCCH); and

determining, based on the target monitoring configuration, the target ON/OFF state of the first target TRP corresponding to the target monitoring configuration, and/or the target resource set corresponding to the target monitoring configuration.

In some embodiments, the target monitoring configuration contains: a given search space set group (SSSG) on a control resource set (CORESET) of the first target TRP; and/or
the target monitoring configuration contains: a given PDCCH skipping step value.

In some embodiments, the apparatus further includes:

a second transmitting module, used for transmitting hybrid automatic repeat request (HARQ) feedback information of the first signaling.

In some embodiments, the apparatus further includes:
a third determining module, used for determining, based on the first signaling, one or more of the following:

a target tracking reference signal (TRS) measurement resource set;

triggering a first target transmission/reception point (TRP) to initiate a tracking reference signal (TRS) measurement;

triggering a second target transmission/reception point (TRP) to initiate a tracking reference signal (TRS) measurement, where a carrier corresponding to the second target TRP supports a multi-transmission/reception point (MTRP) transmission;

triggering a third target transmission/reception point (TRP) to initiate a tracking reference signal (TRS) measurement, where a pre-configured aperiodic TRS on a carrier corresponding to the third target TRP is enabled;

triggering a transmission/reception point (TRP) on a second target carrier to initiate a tracking reference signal (TRS) measurement, where a pre-configured aperiodic TRS on the second target carrier is enabled; or

triggering a predefined event.

In some embodiments, the first signaling includes one or more of the following:
a group-common control physical downlink control channel (PDCCH), a non-scheduling physical downlink control channel (PDCCH), a scheduling physical downlink control channel (PDCCH), a media access control-control element (MAC-CE), or a specific sequence.

In some embodiments, the group-common control PDCCH includes one or more of the following:
a user equipment (UE)-specific PDCCH, a user equipment (UE) group-specific PDCCH, or a cell-specific PDCCH.

FIG. 7 is a second schematic structural diagram of an apparatus for resource determination according to an embodiment of the present application. As shown in FIG. 7, the apparatus 700 includes:
a first transmitting module 710, used for transmitting a first signaling, where the first signaling is used to indicate a target ON/OFF state of multiple transmission resources.

In some embodiments, the transmission resource is a frequency domain transmission resource, or a resource associated with a frequency domain transmission resource; and
the transmission resource is associated with a first target transmission/reception point (TRP).

In some embodiments, the frequency domain transmission resource is a carrier.

In some embodiments, the first signaling is used to indicate a target ON/OFF state of multiple transmission resources associated with the first target TRP.

In some embodiments, the first signaling is used to indicate switching an ON/OFF state of multiple transmission resources associated with a first target TRP to the target ON/OFF state in case that the first target TRP performs ON/OFF state switching.

In some embodiments, the first signaling is used to indicate switching an ON/OFF state of a first transmission resource set among the multiple transmission resources to the target ON/OFF state and an ON/OFF state of a second transmission resource set among the multiple transmission resources to a first ON/OFF state, in case that a first target transmission/reception point (TRP) performs ON/OFF state switching, where the first ON/OFF state is different from the target ON/OFF state.

In some embodiments, the apparatus further includes:

a dividing module, used for dividing the multiple transmission resources into multiple transmission resource groups;

the first signaling being used to indicate a target ON/OFF state corresponding to each of the multiple transmission resource groups.

In some embodiments, the first signaling is used to indicate the target resource set and/or the target ON/OFF state of the first target TRP includes:
where the target resource set includes a reference signal resource set associated with the target ON/OFF state of the first target TRP.

In some embodiments, the target resource set is associated with a target bandwidth part (BWP).

In some embodiments, the first signaling is used for one or more of the following:

directly indicating the target ON/OFF state of the first target TRP, a reference signal resource set associated with the target ON/OFF state of the first target TRP being the target resource set; or

directly indicating the target resource set, and an ON/OFF state of a TRP associated with the target resource set being the target ON/OFF state of the first target TRP; or

indirectly indicating the target ON/OFF state of the first target TRP through first information, the first information corresponding to the target ON/OFF state of the first target TRP, a reference signal resource set associated with the target ON/OFF state of the first target TRP being the target resource set; or

indirectly indicating the target resource set through second information, the second information corresponding to the target resource set, an ON/OFF state of a TRP associated with the target resource set being the target ON/OFF state of the first target TRP.

In some embodiments, the first signaling contains a first indicator field and/or a second indicator field; where the first signaling meets one or more of the following:

the first indicator field being used to indicate the target ON/OFF state of the first target TRP;

the first indicator field being used to indicate the target resource set;

the first indicator field being used to indicate the target ON/OFF state of the multiple transmission resources;

the second indicator field being used to indicate the target ON/OFF state of the first target TRP;

the second indicator field being used to indicate the target ON/OFF state of the multiple transmission resources; or

the second indicator field being used to indicate the target resource set.

In some embodiments, the first signaling contains a bitmap and/or a codepoint.
where the first signaling meets one or more of the following:

the bitmap being used to indicate the target ON/OFF state of the first target TRP;

the bitmap being used to indicate the target resource set;

the codepoint being used to indicate the target ON/OFF state of the first target TRP;

the codepoint being used to indicate the target resource set;

the bitmap being used to indicate an activate state corresponding to each of one or more reference signal resource sets;

the codepoint being used to indicate an activate state corresponding to each of one or more reference signal resource sets;

the bitmap being used to indicate the target ON/OFF state of the multiple transmission resources; or

the codepoint being used to indicate the target ON/-OFF state of the multiple transmission resources.

In some embodiments, the first signaling is used to indicate N reference signal resource sets, different reference signal resource sets correspond to ON/OFF states of different TRPs, and the N reference signal resource sets include the target resource set, where N is a positive integer greater than or equal to 1.

In some embodiments, the first information or the second information contains one or more of the following:

quasi co-location (QCL) information;

a transmission configuration indication (TCI) state; or

a signaling transmission location of the first signaling.

In some embodiments, the first signaling includes:
a target monitoring configuration corresponding to a target ON/OFF state of a first target transmission/reception point (TRP) and/or corresponding to a target resource set.

In some embodiments, the target monitoring configuration contains: a given search space set group (SSSG) on a control resource set (CORESET) of the first target TRP; and/or
the target monitoring configuration contains: a given physical downlink control channel (PDCCH) skipping step value.

In some embodiments, the apparatus further includes:

a retransmitting module, used for retransmitting the first signaling in case that no acknowledge (ACK) information is received at a first location,

where the first location includes a feedback location of hybrid automatic repeat request (HARQ) feedback information of the first signaling.

In some embodiments, the first signaling is used for further indicating one or more of the following:

a target tracking reference signal (TRS) measurement resource set;

triggering a first target transmission/reception point (TRP) to initiate a tracking reference signal (TRS) measurement;

triggering a second target transmission/reception point (TRP) to initiate a tracking reference signal (TRS) measurement, where a carrier corresponding to the second target TRP supports a multi-transmission/reception point (MTRP) transmission;

triggering a third target transmission/reception point (TRP) to initiate a tracking reference signal (TRS) measurement, where a pre-configured aperiodic TRS on a carrier corresponding to the third target TRP is enabled;

triggering a transmission/reception point (TRP) on a second target carrier to initiate a tracking reference signal (TRS) measurement, where a pre-configured aperiodic TRS on the second target carrier is enabled; or

triggering a predefined event.

In some embodiments, the first signaling includes one or more of the following:
a group-common control physical downlink control channel (PDCCH), a non-scheduling physical downlink control channel (PDCCH), a scheduling physical downlink control channel (PDCCH), a media access control-control element (MAC-CE), or a specific sequence.

In some embodiments, the group-common control PDCCH includes one or more of the following:
a user equipment (UE)-specific PDCCH, a user equipment (UE) group-specific PDCCH, or a cell-specific PDCCH.

It should be noted that, the division of units in the embodiments of the present application is schematic, and is only a logical function division, and there may be other division manners in actual implementation. In addition, the functional units in the various embodiments of the present application may be integrated into one processing unit, or each unit may exist alone physically, or two or more units may be integrated into one unit. The above-mentioned integrated unit may be implemented in the form of hardware or software functional unit.

If the integrated unit is implemented in the form of a software functional unit and sold or used as a separate product, it may be stored in a computer readable storage medium. Based on such understanding, the technical solutions of the present application in essence or a part of the technical solutions that contributes to the prior art, or all or part of the technical solutions, may be embodied in the form of a software product, which is stored in a storage medium, including several instructions to cause a computer device (which may be a personal computer, server, or network device, etc.) or a processor to perform all or part of the steps of the methods described in the respective embodiments of the present application. The storage medium described above includes various media that may store a program code such as a U disk, a mobile hard disk, a read-only memory (ROM), a random access memory (RAM), a magnetic disk, or a compact disk.

It should be noted here that the above-mentioned apparatus according to the embodiments of the present application may implement all the method steps implemented by the above-mentioned method embodiments, and may achieve the same effect. The same parts and beneficial effects as the same method embodiments will not be repeated here.

An embodiment of the present application further provides a non-transitory computer readable storage medium storing a computer program, where the computer program causes a processor to perform the methods provided in above embodiments.

The computer-readable storage medium may be any available medium or data storage device that may be accessed by the computer, including but not limited to, a magnetic storage (e.g., a floppy disk, a hard disk, a magnetic tape, a magneto-optical disk (MO), etc.), optical memory (such as CD, DVD, BD, HVD, etc.), and a semiconductor memory (such as ROM, EPROM, EEPROM, non-volatile memory (NAND FLASH), solid-state drive (SSD)), etc.

As appreciated by those skilled in the art, embodiments of the present application may be provided as a method, system, or computer program product. Accordingly, the present application may take the form of an entirely hardware embodiment, an entirely software embodiment, or an embodiment combining software and hardware aspects. Furthermore, the present application may take the form of a computer program product embodied on one or more computer-usable storage media having computer-usable program code embodied therein, including but not limited to disk storage, optical storage, and the like.

The present application is described with reference to flow charts and/or block diagrams of methods, apparatus (systems), and computer program products according to embodiments of the present application. It should be understood that each flow and/or block in the flow charts and/or block diagrams, and combinations thereof may be implemented by computer-executable instructions. These computer-executable instructions may be provided to processors of a general purpose computer, a special purpose computer, an embedded processor or other programmable data processing device to produce a machine and the instructions executed by the processor of the computer or other programmable data processing device form a means for performing the functions specified in one or more flows in a flowchart and/or one or more blocks of a block diagram.

These processor-executable instructions may also be stored in a processor-readable memory capable of directing a computer or other programmable data processing apparatus to operate in a particular manner, and the instructions stored in the processor-readable memory may result in a manufacture including instruction means, the instruction means may perform the functions specified in one or more flows of the flowchart and/or one or more blocks of the block diagram.

These processor-executable instructions may also be loaded onto a computer or other programmable data processing device to cause a series of operational steps to be performed on the computer or other programmable device to produce a computer-implemented process and instructions performed on the computer or other programmable devices provide steps for performing the functions specified in one or more flows of the flowchart and/or one or more blocks of the block diagram.

It is apparent to those skilled in the art that various modifications and variations may be made in the present application without departing from the scope of the present application. As such, provided that these modifications and variations of the present application fall within the scope of the claims of the present application and their equivalents, the present application is also intended to cover such modifications and variations.

**Claims**

1. A method for resource determination, performed by a first communication device, comprising:

   receiving a first signaling; and
   determining, based on the first signaling, a target ON/OFF state of multiple transmission resources.

2. The method of claim 1, wherein the transmission resource is a frequency domain transmission resource, or a resource associated with a frequency domain transmission resource; and
   the transmission resource is associated with a first target transmission/reception point (TRP).

3. The method of claim 2, wherein the frequency domain transmission resource is a carrier.

4. The method of any of claims 1 to 3, wherein determining, based on the first signaling, the target ON/OFF state of the multiple transmission resources comprises:
   determining, based on the first signaling, a target ON/OFF state of multiple transmission resources associated with a first target transmission/reception point (TRP).

5. The method of any of claims 1 to 3, wherein determining, based on the first signaling, the target ON/OFF state of the multiple transmission resources comprises:
   determining, based on the first signaling, to switch an ON/OFF state of multiple transmission resources associated with a first target transmission/reception point (TRP) to the target ON/OFF state in case that the first target TRP performs ON/OFF state switching.

6. The method of any of claims 1 to 3, wherein determining, based on the first signaling, the target ON/OFF state of the multiple transmission resources comprises:

determining, based on the first signaling, to switch an ON/OFF state of a first transmission resource set among the multiple transmission resources to the target ON/OFF state and an ON/OFF state of a second transmission resource set among the multiple transmission resources to a first ON/OFF state, in case that a first target transmission/reception point (TRP) performs ON/OFF state switching, wherein the first ON/OFF state is different from the target ON/OFF state.

7. The method of any of claims 1 to 3, wherein the multiple transmission resources are divided into multiple transmission resource groups; and

determining, based on the first signaling, the target ON/OFF state of the multiple transmission resources comprises:

determining, based on the first signaling, a target ON/OFF state corresponding to each of the multiple transmission resource groups.

8. The method of any of claims 1 to 3, further comprising:

determining, based on the first signaling, a target resource set and/or a target ON/OFF state of a first target transmission/reception point (TRP); wherein the target resource set comprises a reference signal resource set associated with a target ON/OFF state of a first target transmission/reception point (TRP).

9. The method of claim 8, wherein the target resource set is associated with a target bandwidth part (BWP); wherein the target BWP is used to indicate:

performing resource switching based on the target resource set on the target BWP in case that the target BWP is an active BWP; and performing resource switching based on the target resource set on the target BWP after switching to the target BWP in case that the target BWP is not an active BWP.

10. The method of claim 8, wherein determining, based on the first signaling, the target resource set and/or the target ON/OFF state of the first target TRP comprises one or more of the following:

in case that the first signaling directly indicates the target ON/OFF state of the first target TRP, determining a reference signal resource set associated with the target ON/OFF state of the first target TRP as the target resource set; or
in case that the first signaling directly indicates the target resource set, determining the target ON/OFF state of the first target TRP associated with the target resource set based on the target resource set; or
in case that the first signaling indirectly indicates the target ON/OFF state of the first target TRP through first information, determining, based on the first signaling, the target ON/OFF state of the first target TRP corresponding to the first information, and determining, based on a first target TRP indicated by the target ON/OFF state of the first target TRP, a reference signal resource set associated with the target ON/OFF state of the first target TRP as the target resource set; or
in case that the first signaling indirectly indicates the target resource set through second information, determining, based on the first signaling, the target resource set corresponding to the second information, and determining, based on the target resource set, the target ON/OFF state of the first target TRP associated with the target resource set.

11. The method of claim 10, wherein the first signaling contains a first indicator field and/or a second indicator field;

wherein the first signaling meets one or more of the following:

the first indicator field being used to indicate the target ON/OFF state of the first target TRP;
the first indicator field being used to indicate the target resource set;
the first indicator field being used to indicate the target ON/OFF state of the multiple transmission resources;
the second indicator field being used to indicate the target ON/OFF state of the first target TRP;
the second indicator field being used to indicate the target ON/OFF state of the multiple transmission resources; or
the second indicator field being used to indicate the target resource set.

12. The method of claim 10, wherein the first signaling contains a bitmap and/or a codepoint; wherein the first signaling meets one or more of the following:

the bitmap being used to indicate the target ON/OFF state of the first target TRP;
the bitmap being used to indicate the target resource set;

the codepoint being used to indicate the target ON/OFF state of the first target TRP;
the codepoint being used to indicate the target resource set;
the bitmap being used to indicate an activate state corresponding to each of one or more reference signal resource sets;
the codepoint being used to indicate an activate state corresponding to each of one or more reference signal resource sets;
the bitmap being used to indicate the target ON/OFF state of the multiple transmission resources; or
the codepoint being used to indicate the target ON/OFF state of the multiple transmission resources.

13. The method of claim 10, wherein the first signaling contains N reference signal resource sets, different reference signal resource sets correspond to ON/-OFF states of different TRPs, and the N reference signal resource sets comprise the target resource set, wherein N is a positive integer greater than or equal to 1.

14. The method of claim 10, wherein the first information or the second information contains one or more of the following:

quasi co-location (QCL) information;
a transmission configuration indication (TCI) state; or
a signaling transmission location of the first signaling.

15. The method of any of claims 1 to 3, wherein determining, based on the first signaling, the target resource set and/or the target ON/OFF state of the first target TRP comprises:

determining, based on the first signaling, a target monitoring configuration, wherein the target monitoring configuration comprises an associated parameter configuration for monitoring a physical downlink control channel (PDCCH); and
determining, based on the target monitoring configuration, a target ON/OFF state of a first target TRP corresponding to the target monitoring configuration, and/or a target resource set corresponding to the target monitoring configuration.

16. The method of claim 15, wherein the target monitoring configuration contains: a given search space set group (SSSG) on a control resource set (CORESET) of the first target TRP; and/or
the target monitoring configuration contains: a given PDCCH skipping step value.

17. The method of any of claims 1 to 3, further comprising:
transmitting hybrid automatic repeat request (HARQ) feedback information of the first signaling.

18. The method of any of claims 1 to 3, further comprising:
determining, based on the first signaling, one or more of the following:

a target tracking reference signal (TRS) measurement resource set;
triggering a first target transmission/reception point (TRP) to initiate a tracking reference signal (TRS) measurement;
triggering a second target transmission/reception point (TRP) to initiate a tracking reference signal (TRS) measurement, wherein a carrier corresponding to the second target TRP supports a multi-transmission/reception point (MTRP) transmission;
triggering a third target transmission/reception point (TRP) to initiate a tracking reference signal (TRS) measurement, wherein a pre-configured aperiodic TRS on a carrier corresponding to the third target TRP is enabled;
triggering a transmission/reception point (TRP) on a second target carrier to initiate a tracking reference signal (TRS) measurement, wherein a pre-configured aperiodic TRS on the second target carrier is enabled; or
triggering a predefined event.

19. The method of any of claims 1 to 3, wherein the first signaling comprises one or more of the following:
a group-common control physical downlink control channel (PDCCH), a non-scheduling physical downlink control channel (PDCCH), a scheduling physical downlink control channel (PDCCH), a media access control-control element (MAC-CE), or a specific sequence.

20. The method of claim 19, wherein the group-common control PDCCH comprises one or more of the following:
a user equipment (UE)-specific PDCCH, a user equipment (UE) group-specific PDCCH, or a cell-specific PDCCH.

21. A method for resource determination, performed by a second communication device, comprising:
transmitting a first signaling, wherein the first signaling is used to indicate a target ON/OFF state of multiple transmission resources.

22. The method of claim 21, wherein the transmission resource is a frequency domain transmission resource, or a resource associated with a frequency domain transmission resource; and

the transmission resource is associated with a first target transmission/reception point (TRP).

23. The method of claim 22, wherein the frequency domain transmission resource is a carrier.

24. The method of any of claims 21 to 23, wherein the first signaling is used to indicate a target ON/OFF state of multiple transmission resources associated with a first target transmission/reception point (TRP).

25. The method of any of claims 21 to 23, wherein the first signaling is used to indicate switching an ON/-OFF state of multiple transmission resources associated with a first target transmission/reception point (TRP) to the target ON/OFF state in case that the first target TRP performs ON/OFF state switching.

26. The method of any of claims 21 to 23, wherein the first signaling is used to indicate switching an ON/-OFF state of a first transmission resource set among the multiple transmission resources to the target ON/OFF state and an ON/OFF state of a second transmission resource set among the multiple transmission resources to a first ON/OFF state, in case that a first target transmission/reception point (TRP) performs ON/OFF state switching, wherein the first ON/OFF state is different from the target ON/OFF state.

27. The method of any of claims 21 to 23, further comprising:

dividing the multiple transmission resources into multiple transmission resource groups; and

the first signaling being used to indicate a target ON/OFF state corresponding to each of the multiple transmission resource groups.

28. The method of any of claims 21 to 23, wherein the first signaling is used to indicate a target resource set and/or a target ON/OFF state of a first target transmission/reception point (TRP); wherein the target resource set comprises a reference signal resource set associated with a target ON/OFF state of a first target transmission/reception point (TRP).

29. The method of claim 28, wherein the target resource set is associated with a target bandwidth part (BWP).

30. The method of claim 28, wherein the first signaling is used for one or more of the following:

directly indicating the target ON/OFF state of the first target TRP, wherein a reference signal resource set associated with the target ON/OFF state of the first target TRP being the target resource set; or

directly indicating the target resource set, wherein an ON/OFF state of a TRP associated with the target resource set being the target ON/OFF state of the first target TRP; or

indirectly indicating the target ON/OFF state of the first target TRP through first information, wherein the first information corresponding to the target ON/OFF state of the first target TRP, and a reference signal resource set associated with the target ON/OFF state of the first target TRP being the target resource set; or

indirectly indicating the target resource set through second information, wherein the second information corresponding to the target resource set, and an ON/OFF state of a TRP associated with the target resource set being the target ON/OFF state of the first target TRP.

31. The method of claim 29, wherein the first signaling contains a first indicator field and/or a second indicator field;

wherein the first signaling meets one or more of the following:

the first indicator field being used to indicate the target ON/OFF state of the first target TRP; the first indicator field being used to indicate the target resource set; the first indicator field being used to indicate the target ON/OFF state of the multiple transmission resources; the second indicator field being used to indicate the target ON/OFF state of the first target TRP; the second indicator field being used to indicate the target ON/OFF state of the multiple transmission resources; or the second indicator field being used to indicate the target resource set.

32. The method of claim 29, wherein the first signaling contains a bitmap and/or a codepoint;

wherein the first signaling meets one or more of the following:

the bitmap being used to indicate the target ON/OFF state of the first target TRP; the bitmap being used to indicate the target resource set; the codepoint being used to indicate the target ON/OFF state of the first target TRP; the codepoint being used to indicate the target resource set; the bitmap being used to indicate an activate state corresponding to each of one or more reference signal resource sets;

the codepoint being used to indicate an activate state corresponding to each of one or more reference signal resource sets;

the bitmap being used to indicate the target ON/OFF state of the multiple transmission resources; or

the codepoint being used to indicate the target ON/OFF state of the multiple transmission resources.

33. The method of claim 29, wherein the first signaling is used to indicate N reference signal resource sets, different reference signal resource sets correspond to ON/OFF states of different TRPs, and the N reference signal resource sets comprise the target resource set, wherein N is a positive integer greater than or equal to 1.

34. The method of claim 29, wherein the first information or the second information contains one or more of the following:

quasi co-location (QCL) information;
a transmission configuration indication (TCI) state; or
a signaling transmission location of the first signaling.

35. The method of any of claims 21 to 23, wherein the first signaling comprises:
a target monitoring configuration corresponding to a target ON/OFF state of a first target transmission/-reception point (TRP) and/or corresponding to a target resource set.

36. The method of claim 35, wherein the target monitoring configuration contains: a given search space set group (SSSG) on a control resource set (CORESET) of the first target TRP; and/or
the target monitoring configuration contains: a given PDCCH skipping step value.

37. The method of any of claims 21 to 23, further comprising:

retransmitting the first signaling in case that no acknowledge (ACK) information is received at a first location,
wherein the first location comprises a feedback location for hybrid automatic repeat request (HARQ) feedback information of the first signaling.

38. The method of any of claims 21 to 23, wherein the first signaling is used to further indicate one or more of the following:

a target tracking reference signal (TRS) measurement resource set;

triggering a first target transmission/reception point (TRP) to initiate a tracking reference signal (TRS) measurement;

triggering a second target transmission/reception point (TRP) to initiate a tracking reference signal (TRS) measurement, wherein a carrier corresponding to the second target TRP supports a multi-transmission/reception point (MTRP) transmission;

triggering a third target transmission/reception point (TRP) to initiate a tracking reference signal (TRS) measurement, wherein a pre-configured aperiodic TRS on a carrier corresponding to the third target TRP is enabled;

triggering a transmission/reception point (TRP) on a second target carrier to initiate a tracking reference signal (TRS) measurement, wherein a pre-configured aperiodic TRS on the second target carrier is enabled; or

triggering a predefined event.

39. The method of any of claims 21 to 23, wherein the first signaling comprises one or more of the following: a group-common control physical downlink control channel (PDCCH), a non-scheduling physical downlink control channel (PDCCH), a scheduling physical downlink control channel (PDCCH), a media access control-control element (MAC-CE), or a specific sequence.

40. The method of claim 39, wherein the group-common control PDCCH comprises one or more of the following:
a user equipment (UE)-specific PDCCH, a user equipment (UE) group-specific PDCCH, or a cell-specific PDCCH.

41. A first communication device, comprising a memory, a transceiver and a processor,
wherein the memory is used for storing a computer program, the transceiver is used for receiving and transmitting data under control of the processor, and the processor is used for reading the computer program in the memory and performing the following operations:

receiving a first signaling; and
determining, based on the first signaling, a target ON/OFF state of multiple transmission resources.

42. The first communication device of claim 41, wherein the transmission resource is a frequency domain transmission resource, or a resource associated with a frequency domain transmission resource; and
the transmission resource is associated with a first target transmission/reception point (TRP).

43. The first communication device of claim 42, wherein the frequency domain transmission resource is a carrier.

44. The first communication device of any of claims 41 to 43, wherein determining, based on the first signaling, the target ON/OFF state of the multiple transmission resources comprises:

   determining, based on the first signaling, a target ON/OFF state of multiple transmission resources associated with a first target transmission/reception point (TRP).

45. The first communication device of any of claims 41 to 43, wherein determining, based on the first signaling, the target ON/OFF state of the multiple transmission resources comprises:

   determining, based on the first signaling, to switch an ON/OFF state of multiple transmission resources associated with a first target transmission/reception point (TRP) to the target ON/OFF state in case that the first target TRP performs ON/OFF state switching.

46. The first communication device of any of claims 41 to 43, wherein determining, based on the first signaling, the target ON/OFF state of the multiple transmission resources comprises:

   determining, based on the first signaling, to switch an ON/OFF state of a first transmission resource set among the multiple transmission resources to the target ON/OFF state and an ON/OFF state of a second transmission resource set among the multiple transmission resources to a first ON/OFF state, in case that a first target transmission/reception point (TRP) performs ON/OFF state switching, wherein the first ON/OFF state is different from the target ON/OFF state.

47. The first communication device of any of claims 41 to 43, wherein the multiple transmission resources are divided into multiple transmission resource groups; and

   determining, based on the first signaling, the target ON/OFF state of the multiple transmission resources comprises:

   determining, based on the first signaling, a target ON/OFF state corresponding to each of the multiple transmission resource groups.

48. The first communication device of any of claims 41 to 43, wherein the operations further comprise:

   determining, based on the first signaling, a target resource set and/or a target ON/OFF state of a first target transmission/reception point (TRP);

wherein the target resource set comprises a reference signal resource set associated with a target ON/OFF state of a first target transmission/reception point (TRP).

49. The first communication device of claim 48, wherein the target resource set is associated with a target bandwidth part (BWP);
   wherein the target BWP is used to indicate:

   performing resource switching based on the target resource set on the target BWP in case that the target BWP is an active BWP; and
   performing resource switching based on the target resource set on the target BWP after switching to the target BWP in case that the target BWP is not an active BWP.

50. The first communication device of claim 48, wherein determining, based on the first signaling, the target resource set and/or the target ON/OFF state of the first target TRP comprises one or more of the following:

   in case that the first signaling directly indicates the target ON/OFF state of the first target TRP, determining a reference signal resource set associated with the target ON/OFF state of the first target TRP as the target resource set; or
   in case that the first signaling directly indicates the target resource set, determining the target ON/OFF state of the first target TRP associated with the target resource set based on the target resource set; or
   in case that the first signaling indirectly indicates the target ON/OFF state of the first target TRP through first information, determining, based on the first signaling, the target ON/OFF state of the first target TRP corresponding to the first information, and determining, based on a first target TRP indicated by the target ON/OFF state of the first target TRP, a reference signal resource set associated with the target ON/OFF state of the first target TRP as the target resource set; or
   in case that the first signaling indirectly indicates the target resource set through second information, determining, based on the first signaling, the target resource set corresponding to the second information, and determining, based on the target resource set, the target ON/OFF state of the first target TRP associated with the target resource set.

51. The first communication device of claim 50, wherein the first signaling contains a first indicator field and/or a second indicator field;
   wherein the first signaling meets one or more of the following:

the first indicator field being used to indicate the target ON/OFF state of the first target TRP;

the first indicator field being used to indicate the target resource set;

the first indicator field being used to indicate the target ON/OFF state of the multiple transmission resources;

the second indicator field being used to indicate the target ON/OFF state of the first target TRP;

the second indicator field being used to indicate the target ON/OFF state of the multiple transmission resources; or

the second indicator field being used to indicate the target resource set.

52. The first communication device of claim 50, wherein the first signaling contains a bitmap and/or a codepoint;

wherein the first signaling meets one or more of the following:

the bitmap being used to indicate the target ON/OFF state of the first target TRP;

the bitmap being used to indicate the target resource set;

the codepoint being used to indicate the target ON/OFF state of the first target TRP;

the codepoint being used to indicate the target resource set;

the bitmap being used to indicate an activate state corresponding to each of one or more reference signal resource sets;

the codepoint being used to indicate an activate state corresponding to each of one or more reference signal resource sets;

the bitmap being used to indicate the target ON/OFF state of the multiple transmission resources; or

the codepoint being used to indicate the target ON/OFF state of the multiple transmission resources.

53. The first communication device of claim 50, wherein the first signaling contains N reference signal resource sets, different reference signal resource sets correspond to ON/OFF states of different TRPs, and the N reference signal resource sets comprise the target resource set, wherein N is a positive integer greater than or equal to 1.

54. The first communication device of claim 50, wherein the first information or the second information contains one or more of the following:

quasi co-location (QCL) information;

a transmission configuration indication (TCI) state; or

a signaling transmission location of the first signaling.

55. The first communication device of any of claims 41 to 43, wherein determining, based on the first signaling, the target resource set and/or the target ON/OFF state of the first target TRP comprises:

determining, based on the first signaling, a target monitoring configuration, wherein the target monitoring configuration comprises an associated parameter configuration for monitoring a physical downlink control channel (PDCCH); and

determining, based on the target monitoring configuration, a target ON/OFF state of a first target TRP corresponding to the target monitoring configuration, and/or a target resource set corresponding to the target monitoring configuration.

56. The first communication device of claim 55, wherein the target monitoring configuration contains: a given search space set group (SSSG) on a control resource set (CORESET) of the first target TRP; and/or the target monitoring configuration contains: a given PDCCH skipping step value.

57. The first communication device of any of claims 41 to 43, wherein the operations further comprise: transmitting hybrid automatic repeat request (HARQ) feedback information of the first signaling.

58. The first communication device of any of claims 41 to 43, wherein the operations further comprise: determining, based on the first signaling, one or more of the following:

a target tracking reference signal (TRS) measurement resource set;

triggering a first target transmission/reception point (TRP) to initiate a tracking reference signal (TRS) measurement;

triggering a second target transmission/reception point (TRP) to initiate a tracking reference signal (TRS) measurement, wherein a carrier corresponding to the second target TRP supports a multi-transmission/reception point (MTRP) transmission;

triggering a third target transmission/reception point (TRP) to initiate a tracking reference signal (TRS) measurement, wherein a pre-configured aperiodic TRS on a carrier corresponding to the third target TRP is enabled;

triggering a transmission/reception point (TRP) on a second target carrier to initiate a tracking reference signal (TRS) measurement, wherein a pre-configured aperiodic TRS on the second target carrier is enabled; or

triggering a predefined event.

59. The first communication device of any of claims 41 to 43, wherein the first signaling comprises one or more of the following:
a group-common control physical downlink control channel (PDCCH), a non-scheduling physical downlink control channel (PDCCH), a scheduling physical downlink control channel (PDCCH), a media access control-control element (MAC-CE), or a specific sequence.

60. The first communication device of claim 59, wherein the group-common control PDCCH comprises one or more of the following:
a user equipment (UE)-specific PDCCH, a user equipment (UE) group-specific PDCCH, or a cell-specific PDCCH.

61. A second communication device, comprising a memory, a transceiver and a processor,
wherein the memory is used for storing a computer program, the transceiver is used for receiving and transmitting data under control of the processor, and the processor is used for reading the computer program in the memory and performing the following operations:
transmitting a first signaling, wherein the first signaling is used to indicate a target ON/OFF state of multiple transmission resources.

62. The second communication device of claim 61, wherein the transmission resource is a frequency domain transmission resource, or a resource associated with a frequency domain transmission resource; and
the transmission resource is associated with a first target transmission/reception point (TRP).

63. The second communication device of claim 62, wherein the frequency domain transmission resource is a carrier.

64. The second communication device of any of claims 61 to 63, wherein the first signaling is used to indicate a target ON/OFF state of multiple transmission resources associated with a first target transmission/reception point (TRP).

65. The second communication device of any of claims 61 to 63, wherein the first signaling is used to indicate switching an ON/OFF state of multiple transmission resources associated with a first target transmission/reception point (TRP) to the target ON/OFF state in case that the first target TRP performs ON/OFF state switching.

66. The second communication device of any of claims 61 to 23, wherein the first signaling is used to indicate switching an ON/OFF state of a first transmission resource set among the multiple transmission resources to the target ON/OFF state and an ON/OFF state of a second transmission resource set among the multiple transmission resources to a first ON/OFF state, in case that a first target transmission/reception point (TRP) performs ON/OFF state switching, wherein the first ON/OFF state is different from the target ON/OFF state.

67. The second communication device of any of claims 61 to 63, wherein the operations further comprise:

dividing the multiple transmission resources into multiple transmission resource groups; and
the first signaling being used to indicate a target ON/OFF state corresponding to each of the multiple transmission resource groups.

68. The second communication device of any of claims 61 to 63, wherein the first signaling is used to indicate a target resource set and/or a target ON/OFF state of a first target transmission/reception point (TRP);
wherein the target resource set comprises a reference signal resource set associated with a target ON/OFF state of a first target transmission/reception point (TRP).

69. The second communication device of claim 68, wherein the target resource set is associated with a target bandwidth part (BWP).

70. The second communication device of claim 68, wherein the first information is used for one or more of the following:

directly indicating the target ON/OFF state of the first target TRP, wherein a reference signal resource set associated with the target ON/OFF state of the first target TRP being the target resource set; or
directly indicating the target resource set, wherein an ON/OFF state of a TRP associated with the target resource set being the target ON/OFF state of the first target TRP; or
indirectly indicating the target ON/OFF state of the first target TRP through first information, wherein the first information corresponding to the target ON/OFF state of the first target TRP, and a reference signal resource set associated with the target ON/OFF state of the first target TRP being the target resource set; or
indirectly indicating the target resource set through second information, wherein the second information corresponding to the target resource set, and an ON/OFF state of a TRP associated with the target resource set being the target ON/OFF state of the first target TRP.

71. The second communication device of claim 69, wherein the first signaling contains a first indicator field and/or a second indicator field;
wherein the first signaling meets one or more of the following:

the first indicator field being used to indicate the target ON/OFF state of the first target TRP;
the first indicator field being used to indicate the target resource set;
the first indicator field being used to indicate the target ON/OFF state of the multiple transmission resources;
the second indicator field being used to indicate the target ON/OFF state of the first target TRP;
the second indicator field being used to indicate the target ON/OFF state of the multiple transmission resources; or
the second indicator field being used to indicate the target resource set.

72. The second communication device of claim 69, wherein the first signaling contains a bitmap and/or a codepoint;
wherein the first signaling meets one or more of the following:

the bitmap being used to indicate the target ON/OFF state of the first target TRP;
the bitmap being used to indicate the target resource set;
the codepoint being used to indicate the target ON/OFF state of the first target TRP;
the codepoint being used to indicate the target resource set;
the bitmap being used to indicate an activate state corresponding to each of one or more reference signal resource sets;
the codepoint being used to indicate an activate state corresponding to each of one or more reference signal resource sets;
the bitmap being used to indicate the target ON/OFF state of the multiple transmission resources; or
the codepoint being used to indicate the target ON/OFF state of the multiple transmission resources.

73. The second communication device of claim 69, wherein the first signaling is used to indicate N reference signal resource sets, different reference signal resource sets correspond to ON/OFF states of different TRPs, and the N reference signal resource sets comprise the target resource set, wherein N is a positive integer greater than or equal to 1.

74. The second communication device of claim 69, wherein the first information or the second information contains one or more of the following:

quasi co-location (QCL) information;
a transmission configuration indication (TCI) state; or
a signaling transmission location of the first signaling.

75. The second communication device of any of claims 61 to 63, wherein the first signaling comprise:
a target monitoring configuration corresponding to a target ON/OFF state of a first target transmission/reception point (TRP) and/or corresponding to a target resource set.

76. The second communication device of claim 75, wherein the target monitoring configuration contains: a given search space set group (SSSG) on a control resource set (CORESET) of the first target TRP; and/or
the target monitoring configuration contains: a given PDCCH skipping step value.

77. The second communication device of any of claims 61 to 63, wherein the operations further comprise:

retransmitting the first signaling in case that no acknowledge (ACK) information is received at a first location,
wherein the first location comprises a feedback location for hybrid automatic repeat request (HARQ) feedback information of the first signaling.

78. The second communication device of any of claims 61 to 63, wherein the first signaling is used to further indicate one or more of the following:

a target tracking reference signal (TRS) measurement resource set;
triggering a first target transmission/reception point (TRP) to initiate a tracking reference signal (TRS) measurement;
triggering a second target transmission/reception point (TRP) to initiate a tracking reference signal (TRS) measurement, wherein a carrier corresponding to the second target TRP supports a multi-transmission/reception point (MTRP) transmission;
triggering a third target transmission/reception point (TRP) to initiate a tracking reference signal (TRS) measurement, wherein a pre-configured aperiodic TRS on a carrier corresponding to the third target TRP is enabled;
triggering a transmission/reception point (TRP) on a second target carrier to initiate a tracking reference signal (TRS) measurement, wherein a pre-configured aperiodic TRS on the second target carrier is enabled; or triggering a predefined event.

79. The second communication device of any of claims 61 to 63, wherein the first signaling comprises one or more of the following:
a group-common control physical downlink control channel (PDCCH), a non-scheduling physical downlink control channel (PDCCH), a scheduling physical downlink control channel (PDCCH), a media access control-control element (MAC-CE), or a specific sequence.

80. The second communication device of claim 79, wherein the group-common control PDCCH comprises one or more of the following:
a user equipment (UE)-specific PDCCH, a user equipment (UE) group-specific PDCCH, or a cell-specific PDCCH.

81. An apparatus for resource determination, comprising:

a first receiving module, used for receiving a first signaling; and
a first determining module, used for determining, based on the first signaling, a target ON/OFF state of multiple transmission resources.

82. The apparatus of claim 81, wherein the transmission resource is a frequency domain transmission resource, or a resource associated with a frequency domain transmission resource; and
the transmission resource is associated with a first target transmission/reception point (TRP).

83. The apparatus of claim 82, wherein the frequency domain transmission resource is a carrier.

84. The apparatus of any of claims 81 to 83, wherein determining, based on the first signaling, the target ON/OFF state of the multiple transmission resources comprises:
determining, based on the first signaling, a target ON/OFF state of multiple transmission resources associated with a first target transmission/reception point (TRP).

85. The apparatus of any of claims 81 to 83, wherein determining, based on the first signaling, the target ON/OFF state of the multiple transmission resources comprises:
determining, based on the first signaling, to switch an ON/OFF state of multiple transmission resources associated with a first target transmission/reception point (TRP) to the target ON/OFF state in case that the first target TRP performs ON/OFF state switching.

86. The apparatus of any of claims 81 to 83, wherein determining, based on the first signaling, the target ON/OFF state of the multiple transmission resources comprises:
determining, based on the first signaling, to switch an ON/OFF state of a first transmission resource set among the multiple transmission resources to the target ON/OFF state and an ON/OFF state of a second transmission resource set among the multiple transmission resources to a first ON/OFF state, in case that a first target transmission/reception point (TRP) performs ON/OFF state switching, wherein the first ON/OFF state is different from the target ON/OFF state.

87. The apparatus of any of claims 81 to 83, wherein the multiple transmission resources are divided into multiple transmission resource groups; and
determining, based on the first signaling, the target ON/OFF state of the multiple transmission resources comprises:
determining, based on the first signaling, a target ON/OFF state corresponding to each of the multiple transmission resource groups.

88. The apparatus of any of claims 81 to 83, further comprising:

a second determining module, used for determining, based on the first signaling, a target resource set and/or a target ON/OFF state of a first target transmission/reception point (TRP); wherein the target resource set comprises a reference signal resource set associated with a target ON/OFF state of a first target transmission/reception point (TRP).

89. The apparatus of claim 88, wherein the target resource set is associated with a target bandwidth part (BWP);
wherein the target BWP is used to indicate:

performing resource switching based on the target resource set on the target BWP in case that the target BWP is an active BWP; and
performing resource switching based on the target resource set on the target BWP after switching to the target BWP in case that the target BWP is not an active BWP.

90. The apparatus of claim 88, wherein determining, based on the first signaling, the target resource set and/or the target ON/OFF state of the first target TRP comprises one or more of the following:

in case that the first signaling directly indicates the target ON/OFF state of the first target TRP, determining a reference signal resource set associated with the target ON/OFF state of the first target TRP as the target resource set; or in case that the first signaling directly indicates the target resource set, determining the target ON/OFF state of the first target TRP associated with the target resource set based on the target resource set; or in case that the first signaling indirectly indicates the target ON/OFF state of the first target TRP through first information, determining, based on the first signaling, the target ON/OFF state of the first target TRP corresponding to the first information, and determining, based on a first target TRP indicated by the target ON/OFF state of the first target TRP, a reference signal resource set associated with the target ON/OFF state of the first target TRP as the target resource set; or in case that the first signaling indirectly indicates the target resource set through second information, determining, based on the first signaling, the target resource set corresponding to the second information, and determining, based on the target resource set, the target ON/OFF state of the first target TRP associated with the target resource set.

91. The apparatus of claim 90, wherein the first signaling contains a first indicator field and/or a second indicator field; wherein the first signaling meets one or more of the following:

the first indicator field being used to indicate the target ON/OFF state of the first target TRP; the first indicator field being used to indicate the target resource set; the first indicator field being used to indicate the target ON/OFF state of the multiple transmission resources; the second indicator field being used to indicate the target ON/OFF state of the first target TRP; the second indicator field being used to indicate the target ON/OFF state of the multiple transmission resources; or the second indicator field being used to indicate the target resource set.

92. The apparatus of claim 90, wherein the first signaling contains a bitmap and/or a codepoint; wherein the first signaling meets one or more of the following:

the bitmap being used to indicate the target ON/OFF state of the first target TRP; the bitmap being used to indicate the target resource set; the codepoint being used to indicate the target ON/OFF state of the first target TRP; the codepoint being used to indicate the target resource set; the bitmap being used to indicate an activate state corresponding to each of one or more reference signal resource sets; the codepoint being used to indicate an activate state corresponding to each of one or more reference signal resource sets; the bitmap being used to indicate the target ON/OFF state of the multiple transmission resources; or the codepoint being used to indicate the target ON/OFF state of the multiple transmission resources.

93. The apparatus of claim 90, wherein the first signaling contains N reference signal resource sets, different reference signal resource sets correspond to ON/OFF states of different TRPs, and the N reference signal resource sets comprise the target resource set, wherein N is a positive integer greater than or equal to 1.

94. The apparatus of claim 90, wherein the first information or the second information contains one or more of the following:

quasi co-location (QCL) information; a transmission configuration indication (TCI) state; or a signaling transmission location of the first signaling.

95. The apparatus of any of claims 91 to 93, wherein determining, based on the first signaling, the target resource set and/or the target ON/OFF state of the first target TRP comprises:

determining, based on the first signaling, a target monitoring configuration, wherein the target monitoring configuration comprises an associated parameter configuration for monitoring a physical downlink control channel (PDCCH); and determining, based on the target monitoring configuration, a target ON/OFF state of a first target TRP corresponding to the target monitoring configuration, and/or a target resource set corresponding to the target monitoring configuration.

96. The apparatus of claim 95, wherein the target monitoring configuration contains: a given search space set group (SSSG) on a control resource set (CORESET) of the first target TRP; and/or

the target monitoring configuration contains: a given PDCCH skipping step value.

**97.** The apparatus of any of claims 91 to 93, further comprising:
a second transmitting module, used for transmitting hybrid automatic repeat request (HARQ) feedback information of the first signaling.

**98.** The apparatus of any of claims 91 to 93, further comprising:
a third determining module, used for determining, based on the first signaling, one or more of the following:

a target tracking reference signal (TRS) measurement resource set;
triggering a first target transmission/reception point (TRP) to initiate a tracking reference signal (TRS) measurement;
triggering a second target transmission/reception point (TRP) to initiate a tracking reference signal (TRS) measurement, wherein a carrier corresponding to the second target TRP supports a multi-transmission/reception point (MTRP) transmission;
triggering a third target transmission/reception point (TRP) to initiate a tracking reference signal (TRS) measurement, wherein a pre-configured aperiodic TRS on a carrier corresponding to the third target TRP is enabled;
triggering a transmission/reception point (TRP) on a second target carrier to initiate a tracking reference signal (TRS) measurement, wherein a pre-configured aperiodic TRS on the second target carrier is enabled; or
triggering a predefined event.

**99.** The apparatus of any of claims 91 to 93, wherein the first signaling comprises one or more of the following:
a group-common control physical downlink control channel (PDCCH), a non-scheduling physical downlink control channel (PDCCH), a scheduling physical downlink control channel (PDCCH), a media access control-control element (MAC-CE), or a specific sequence.

**100.**
The apparatus of claim 99, wherein the group-common control PDCCH comprises one or more of the following:
a user equipment (UE)-specific PDCCH, a user equipment (UE) group-specific PDCCH, or a cell-specific PDCCH.

**101.**
An apparatus for resource determination, comprising:
a first transmitting module, used for transmitting a first signaling, wherein the first signaling is used to indicate a target ON/OFF state of multiple transmission resources.

**102.**
The apparatus of claim 101, wherein the transmission resource is a frequency domain transmission resource, or a resource associated with a frequency domain transmission resource; and
the transmission resource is associated with a first target transmission/reception point (TRP).

**103.**
The apparatus of claim 102, wherein the frequency domain transmission resource is a carrier.

**104.**
The apparatus of any of claims 101 to 103, wherein the first signaling is used to indicate a target ON/OFF state of multiple transmission resources associated with a first target transmission/reception point (TRP).

**105.**
The apparatus of any of claims 101 to 103, wherein the first signaling is used to indicate switching an ON/OFF state of multiple transmission resources associated with a first target transmission/reception point (TRP) to the target ON/OFF state in case that the first target TRP performs ON/OFF state switching.

**106.**
The apparatus of any of claims 101 to 103, wherein the first signaling is used to indicate switching an ON/OFF state of a first transmission resource set among the multiple transmission resources to the target ON/OFF state and an ON/OFF state of a second transmission resource set among the multiple transmission resources to a first ON/OFF state, in case that a first target transmission/reception point (TRP) performs ON/OFF state switching, wherein the first ON/OFF state is different from the target ON/OFF state.

**107.**
The apparatus of any of claims 101 to 103, further comprising:

a dividing module, used for dividing the multiple transmission resources into multiple transmission resource groups; and
the first signaling being used to indicate a target ON/OFF state corresponding to each of the multiple transmission resource groups.

**108.**
The apparatus of any of claims 101 to 103, wherein the first signaling is used to indicate a target resource set and/or a target ON/OFF state of a first target transmission/reception point (TRP);
wherein the target resource set comprises a reference signal resource set associated with a target ON/OFF state of a first target transmission/reception point (TRP).

**109.**
The apparatus of claim 108, wherein the target resource set is associated with a target bandwidth part (BWP).

**110.**
The apparatus of claim 108, wherein the first signaling is used for one or more of the following:

> directly indicating the target ON/OFF state of the first target TRP, wherein a reference signal resource set associated with the target ON/OFF state of the first target TRP being the target resource set; or
> directly indicating the target resource set, wherein an ON/OFF state of a TRP associated with the target resource set being the target ON/OFF state of the first target TRP; or
> indirectly indicating the target ON/OFF state of the first target TRP through first information, wherein the first information corresponding to the target ON/OFF state of the first target TRP, and a reference signal resource set associated with the target ON/OFF state of the first target TRP being the target resource set; or
> indirectly indicating the target resource set through second information, wherein the second information corresponding to the target resource set, and an ON/OFF state of a TRP associated with the target resource set being the target ON/OFF state of the first target TRP.

**111.** The apparatus of claim 109, wherein the first signaling contains a first indicator field and/or a second indicator field;
wherein the first signaling meets one or more of the following:

> the first indicator field being used to indicate the target ON/OFF state of the first target TRP;
> the first indicator field being used to indicate the target resource set;
> the first indicator field being used to indicate the target ON/OFF state of the multiple transmission resources;
> the second indicator field being used to indicate the target ON/OFF state of the first target TRP;
> the second indicator field being used to indicate the target ON/OFF state of the multiple transmission resources; or
> the second indicator field being used to indicate the target resource set.

**112.**
The apparatus of claim 109, wherein the first signaling contains a bitmap and/or a codepoint;
wherein the first signaling meets one or more of the following:

> the bitmap being used to indicate the target ON/OFF state of the first target TRP;
> the bitmap being used to indicate the target resource set;
> the codepoint being used to indicate the target ON/OFF state of the first target TRP;
> the codepoint being used to indicate the target resource set;
> the bitmap being used to indicate an activate state corresponding to each of one or more reference signal resource sets;
> the codepoint being used to indicate an activate state corresponding to each of one or more reference signal resource sets;
> the bitmap being used to indicate the target ON/OFF state of the multiple transmission resources; or
> the codepoint being used to indicate the target ON/OFF state of the multiple transmission resources.

**113.**
The apparatus of claim 109, wherein the first signaling is used to indicate N reference signal resource sets, different reference signal resource sets correspond to ON/OFF states of different TRPs, and the N reference signal resource sets comprise the target resource set, wherein N is a positive integer greater than or equal to 1.

**114.**
The apparatus of claim 109, wherein the first information or the second information contains one or more of the following:

> quasi co-location (QCL) information;
> a transmission configuration indication (TCI) state; or
> a signaling transmission location of the first signaling.

**115.**
The apparatus of any of claims 101 to 103, wherein the first signaling comprises:
a target monitoring configuration corresponding to a target ON/OFF state of a first target transmission/reception point (TRP) and/or corresponding to a target resource set.

**116.**
The apparatus of claim 115, wherein the target monitoring configuration contains: a given search space set group (SSSG) on a control resource set (CORESET) of the first target TRP; and/or
the target monitoring configuration contains: a given PDCCH skipping step value.

**117.**

The apparatus of any of claims 101 to 103, further comprising:

a retransmitting module, used for retransmitting the first signaling in case that no acknowledge (ACK) information is received at a first location, wherein the first location comprises a feedback location for hybrid automatic repeat request (HARQ) feedback information of the first signaling.

**118.**

The apparatus of any of claims 101 to 103, wherein the first signaling is used to further indicate one or more of the following:

a target tracking reference signal (TRS) measurement resource set;

triggering a first target transmission/reception point (TRP) to initiate a tracking reference signal (TRS) measurement;

triggering a second target transmission/reception point (TRP) to initiate a tracking reference signal (TRS) measurement, wherein a carrier corresponding to the second target TRP supports a multi-transmission/reception point (MTRP) transmission;

triggering a third target transmission/reception point (TRP) to initiate a tracking reference signal (TRS) measurement, wherein a pre-configured aperiodic TRS on a carrier corresponding to the third target TRP is enabled;

triggering a transmission/reception point (TRP) on a second target carrier to initiate a tracking reference signal (TRS) measurement, wherein a pre-configured aperiodic TRS on the second target carrier is enabled; or

triggering a predefined event.

**119.**

The apparatus of any of claims 101 to 103, wherein the first signaling comprises one or more of the following: a group-common control physical downlink control channel (PDCCH), a non-scheduling physical downlink control channel (PDCCH), a scheduling physical downlink control channel (PDCCH), a media access control-control element (MAC-CE), or a specific sequence.

**120.**

The apparatus of claim 119, wherein the group-common control PDCCH comprises one or more of the following: a user equipment (UE)-specific PDCCH, a user equipment (UE) group-specific PDCCH, or a cell-specific PDCCH.

**121.**

A processor-readable storage medium, wherein the processor-readable storage medium stores a computer program, and the computer program causes a processor to perform the method for resource determination of any of claims 1 to 40.

FIG. 1

| Receiving a first signaling | 200 |
|---|---|

| Determining a target ON/OFF state of multiple transmission resources based on the first signaling | 210 |

FIG. 2

| Transmitting a first signaling, where the first signaling is used to indicate a target ON/ OFF state of multiple transmission resources | 300 |

FIG. 3

410

Processor

420

Memory

Bus interface

400

Transceiver

FIG. 4

510

Processor

520

Memory

Bus interface

500

Transceiver

FIG. 5

610

First receiving module

620

First determining module

FIG. 6

710

First transmitting module

FIG. 7

## INTERNATIONAL SEARCH REPORT

| International application No. |
|---|
| **PCT/CN2023/119390** |

| A. | CLASSIFICATION OF SUBJECT MATTER |
|---|---|
| | H04W72/04(2023.01)i;  H04W16/28(2009.01)i |

According to International Patent Classification (IPC) or to both national classification and IPC

| B. | FIELDS SEARCHED |
|---|---|

Minimum documentation searched (classification system followed by classification symbols)

    IPC:H04W,H04L,H04B

Documentation searched other than minimum documentation to the extent that such documents are included in the fields searched

Electronic data base consulted during the international search (name of data base and, where practicable, search terms used)

    CNTXT, DWPI, EXTCTC, ENTXT, 3GPP: 开关, 切换, 信令, 激活, MIMO, activate, bitmap, BWP, QCL, HARQ, codepoint, group, switch, TCI, TRP, TRS, skipping step.

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 114208247 A (NTT DOCOMO, INC.) 18 March 2022 (2022-03-18) <br> description, paragraphs [0092]-[0131] | 1-121 |
| X | EP 4017066 A1 (NTT DOCOMO, INC.) 22 June 2022 (2022-06-22) <br> description, paragraphs [0037]-[0065] | 1-121 |
| A | CN 114126057 A (VIVO MOBILE COMMUNICATION CO., LTD.) 01 March 2022 (2022-03-01) <br> entire document | 1-121 |
| A | WO 2021138882 A1 (QUALCOMM INC. et al.) 15 July 2021 (2021-07-15) <br> entire document | 1-121 |
| A | NOKIA SIEMENS NETWORKS. "Interaction of MIMO and CLTD_Enabled/CLTD_Active" <br> *3GPP TSG-RAN WG1 Meeting #69, R1-122589,* 25 May 2012 (2012-05-25), <br> entire document | 1-121 |

☐ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **21 November 2023** | **28 November 2023** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/119390**

| Patent document cited in search report | | | Publication date (day/month/year) | Patent family member(s) | | | Publication date (day/month/year) |
|---|---|---|---|---|---|---|---|
| CN | 114208247 | A | 18 March 2022 | WO | 2021029052 | A1 | 18 February 2021 |
| | | | | EP | 4017063 | A1 | 22 June 2022 |
| | | | | US | 2022330230 | A1 | 13 October 2022 |
| | | | | JP | 7303881 | B1 | 05 July 2023 |
| | | | | BR | 112022002180 | A2 | 03 May 2022 |
| EP | 4017066 | A1 | 22 June 2022 | CA | 3145417 | A1 | 18 February 2021 |
| | | | | US | 2022322334 | A1 | 06 October 2022 |
| | | | | WO | 2021029050 | A1 | 18 February 2021 |
| | | | | JP | 7301978 | B2 | 03 July 2023 |
| | | | | CN | 114208248 | A | 18 March 2022 |
| CN | 114126057 | A | 01 March 2022 | WO | 2022042689 | A1 | 03 March 2022 |
| | | | | US | 2023156488 | A1 | 18 May 2023 |
| WO | 2021138882 | A1 | 15 July 2021 | US | 2023007681 | A1 | 05 January 2023 |
| | | | | EP | 4088527 | A1 | 16 November 2022 |
| | | | | CN | 114930941 | A | 19 August 2022 |
| | | | | IN | 202227033088 | A | 02 September 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211194424